(19) Europäisches Patentamt
European Patent Office
Office européen des brevets

(11) EP 4 520 794 A1

(12) EUROPÄISCHE PATENTANMELDUNG

(43) Veröffentlichungstag:
**12.03.2025 Patentblatt 2025/11**

(21) Anmeldenummer: **24196093.9**

(22) Anmeldetag: **23.08.2024**

(51) Internationale Patentklassifikation (IPC):
***C09B 67/04*** (2006.01) ***C09B 67/48*** (2006.01)
***C09B 67/22*** (2006.01) ***C09B 67/40*** (2006.01)
***C09B 67/42*** (2006.01) ***C09B 67/54*** (2006.01)
***C09D 11/322*** (2014.01) ***C09B 45/22*** (2006.01)

(52) Gemeinsame Patentklassifikation (CPC):
**C09B 67/0051; C09B 45/22; C09B 67/0002**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **07.09.2023 EP 23195907**

(71) Anmelder: **LANXESS Deutschland GmbH
50569 Köln (DE)**

(72) Erfinder:
- **BORST, Hans-Ulrich
50189 Elsdorf (DE)**
- **LINKE, Frank
51069 Köln (DE)**
- **ENDERT, Sabine
50259 Pulheim (DE)**
- **MAY, Lars
40764 Langenfeld (DE)**

(54) **PIGMENTPRÄPARATIONEN**

(57) Die vorliegende Erfindung betrifft neue Pigmentpräparationen auf Basis von Metallazopigmenten und aliphatischen $C_{10-22}$-Monocarbonsäuren, Verfahren zu deren Herstellung und deren Verwendung als Gelbpigment zur Einfärbung von Kunststoffen bzw. die Verwendung aliphatischer $C_{10-22}$-Monocarbonsäuren zur Verbesserung der Filtrationseigenschaften von Pigmentpräparationen bei gleichzeitig verbesserten Farbstärken.

EP 4 520 794 A1

## Beschreibung

Die vorliegende Erfindung betrifft neue Pigmentpräparationen auf Basis von Metallazopigmenten und aliphatischen $C_{10-22}$-Monocarbonsäuren, Verfahren zu deren Herstellung und deren Verwendung als Gelbpigment zur Einfärbung von Kunststoffen bzw. die Verwendung aliphatischer $C_{10-22}$-Monocarbonsäuren zur Verbesserung der Filtrationseigenschaften von Pigmentpräparationen bei gleichzeitig verbesserten Farbstärken.

Metallkomplexe aus Azobarbitursäure mit Nickelsalzen und deren Verwendung als gelbe Pigmente sind vielfach in der Literatur beschrieben worden, z. B. W. Herbst, K. Hunger, Industrial Organic Pigments, 3. Auflage 2004, S. 390-397**.** Es ist weiterhin bekannt, dass diese Produkte weiter umgesetzt werden können, z. B. mit Melamin oder Melaminderivaten, um die anwendungstechnischen Eigenschaften dieser Pigmente insbesondere bei der Einfärbung von Kunststoffen, Lacken und als Farbfilter für LCDs (Liquid Crystal Display), zu verbessern. In der Literatur ist auch beschrieben, dass zur Anpassung koloristischer Eigenschaften diese Metallazokomplexe neben Nickelsalzen wenigstens ein weiteres Salz unterschiedlicher Metalle enthalten können. EP-A 1 591 489 offenbart Metallkomplexe von Azoverbindungen basierend auf Alkalimetallen, Erdalkalimetallen, Lanthanoiden, Aluminium, Scandium, Titan, Vanadium, Chrom, Mangan, Kobalt, Kupfer, Nickel und Zink. Die Pigmente gemäß EP-A 1 591 489 weisen im Vergleich zu reinen Nickel-Azobarbitursäurekomplexen einen unterschiedlichen Farbort auf. Der Farbort beschreibt die Lage einer gemessenen oder gewählten Farbe in einem Farbraum und wird zumeist durch Koordinaten definiert, vorzugsweise mit den Koordinaten L*, a* und b* im CIELAB-Farbraum. Die Menge aller Farborte eines Farbraums wird als Farbumfang oder Gamut bezeichnet; siehe: **https://de.wikipedia.org/wiki/Farbraum.** Zwar finden sich in EP-A 1 591 489 Aussagen zur Binder Farbstärke, die gemäß der Bayer Farben Revue, Sonderheft 312 D, Farbmessung 1986 bestimmt wurden, jedoch keine Aussagen zur Filtrierbarkeit bzw. zur Bestimmung des Druckfilterwerts FPV nach **DIN EN ISO 23900-5:2019-01.**

Weiterhin ist aus der Literatur bekannt die Oberfläche von Pigmenten mit Zusatzstoffen zu behandeln. Durch eine solche Oberflächenbelegung sollen beispielsweise die Dispergiereigenschaften von Pigmenten verbessert werden. Allerdings ist hierbei mit steigender Belegung der Pigmentoberfläche stets auch ein Verlust an Farbstärke verbunden. Eine derartige Oberflächenbehandlung von Azopigmenten ist z. B bekannt aus "W. Herbst, K. Hunger, Industrial Organic Pigments (Production, Properties, Applications), 3rd Completely Revised Edition (2004), Wiley-VCH-Verlag , S. 202-203**.**

Aus EP-A 3 072 932 und EP-A 3 222 680 sind Pigmente auf Basis von Metallazobarbitursäure und Melamin bekannt, die Kupfer- und Nickelionen und gegebenenfalls weitere Metallionen enthalten. Diese Pigmente zeichnen sich durch verbesserte Dispergiereigenschaften bei gleichzeitiger Erhöhung der Farbstärke aus. In EP-A 3 072 932 und EP-A 3 222 680 finden sich jedoch keine Aussagen zur Filtrierbarkeit bzw. zur Bestimmung des Druckfilterwerts FPV nach **DIN EN ISO 23900-5:2019-01.**

Aus EP-A 3 981 840 sind Pigmente auf Basis von Metallazobarbitursäure und Melamin bekannt, die Kupfer- und Nickelionen und gegebenenfalls weitere Metallionen enthalten und eine Oberflächenbelegung mit speziellen Fettsäurederivaten aufweisen. Diese Produkte weisen verbesserte Hitzestabilitäten und angeblich hohe Farbstärken auf, wobei genauere Angaben zu Letzterem fehlen.

EP-A 1 612 246 offenbart unter Anderem fünf Nickelazobarbiturat-Melamin-Pigmente mit verbesserter Dispergierbarkeit. Weder finden sich in EP-A 1 612 246 Aussagen zur relativen Farbstärke, noch zur Filtrierbarkeit bzw. der Bestimmung des Druckfilterwerts FPV nach **DIN EN ISO 23900-5:2019-01.**

Die aus dem Stand der Technik bekannten Metallazopigmente sind hinsichtlich ihrer anwendungstechnischen Merkmale unzureichend und es besteht deshalb ein Bedarf an verbesserten Metallazopigmenten, insbesondere im Hinblick auf deren Filtrationseigenschaften unter zumindest einer Beibehaltung der Farbstärke.

Es wurde nun überraschend gefunden, dass Pigmentpräparationen auf Basis wenigstens zweier Zink und Nickel basierter Metallazoverbindungen in Kombination mit wenigstens einer aliphatischen $C_{10-22}$-Monocarbonsäure verbesserte Filtrationseigenschaften bei gleichzeitig verbesserten Farbstärken aufweisen, wenn 100 bis 250 g der aliphatischen $C_{10-22}$-Monocarbonsäure auf 1 Mol aller im Metallazopigment enthaltenen Metallazoverbindungen eingesetzt werden.

Gegenstand der vorliegenden Erfindung sind **Pigmentpräparationen** aus

i) einem Metallazopigment A) enthaltend

a) wenigstens zwei Metallazoverbindungen der Formel (I) die sich zumindest im Metallion Me unterscheiden, oder deren tautomere Formen,

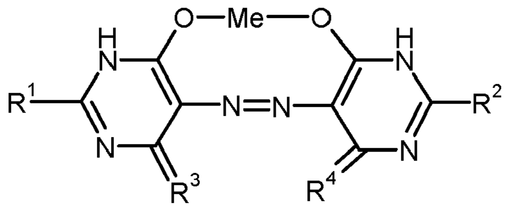

(I)

worin

$R^1$ und $R^2$ unabhängig voneinander für OH, $NH_2$ oder $NHR^5$ stehen,

$R^3$ und $R^4$ unabhängig voneinander für O oder $NR^5$ stehen,

$R^5$ für Wasserstoff oder Alkyl, vorzugsweise für $C_1$-$C_4$-Alkyl, steht, und

Me in der ersten Metallazoverbindung für Metallionen $Me^1$ und in der zweiten Metallazoverbindung für ein Metallion $Me^2$ steht,

wobei

$Me^1$ für $Zn^{2+}$ und $Ni^{2+}$ steht und das Molverhältnis von Zn- zu Ni- Metallionen 97 : 3 bis 3 : 97 beträgt, und

$Me^2$ für $Al^{3+}_{2/3}$, $Fe^{2+}$, $Fe^{3+}_{2/3}$, $Co^{2+}$, $Co^{3+}_{2/3}$, $La^{3+}_{2/3}$, $Ce^{3+}_{2/3}$, $Pr^{3+}_{2/3}$-, $Nd^{2+}$, $Nd^{3+}_{2/3}$, $Sm^{2+}$, $Sm^{3+}_{2/3}$, $Eu^{2+}$, $Eu^{3+}_{2/3}$, $Gd^{3+}_{2/3}$, $Tb3^{+}_{2/3}$, $Dy^{3+}_{2/3}$, $Ho^{3+}_{2/3}$, $Yb^{2+}$, $Yb^{3+}_{2/3}$, $Er^{3+}_{2/3}$, $Tm^{3+}_{2/3}$, $Mg^{2+}$, $Ca^{2+}$, $Sr^{2+}$, $Mn^{2+}$, $Y^{3+}_{2/3}$, $Sc^{3+}_{2/3}$, $Ti^{2+}$, $Ti^{3+}_{2/3}$, $Nb^{3+}_{2/3}$, $Mo^{2+}$, $Mo^{3+}_{2/3}$, $V^{2+}$, $V^{3+}_{2/3}$, $Zr^{2+}$, $Zr^{3+}_{2/3}$, $Cd^{2+}$, $Cr^{3+}_{2/3}$, $Pb^{2+}$ oder $Ba^{2+}$-steht,

mit der Maßgabe, dass die Menge an Metallionen $Me^1$ insgesamt 97 bis 100 Mol- % beträgt und die Menge an Metallionen ausgewählt aus der Reihe $Me^2$ insgesamt 0 bis 3 Mol-% beträgt, jeweils bezogen auf ein Mol aller Verbindungen der Formel (I), und

b) wenigstens eine Verbindung der Formel (II)

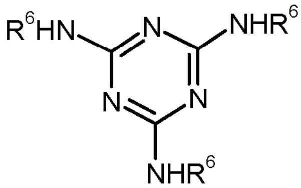

(II)

worin

$R^6$ jeweils unabhängig voneinander für Wasserstoff oder Alkyl, vorzugsweise für $C_1$-$C_4$-Alkyl, steht, das gegebenenfalls ein- oder mehrfach durch OH substituiert ist,
oder ein Reaktionsprodukt aus (I) mit (II), vorzugsweise ein Reaktionsprodukt aus (I) mit Melamin,
und

ii) 100 bis 250 g wenigstens einer aliphatischen $C_{10-22}$-Monocarbonsäure B) auf 1 Mol aller im Metallazopigment A) enthaltenen Metallazoverbindungen (I).

Die Erfindung betrifft aber auch die **Verwendung** wenigstens einer aliphatischen $C_{10-22}$-Monocarbonsäure B) zur Verbesserung gleichzeitig des mit dem Druckfiltertest nach **DIN EN ISO 23900-5:2019-01** zu bestimmenden Druckfilterwerts FPV und der nach **DIN 55986** zu bestimmenden Farbstärke von Pigmentpräparationen enthaltend ein Metallazopigment A) aus

a) wenigstens zwei Metallazoverbindungen der Formel (I) die sich zumindest im Metallion Me unterscheiden, oder deren tautomere Formen,

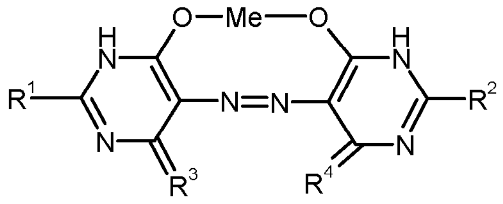

(I)

worin

$R^1$ und $R^2$ unabhängig voneinander für OH, $NH_2$ oder $NHR^5$ stehen,

$R^3$ und $R^4$ unabhängig voneinander für O oder $NR^5$ stehen,

$R^5$ für Wasserstoff oder Alkyl, vorzugsweise für $C_1$-$C_4$-Alkyl, steht, und

Me in der ersten Metallazoverbindung für Metallionen $Me^1$ und in der zweiten Metallazoverbindung für ein Metallion $Me^2$ steht,

wobei

$Me^1$ für $Zn^{2+}$ und $Ni^{2+}$ steht und das Molverhältnis von Zn- zu Ni- Metallionen 97 : 3 bis 3 : 97 beträgt, und

$Me^2$ für $Al^{3+}{}_{2/3}$, $Fe^{2+}$, $Fe^{3+}{}_{2/3}$, $Co^{2+}$, $Co^{3+}{}_{2/3}$, $La^{3+}{}_{2/3}$, $Ce^{3+}{}_{2/3}$, $Pr^{3+}{}_{2/3}$-, $Nd^{2+}$, $Nd^{3+}{}_{2/3}$, $Sm^{2+}$, $Sm^{3+}{}_{2/3}$, $Eu^{2+}$, $Eu^{3+}{}_{2/3}$, $Gd^{3+}{}_{2/3}$, $Tb3^{+}{}_{2/3}$, $Dy^{3+}{}_{2/3}$, $Ho^{3+}{}_{2/3}$, $Yb^{2+}$, $Yb^{3+}{}_{2/3}$, $Er^{3+}{}_{2/3}$, $Tm^{3+}{}_{2/3}$, $Mg^{2+}$, $Ca^{2+}$, $Sr^{2+}$, $Mn^{2+}$, $Y^{3+}{}_{2/3}$, $Sc^{3+}{}_{2/3}$, $Ti^{2+}$, $Ti^{3+}{}_{2/3}$, $Nb^{3+}{}_{2/3}$, $Mo^{2+}$, $Mo^{3+}{}_{2/3}$, $V^{2+}$, $V^{3+}{}_{2/3}$, $Zr^{2+}$, $Zr^{3+}{}_{2/3}$, $Cd^{2+}$, $Cr^{3+}{}_{2/3}$, $Pb^{2+}$ oder $Ba^{2+}$-steht,

mit der Maßgabe, dass die Menge an Metallionen $Me^1$ insgesamt 97 bis 100 Mol-% beträgt und die Menge an Metallionen ausgewählt aus der Reihe $Me^2$ insgesamt 0 bis 3 Mol-% beträgt, jeweils bezogen auf ein Mol aller Verbindungen der Formel (I), und

b) wenigstens einer Verbindung der Formel (II)

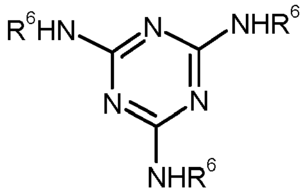

(II)

worin

$R^6$ jeweils unabhängig voneinander für Wasserstoff oder Alkyl, vorzugsweise für $C_1$-$C_4$-Alkyl, steht, das gegebenenfalls ein- oder mehrfach durch OH substituiert ist,
oder ein Reaktionsprodukt aus (I) mit (II), vorzugsweise ein Reaktionsprodukt aus Formel (I) mit Melamin,

mit der Maßgabe, dass auf 1 Mol aller im Metallazopigment A) enthaltenen Metallazoverbindungen (I) 100 bis 250 g der aliphatischen $C_{10-22}$-Monocarbonsäure B) eingesetzt werden.

Die Erfindung betrifft auch ein **Verfahren** zur gleichzeitigen Verbesserung des mit dem Druckfiltertest nach **DIN EN ISO 23900-5:2019-01** zu bestimmenden Druckfilterwerts FPV und der nach **DIN 55986** zu bestimmenden Farbstärke von Pigmentpräparationen enthaltend ein Metallazopigment A) aus

a) wenigstens zwei Metallazoverbindungen der Formel (I) die sich zumindest im Metallion Me unterscheiden, oder deren tautomere Formen,

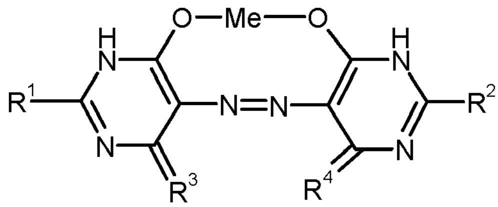

(I)

worin

$R^1$ und $R^2$ unabhängig voneinander für OH, $NH_2$ oder $NHR^5$ stehen,

$R^3$ und $R^4$ unabhängig voneinander für O oder $NR^5$ stehen,

$R^5$ für Wasserstoff oder Alkyl, vorzugsweise für $C_1$-$C_4$-Alkyl, steht, und

Me in der ersten Metallazoverbindung $Me^1$ bedeutet und für $Zn^{2+}$ und $Ni^{2+}$ steht, wobei das Molverhältnis von Zn- zu Ni- Metallionen 97 : 3 bis 3 : 97 beträgt,
und

Me in der zweiten Metallazoverbindung $Me^2$ bedeutet und für $Al^{3+}{}_{2/3}$, $Fe^{2+}$, $Fe^{3+}{}_{2/3}$, $Co^{2+}$, $Co^{3+}{}_{2/3}$, $La^{3+}{}_{2/3}$, $Ce^{3+}{}_{2/3}$, $Pr^{3+}{}_{2/3}$-, $Nd^{2+}$, $Nd^{3+}{}_{2/3}$, $Sm^{2+}$, $Sm^{3+}{}_{2/3}$, $Eu^{2+}$, $Eu^{3+}{}_{2/3}$, $Gd^{3+}{}_{2/3}$, $Tb3^{+}{}_{2/3}$, $Dy^{3+}{}_{2/3}$, $Ho^{3+}{}_{2/3}$, $Yb^{2+}$, $Yb^{3+}{}_{2/3}$, $Er^{3+}{}_{2/3}$, $Tm^{3+}{}_{2/3}$, $Mg^{2+}$, $Ca^{2+}$, $Sr^{2+}$, $Mn^{2+}$ oder $Y^{3+}{}_{2/3}$, $Sc^{3+}{}_{2/3}$, $Ti^{2+}$, $Ti^{3+}{}_{2/3}$, $Nb^{3+}{}_{2/3}$, $Mo^{2+}$, $Mo^{3+}{}_{2/3}$, $V^{2+}$, $V^{3+}{}_{2/3}$, $Zr^{2+}$, $Zr^{3+}{}_{2/3}$, $Cd^{2+}$, $Cr^{3+}{}_{2/3}$, $Pb^{2+}$ oder $Ba^{2+}$-steht,

mit der Maßgabe, dass die Menge an Metallionen $Me^1$ insgesamt 97 bis 100 Mol-% beträgt und die Menge an Metallionen ausgewählt aus der Reihe $Me^2$ insgesamt 0 bis 3 Mol-% beträgt, jeweils bezogen auf ein Mol aller Verbindungen der Formel (I), und

b) wenigstens einer Verbindung der Formel (II)

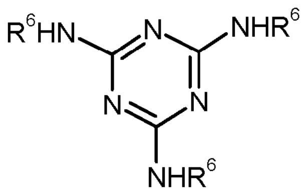

(II)

worin

$R^6$ jeweils unabhängig voneinander für Wasserstoff oder Alkyl, vorzugsweise $C_1$-$C_4$-Alkyl das gegebenenfalls ein- oder mehrfach durch OH substituiert ist, steht,

oder ein Reaktionsprodukt aus (I) mit (II), vorzugsweise ein Reaktionsprodukt aus Formel (I) mit Melamin,

indem auf 1 Mol aller im Metallazopigment A) enthaltenen Metallazoverbindungen (I) 100 bis 250 g wenigstens einer aliphatischen $C_{10-22}$-Monocarbonsäure B) eingesetzt werden.

Steht in Formel (I) Me für ein 3-wertiges Metallion, erfolgt in allen Fällen der Ladungsausgleich durch eine äquivalente Menge anionischer Struktureinheiten der Formel (Ia)

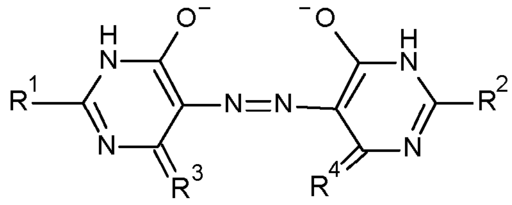

(Ia)

worin $R^1$, $R^2$, $R^3$ und $R^4$ die für Formel (I) angegebenen Bedeutungen haben.

Zur Klarstellung sei angemerkt, dass vom Rahmen der vorliegenden Erfindung alle aufgeführten allgemeinen oder in Vorzugsbereichen genannten Definitionen und Parameter in beliebigen Kombinationen umfasst sind. Dies betrifft auch einzusetzende Mengenangaben der im Rahmen der vorliegenden Anmeldung beanspruchten Verfahren und Verwendungen. Die im Rahmen dieser Anmeldung genannten Normen beziehen sich auf die zum Anmeldetag dieser Erfindung geltenden Fassung. Sofern nicht anders angegeben handelt es sich bei Prozentangaben um Gewichtsprozente. Substituenten in der Bedeutung von Alkyl bezeichnen geradkettige oder verzweigte Kohlenwasserstoffreste, vorzugsweise $C_1$-$C_6$-Alkyl, besonders bevorzugt $C_1$-$C_4$-Alkyl, die gegebenenfalls ein- oder mehrfach, gleich oder verschieden substituiert sein können, insbesondere durch Chlor, Brom, Fluor; -OH, -CN, -$NH_2$ oder $C_1$-$C_6$-Alkoxy .

Die **Farbstärke** ist eine farbmetrische Größe, die das Färbevermögen eines Farbmittels beschreibt. Dabei wird zwischen absoluter und relativer Farbstärke unterschieden. Die Farbstärke ist die wichtigste Eigenschaft von Pigmenten siehe: **https://de.wikipedia.org/wiki/Farbstärke.**

Im Rahmen der vorliegenden Erfindung wird die relative Farbstärke nach **DIN 55986** bestimmt. Bei der Produktion von Pigmenten ist es üblich, nicht die absolute, sondern die relative Farbstärke, gemessen gegen einen Standard, zu verwenden. Hierzu wird jede zu prüfende Charge unter denselben Bedingungen wie der Standard dispergiert und ausgefärbt. Der Quotient (Probe/Standard) der K/S-Werte (nach Kubelka-Munk), die ein Maß für die Lichtabsorption des Gesamtsystems darstellen, wird als relative Farbstärke bezeichnet und in Prozent ausgedrückt:

$$FS_{\mathrm{rel}} = \frac{(K/S)_{\mathrm{Probe}}}{(K/S)_{\mathrm{Standard}}} \cdot 100\%$$

Ein Wert von 100 % bedeutet, dass die Probe die identische Farbstärke wie der Standard besitzt; größere Werte bedeuten eine höhere Farbstärke, d. h. zur Ausfärbung eines bestimmten Farbtons wird weniger Pigment benötigt.

Die Bestimmung des **Druckfilterwerts FPV** (filter pressure value) erfolgt im Rahmen der vorliegenden Erfindung mittels des Druckfiltertests nach **DIN EN ISO 23900-5:2019-01** (Bestimmung des Druckanstieges)/Vorschrift 2). Diese Norm legt ein Verfahren zum Bestimmen des Grades der Dispergierung eines Farbmittels in einem thermoplastischen Kunststoff fest. Das Verfahren ist für die Prüfung von Farbmitteln in Form von Farbkonzentraten in allen Kunststoffen geeignet, die für Extrusions- und Schmelz-SpinnVerfahren eingesetzt werden. Der mit diesem Verfahren bestimmte Druckfilterwert gilt nur für die angewendeten Geräte, Bedingungen und den zu prüfenden Kunststoff. Die Anwendung anderer als der festgelegten Prüfbedingungen kann zu unterschiedlichen Ergebnissen führen. Die Herstellung des Farbkonzentrates wird in diesem Teil von **ISO 23900** nicht beschrieben. Deshalb sind die Prüfergebnisse der einzelnen Farbmittel nur dann vergleichbar, wenn dasselbe Verfahren zum Herstellen des Farbkonzentrates verwendet wurde. Im Rahmen der vorliegenden Erfindung werden gemäß **DIN EN ISO 23900-5:2019-01** die jeweils zu untersuchenden Pigmentpräparationen in Polyamid 6 in Form von Durethan® B30S der LANXESS Deutschland GmbH, Köln, mit einem Zusatz von 1 % Titandioxid auf einem Taumelmischer intensiv gemischt. Die auf diese Weise erhaltene Mischung wird anschließend auf einem Doppelwellenextruder vom Typ Leistritz ZSE 18HP bei 225°C und einer Drehzahl von 700rpm extrudiert und das auf diese Weise hergestellte granulierte Material über ein 25$\mu$m-Filter bei einer Temperatur von 238°C filtriert, wobei der dabei auftretende Druckanstieg gemessen wird. Die Druckdifferenz zwischen dem Anfangsdruck und dem Maximaldruck wird zum Berechnen des Druckfilterwertes FPV verwendet. Je geringer dieser in bar/g zu messende Druckanstieg ist, desto besser sind die Filtrationseigenschaften der im Rahmen der vorliegenden Erfindung zu untersuchenden Pigmentpräparation.

Vorzugsweise bilden die in den erfindungsgemäß einzusetzenden Metallazopigmenten A) enthaltenen Komponenten a) zusammen mit den Komponenten b) sogenannte Addukte, wobei Addukte erfindungsgemäß "zusammengesetzte Moleküle" bedeuten. Die Bindung zwischen den Molekülen solcher Addukte erfolgt vorzugsweise durch intermolekulare Wechselwirkungen, durch Lewis-Säure-Base Wechselwirkungen oder durch koordinative Bindungen. Erfindungsgemäß umfasst der Begriff Addukt generell alle Arten von Einlagerungsverbindungen oder Anlagerungsverbindungen.

Unter den Begriffen "Einlagerungsverbindung" oder "Anlagerungsverbindung" im Sinne der vorliegenden Erfindung sollen insbesondere Verbindungen verstanden werden, die aufgrund von intermolekularen Wechselwirkungen

wie Van-der Waals-Wechselwirkungen oder auch Lewis-Säure-Base Wechselwirkungen gebildet werden. Dabei hängt es sowohl von den chemischen Eigenschaften der einzulagernden Komponente, aber auch von der chemischen Natur des Wirtsgitters ab, wie eine Einlagerung abläuft. Solche Verbindungen werden häufig auch als Interkalationsverbindungen bezeichnet. Im chemischen Sinn versteht man darunter die Einlagerung von Molekülen, Ionen - selten auch Atomen - in chemische Verbindungen.

Weiterhin umfasst der Begriff Addukt auch Einschlussverbindungen, sogenannte Clathrate. Diese stellen Verbindungen zweier Stoffe dar, von denen ein Gastmolekül in ein Gitter oder Käfig aus einem Wirtsmolekül eingelagert ist.

Unter den Begriffen "Einlagerungsverbindung" oder "Anlagerungsverbindung" im Sinne der vorliegenden Erfindung sollen auch Einlagerungsmischkristalle oder interstitielle Verbindungen verstanden werden. Es handelt sich hierbei um chemische, nichtstöchiometrische, kristalline Verbindungen aus mindestens zwei Elementen.

Weiterhin sollen unter den Begriffen "Einlagerungsverbindung" oder "Anlagerungsverbindung" im Sinne der vorliegenden Erfindung auch Verbindungen verstanden werden, die aufgrund von koordinativen Bindungen oder Komplexbindungen gebildet werden. Solche Verbindungen werden insbesondere als Substitutionsmischkristalle oder Austauschmischkristalle bezeichnet, bei dem mindestens zwei Stoffe einen gemeinsamen Kristall bilden und die Atome der zweiten Komponente auf regulären Gitterplätzen der ersten Komponente sitzen.

Verbindungen, die geeignet sind mit den Metallazoverbindungen der Formel (I) ein Addukt im Sinne der obigen Definition zu bilden, können sowohl organische als auch anorganische Verbindungen sein. Im Folgenden werden diese Verbindungen als Adduktbildner bezeichnet.

Prinzipiell geeignete Adduktbildner entstammen den verschiedensten Verbindungsklassen. Aus rein praktischen Gründen sind solche Verbindungen bevorzugt, die unter Normalbedingungen (25°C, 1 bar) flüssig oder fest sind. Von den flüssigen Substanzen sind generell solche bevorzugt, die einen Siedepunkt von 100°C oder darüber, bevorzugt von größer gleich 150°C bei 1 bar, aufweisen. Geeignete Adduktbildner sind generell acyclische und cyclische organische Verbindungen, vorzugsweise aliphatische oder aromatische Kohlenwasserstoffe, die substituiert sein können, insbesondere durch OH, COOH, $NH_2$, substituiertes $NH_2$, $CONH_2$, substituiertes $CONH_2$, $SO_2NH_2$, substituiertes $SO_2NH_2$, $SO_3H$, Halogen, $NO_2$, CN, -$SO_2$-Alkyl, -$SO_2$-Aryl, -O-Alkyl, -O-Aryl, -O-Acyl.

Carbonsäure- und Sulfonsäureamide sind eine bevorzugte Gruppe von Adduktbildnern. Insbesondere geeignet sind auch Harnstoff und substituierte Harnstoffe wie Phenylharnstoff, Dodecylharnstoff und andere sowie deren Polykondensate mit Aldehyden, insbesondere Formaldehyd, aber auch Heterocyclen, vorzugsweise Barbitursäure, Benzimidazolon, Benzimidazolon-5-sulfonsäure, 2,3-Dihydroxychinoxalin, 2,3-Dihydroxychinoxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin, Cyanursäure.

Ebenfalls als Adduktbildner prinzipiell geeignet sind Polymere, vorzugsweise wasserlösliche Polymere, insbesondere Ethylen-propylenoxid-Blockpolymere, vorzugsweise mit einem $M_n$ größer gleich 1.000, insbesondere von 1.000 bis 10.000 g/mol, Polyvinylalkohol, Poly-(meth)-acrylsäuren, modifizierte Cellulose, vorzugsweise Carboxymethylcellulosen, Hydroxyethylcellulosen und Hydroxypropylcellulosen, Methylhydroxyethylcellulosen und Ethylhydroxyethylcellulosen.

Erfindungsgemäß werden als Adduktbildner solche der Formel (II) eingesetzt. Erfindungsgemäß insbesondere bevorzugt ist Melamin.

**Bevorzugte Ausführungsformen der Erfindung**

Bevorzugter Gegenstand der vorliegenden Erfindung sind **Pigmentpräparationen** aus

i) einem Metallazopigment A) enthaltend

a) wenigstens zwei Metallazoverbindungen der Formel (I) die sich zumindest im Metallion Me unterscheiden, oder deren tautomere Formen,

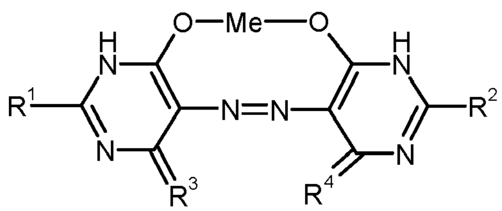

(I)

worin

$R^1$ und $R^2$ unabhängig voneinander für OH, $NH_2$ oder $NHR^5$ stehen,

$R^3$ und $R^4$ unabhängig voneinander für O oder $NR^5$ stehen,

$R^5$ für Wasserstoff oder Alkyl, vorzugsweise für $C_1$-$C_4$-Alkyl, steht, und

Me in der ersten Metallazoverbindung für Metallionen $Me^1$ und in der zweiten Metallazoverbindung für ein Metallion $Me^2$ steht,

wobei

$Me^1$ für $Zn^{2+}$ und $Ni^{2+}$ steht und das Molverhältnis von Zn- zu Ni- Metallionen 97 : 3 bis 3 : 97 beträgt, und

$Me^2$ für $Al^{3+}{}_{2/3}$, $Fe^{2+}$, $Fe^{3+}{}_{2/3}$, $Co^{2+}$, $Co^{3+}{}_{2/3}$, $La^{3+}{}_{2/3}$, $Ce^{3+}{}_{2/3}$, $Pr^{3+}{}_{2/3}$-, $Nd^{2+}$, $Nd^{3+}{}_{2/3}$, $Sm^{2+}$, $Sm^{3+}{}_{2/3}$, $Eu^{2+}$, $Eu^{3+}{}_{2/3}$, $Gd^{3+}{}_{2/3}$, $Tb3^{+}{}_{2/3}$, $Dy^{3+}{}_{2/3}$, $Ho^{3+}{}_{2/3}$, $Yb^{2+}$, $Yb^{3+}{}_{2/3}$, $Er^{3+}{}_{2/3}$, $Tm^{3+}{}_{2/3}$, $Mg^{2+}$, $Ca^{2+}$, $Sr^{2+}$, $Mn^{2+}$, $Y^{3+}{}_{2/3}$, $Sc^{3+}{}_{2/3}$, $Ti^{2+}$, $Ti^{3+}{}_{2/3}$, $Nb^{3+}{}_{2/3}$, $Mo^{2+}$, $Mo^{3+}{}_{2/3}$, $V^{2+}$, $V^{3+}{}_{2/3}$, $Zr^{2+}$, $Zr^{3+}{}_{2/3}$, $Cd^{2+}$, $Cr^{3+}{}_{2/3}$, $Pb^{2+}$ oder $Ba^{2+}$-steht,

mit der Maßgabe, dass die Menge an Metallionen $Me^1$ insgesamt 97 bis 100 Mol-% beträgt und die Menge an Metallionen ausgewählt aus der Reihe $Me^2$ insgesamt 0 bis 3 Mol-% beträgt, jeweils bezogen auf ein Mol aller Verbindungen der Formel (I), und

b) wenigstens eine Verbindung der Formel (II)

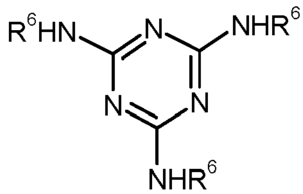

(II)

worin
$R^6$ jeweils unabhängig voneinander für Wasserstoff oder Alkyl, vorzugsweise für $C_1$-$C_4$-Alkyl, steht, das gegebenenfalls ein- oder mehrfach durch OH substituiert ist,
und

ii) 100 bis 250 g wenigstens einer aliphatischen $C_{10-22}$-Monocarbonsäure B) auf 1 Mol aller im Metallazopigment A) enthaltenen Metallazoverbindungen (I).

Vorzugsweise beträgt in den Metallazopigmenten A) das Verhältnis von Metallazoverbindung (I) zur Verbindung der Formel (II) 1 Mol : 0,05 bis 4 Mol, besonders bevorzugt 1 Mol : 0,5 bis 2,5 Mol und ganz besonders bevorzugt 1 Mol : 1,0 bis 2,0 Mol.

In einer Ausführungsform handelt es sich bei den in den in den erfindungsgemäßen Pigmentpräparationen enthaltenen Metallazoverbindungen A) um die physikalischen Mischungen der Addukte aus a) wenigstens zwei Metallazoverbindungen der Formel (I) und b) wenigstens einer Verbindung der Formel (II). Bevorzugt handelt es sich dabei um die physikalischen Mischungen der Addukte aus der reinen Ni-Azoverbindung mit Melamin und einer reinen Zn-Azoverbindung mit Melamin.

Besonders bevorzugt handelt es sich bei den in den erfindungsgemäßen Pigmentpräparationen enthaltenen Metallazopigmenten A) aber um die chemischen Mischverbindungen der Addukte aus a) wenigstens zwei Metallazoverbindungen der Formel (I) und b) wenigstens einer Verbindung der Formel (II). Bei diesen chemischen Mischverbindungen handelt es sich um Addukte solcher Metallazoverbindungen bei denen die Ni- und Zn-Atome, sowie gegebenenfalls weitere Metallionen $Me^2$ in ein gemeinsames Kristallgitter eingebaut sind.

Bevorzugter Gegenstand der Erfindung sind Pigmentpräparationen aus

i) einem Metallazopigment A) enthaltend

a) wenigstens zwei Metallazoverbindungen der Formel (I)

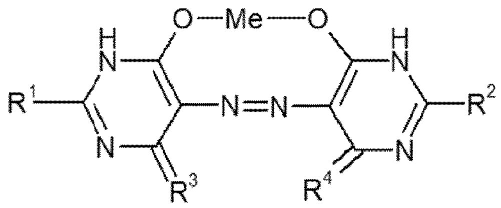

(I)

worin $R^1$ und $R^2$ für OH stehen,

$R^3$ und $R^4$ für O stehen,

Me in der ersten Metallazoverbindung $Me^1$ bedeutet und für $Zn^{2+}$ und $Ni^{2+}$ steht, wobei das Molverhältnis von Zn- zu Ni- Metallionen 97 : 3 bis 3 : 97 beträgt, und Me in der zweiten Metallazoverbindung $Me^2$ bedeutet und $Me^2$ für $Al^{3+}{}_{2/3}$, $Fe^{2+}$, $Fe^{3+}{}_{2/3}$, $Co^{2+}$, $Co^{3+}{}_{2/3}$, $La^{3+}{}_{2/3}$, $Ce^{3+}{}_{2/3}$, $Pr^{3+}{}_{2/3}$-, $Nd^{2+}$, $Nd^{3+}{}_{2/3}$, $Sm^{2+}$, $Sm^{3+}{}_{2/3}$, $Eu^{2+}$, $Eu^{3+}{}_{2/3}$, $Gd^{3+}{}_{2/3}$, $Tb3^{+}{}_{2/3}$, $Dy^{3+}{}_{2/3}$, $Ho^{3+}{}_{2/3}$, $Yb^{2+}$, $Yb^{3+}{}_{2/3}$, $Er^{3+}{}_{2/3}$, $Tm^{3+}{}_{2/3}$, $Mg^{2+}$, $Ca^{2+}$, $Sr^{2+}$, $Mn^{2+}$ oder $Y^{3+}{}_{2/3}$, $Ti^{2+}$, $Ti^{3+}{}_{2/3}$, $Nb^{3+}{}_{2/3}$, $Mo^{2+}$, $Mo^{3+}{}_{2/3}$, $V^{2+}$, $V^{3+}{}_{2/3}$, $Zr^{2+}$, $Zr^{3+}{}_{2/3}$, $Cd^{2+}$, $Cr^{3+}{}_{2/3}$, $Pb^{2+}$ oder $Ba^{2+}$-steht,

mit der Maßgabe, dass die Menge an Metallionen $Me^1$ insgesamt 97 bis 100 Mol-% beträgt und die Menge an Metallionen $Me^2$ insgesamt 0 bis 3 Mol-% beträgt, jeweils bezogen auf ein Mol aller Verbindungen der Formel (I), und

b) Melamin (2,4,6-Triamino-1,3,5-triazin CAS No. 108-78-1), oder alternativ ein Reaktionsprodukt aus Formel (I) mit Melamin
und

ii) 100 bis 250 g wenigstens einer aliphatischen $C_{10-22}$-Monocarbonsäure B) auf 1 Mol aller im Metallazopigment A) enthaltenen Metallazoverbindungen (I).

Besonders bevorzugt betrifft die Erfindung Pigmentpräparationen aus

i) einem Metallazopigment A) enthaltend

a) wenigstens zwei Metallazoverbindungen der Formel (I)

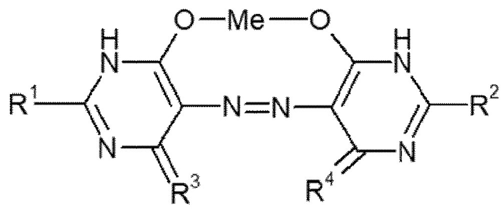

(I)

worin $R^1$ und $R^2$ für OH stehen,

$R^3$ und $R^4$ für O stehen,

Me in der ersten Metallazoverbindung $Me^1$ bedeutet und für $Zn^{2+}$ und $Ni^{2+}$ steht, wobei das Molverhältnis von Zn- zu Ni- Metallionen 90 : 10 bis 30 : 70 beträgt, und

Me in der zweiten Metallazoverbindung $Me^2$ bedeutet und für $Al^{3+}{}_{2/3}$, $Fe^{2+}$, $Fe^{3+}{}_{2/3}$, $Co^{2+}$, $Co^{3+}{}_{2/3}$, $Ce^{3+}{}_{2/3}$, $Mg^{2+}$, $Ca^{2+}$, $Sr^{2+}$, $La^{3+}{}_{2/3}$, $Mg^{2+}$, $Mn^{2+}$, $Nd^{2+}$, $Nd^{3+}{}_{2/3}$, $Ti^{2+}$, $Ti^{3+}{}_{2/3}$, $Nb^{3+}{}_{2/3}$, $Mo^{2+}$, $Mo^{3+}{}_{2/3}$, $V^{2+}$, $V^{3+}{}_{2/3}$, $Zr^{2+}$, $Zr^{3+}{}_{2/3}$, $Cd^{2+}$, $Cr^{3+}{}_{2/3}$, $Pb^{2+}$, $Ca^{2+}$, oder $Ba^{2+}$-steht,

mit der Maßgabe, dass die Menge an Metallionen $Me^1$ insgesamt 99 bis 100 Mol-% beträgt und die Menge an

Metallionen $Me^2$ insgesamt 0 bis 1 Mol-% beträgt, jeweils bezogen auf ein Mol aller Verbindungen der Formel (I), und

b) Melamin (2,4,6-Triamino-1,3,5-triazin CAS No. 108-78-1), oder alternativ ein Reaktionsprodukt aus (I) und Melamin
und

i) 100 bis 250 g wenigstens einer aliphatischen $C_{10-22}$-Monocarbonsäure B) auf 1 Mol aller im Metallazopigment A) enthaltenen Metallazoverbindungen (I).

Ganz besonders bevorzugt betrifft die Erfindung Pigmentpräparationen aus

i) einem Metallazopigment A) enthaltend

a) wenigstens zwei Metallazoverbindungen der Formel (I)

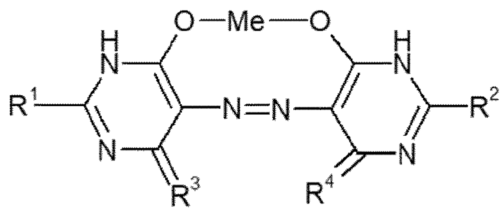

(I)

worin $R^1$ und $R^2$ für OH stehen,

$R^3$ und $R^4$ für O stehen,

Me in der ersten Metallazoverbindung $Me^1$ bedeutet und für $Zn^{2+}$ und $Ni^{2+}$ steht, wobei das Molverhältnis von Zn- zu Ni- Metallionen 40 : 80 bis 20 : 60 beträgt, und

Me in der zweiten Metallazoverbindung $Me^2$ bedeutet und für $Al^{3+}{}_{2/3}$, $Fe^{2+}$, $Fe^{3+}{}_{2/3}$, $Ca^{2+}$, $Co^{2+}$, $Co^{3+}{}_{2/3}$, $La^{3+}{}_{2/3}$, $Mg^{2+}$, $Nd^{2+}$ oder $Nd^{3+}{}_{2/3}$ steht,

mit der Maßgabe, dass die Menge an Metallionen $Me^1$ insgesamt 97 bis 100 Mol-% beträgt und die Menge an Metallionen $Me^2$ insgesamt 0 bis 3 Mol-% beträgt, jeweils bezogen auf ein Mol aller Verbindungen der Formel (I), und

b) Melamin (2,4,6-Triamino-1,3,5-triazin CAS No. 108-78-1), oder alternativ ein Reaktionsprodukt aus (I) und Melamin
und

ii) 100 bis 250 g wenigstens einer aliphatischen $C_{10-22}$-Monocarbonsäure B) auf 1 Mol aller im Metallazopigment A) enthaltenen Metallazoverbindungen (I).

Vorzugsweise liegen Zink und Nickel in den wenigstens zwei Metallazoverbindungen erfindungsgemäßer Metallazopigmente im Verhältnis 3 bis 97 Mol-% Zn, 3 bis 97 Mol-% Ni zu 3 bis 0 Mol-% $Me^2$ vor.

Besonders bevorzugt liegen Zink und Nickel in den wenigstens zwei Metallazoverbindungen erfindungsgemäßer Metallazopigmente im Verhältnis 30 bis 90 Mol-% Zn, 70 bis 10 Mol-% Ni zu 3 bis 0 Mol-% $Me^2$ vor.

Ganz besonders bevorzugt liegen Zink und Nickel in den wenigstens zwei Metallazoverbindungen erfindungsgemäßer Metallazopigmente im Verhältnis 80 bis 40 Mol-% Zn, 60 bis 20 Mol-% Ni zu 3 bis 0 Mol-% $Me^2$ vor.

Insbesondere bevorzugt liegen Zink und Nickel in den wenigstens zwei Metallazoverbindungen erfindungsgemäßer Metallazopigmente im Verhältnis 80 bis 40 Mol-% Zn, 60 bis 20 Mol-% Ni zu 0 Mol-% $Me^2$ vor.

Die in den erfindungsgemäßen Pigmentpräparationen enthaltenen Metallazopigmente A) weisen vorzugsweise eine nach **DIN 66131** (Bestimmung der spezifischen Oberfläche von Feststoffen durch Gasadsorption nach Brunauer, Emmett und Teller (B.E.T.)) zu bestimmende spezifische Oberfläche B.E.T. von 50 bis 200 $m^2/g$, besonders bevorzugt von 80 bis 160 $m^2/g$ und ganz besonders bevorzugt von 100 bis 150 $m^2/g$ auf.

Die in den in den erfindungsgemäßen Pigmentpräparationen enthaltenen Metallazopigmente A) sind prinzipiell bekannt. Verwiesen sei diesbezüglich auf EP-A 3 072 932 oder EP-A 3 222 680 und der darin beschrieben Herstellverfahren.

Vorzugsweise sind die Metallazopigmente A) erhältlich durch Umsetzung von

a) wenigstens zwei Metallazoverbindungen der Formel (I), die sich mindestens in dem Metallion Me unterscheiden, oder deren tautomere Formen,

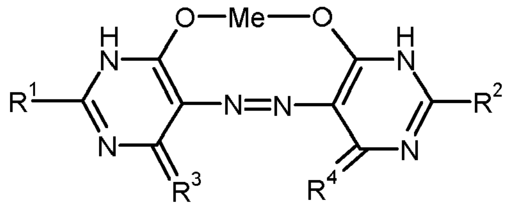

(I)

worin

$R^1$ und $R^2$ unabhängig voneinander für OH, $NH_2$ oder $NHR^5$ stehen,

$R^3$ und $R^4$ unabhängig voneinander für O oder $NR^5$ stehen,

$R^5$ für Wasserstoff oder Alkyl, vorzugsweise für $C_1$-$C_4$-Alkyl, steht, und

Me für ein Metallion $Me^1$ oder $Me^2$ steht,

wobei $Me^1$ in der ersten Metallazoverbindung (I) für $Zn^{2+}$ und $Ni^{2+}$ steht und das Molverhältnis von Zn- zu Ni-Metallionen 97 : 3 bis 3 : 97 beträgt, und

$Me^2$ in der zweiten Metallazoverbindung (I) für $Al^{3+}_{2/3}$, $Fe^{2+}$, $Fe^{3+}_{2/3}$, $Co^{2+}$, $Co^{3+}_{2/3}$, $La^{3+}_{2/3}$, $Ce^{3+}_{2/3}$, $Pr^{3+}_{2/3}$-, $Nd^{2+}$, $Nd^{3+}_{2/3}$, $Sm^{2+}$, $Sm^{3+}_{2/3}$, $Eu^{2+}$, $Eu^{3+}_{2/3}$, $Gd^{3+}_{2/3}$, $Tb3^{+}_{2/3}$, $Dy^{3+}_{2/3}$, $Ho^{3+}_{2/3}$, $Yb^{2+}$, $Yb^{3+}_{2/3}$, $Er^{3+}_{2/3}$, $Tm^{3+}_{2/3}$, $Mg^{2+}$, $Ca^{2+}$, $Sr^{2+}$, $Mn^{2+}$ oder $Y^{3+}_{2/3}$, $Ti^{2+}$, $Ti^{3+}_{2/3}$, $Nb^{3+}_{2/3}$, $Mo^{2+}$, $Mo^{3+}_{2/3}$, $V^{2+}$, $V^{3+}_{2/3}$, $Zr^{2+}$, $Zr^{3+}_{2/3}$, $Cd^{2+}$, $Cr^{3+}_{2/3}$, $Pb^{2+}$ oder $Ba^{2+}$-steht,

mit der Maßgabe, dass die Menge an Metallionen $Me^1$ insgesamt 97 bis 100 Mol-% beträgt und die Menge an Metallionen ausgewählt aus der Reihe $Me^2$ insgesamt 0 bis 3 Mol-% beträgt, jeweils bezogen auf ein Mol aller Verbindungen der Formel (I), mit

b) wenigstens einer Verbindung der Formel (II)

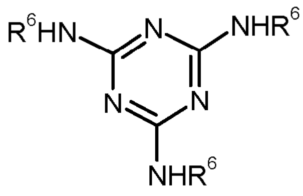

(II)

worin
$R^6$ für Wasserstoff oder Alkyl, vorzugsweise $C_1$-$C_4$-Alkyl das gegebenenfalls ein- oder mehrfach durch OH substituiert ist, steht.

Die Metallazoverbindungen (I) sind durch Umsetzung von Alkalisalzen der Formel (III),

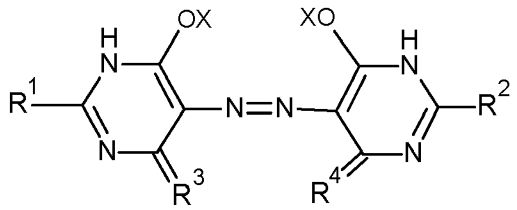

(III)

worin

X für ein Alkalimetallion, vorzugsweise für ein Natrium- oder Kaliumion steht,

$R^1$ und $R^2$ unabhängig voneinander für OH, $NH_2$ oder $NHR^5$ stehen,

$R^3$ und $R^4$ unabhängig voneinander für O oder $NR^5$ stehen,
und

$R^5$ für Wasserstoff oder Alkyl, bevorzugt für $C_1$-$C_4$-Alkyl, steht,

oder deren Tautomeren, bevorzugt der Natrium- oder Kaliumsalze,

mit Nickel- und Zinksalzen und gegebenenfalls einem oder mehreren $Me^2$-Metallsalzen aus der Reihe der $Al^{3+}{}_{2/3}$, $Fe^{2+}$, $Fe^{3+}{}_{2/3}$, $Co^{2+}$, $Co^{3+}{}_{2/3}$, $La^{3+}{}_{2/3}$, $Ce^{3+}{}_{2/3}$, $Pr^{3+}{}_{2/3}$-, $Nd^{2+}$, $Nd^{3+}{}_{2/3}$, $Sm^{2+}$, $Sm^{3+}{}_{2/3}$, $Eu^{2+}$, $Eu^{3+}{}_{2/3}$, $Gd^{3+}{}_{2/3}$, $Tb3^{+}{}_{2/3}$, $Dy^{3+}{}_{2/3}$, $Ho^{3+}{}_{2/3}$, $Yb^{2+}$, $Yb^{3+}{}_{2/3}$, $Er^{3+}{}_{2/3}$, $Tm^{3+}{}_{2/3}$, $Mg^{2+}$, $Ca^{2+}$, $Sr^{2+}$, $Mn^{2+}$ oder $Y^{3+}{}_{2/3}$, $Ti^{2+}$, $Ti^{3+}{}_{2/3}$, $Nb^{3+}{}_{2/3}$, $Mo^{2+}$, $Mo^{3+}{}_{2/3}$, $V^{2+}$, $V^{3+}{}_{2/3}$, $Zr^{2+}$, $Zr^{3+}{}_{2/3}$, $Cd^{2+}$, $Cr^{3+}{}_{2/3}$, $Pb^{2+}$ oder $Ba^{2+}$-Salze,

erhältlich, wobei pro Mol an Verbindung der Formel (III) 0,001 bis 0,999 Mol mindestens eines Nickelsalzes, 0,001 bis 0,999 Mol mindestens eines Zinksalzes und 0,03 bis 0 Mol mindestens eines Metallsalzes aus der Reihe der genannten $Me^2$-Metallsalze eingesetzt werden.

Für die Synthese von Metallazoverbindungen (I) werden im Rahmen der vorliegenden Erfindung vorzugsweise pro Mol der Verbindung der Formel (III) 0,03 bis 0,97 Mol wenigstens eines Nickelsalzes und 0,97 bis 0,03 Mol wenigstens eines Zinksalzes und 0,03 bis 0 Mol wenigstens eines Metallsalzes aus der Reihe der Salze genannten $Me^2$-Metallsalze eingesetzt.

Für die Synthese von Metallazoverbindungen (I) werden im Rahmen der vorliegenden Erfindung besonders bevorzugt pro Mol der Verbindung der Formel (III) 0,1 bis 0,7 Mol wenigstens eines Nickelsalzes und 0,9 bis 0,3 Mol wenigstens eines Zinksalzes und 0,03 bis 0 Mol wenigstens eines Metallsalzes aus der Reihe der genannten $Me^2$-Metallsalze eingesetzt.

Für die Synthese von Metallazoverbindungen (I) werden im Rahmen der vorliegenden Erfindung ganz besonders bevorzugt pro Mol der Verbindung der Formel (III) 0,2 bis 0,6 Mol wenigstens eines Nickelsalzes und 0,8 bis 0,4 Mol wenigstens eines Zinksalzes und 0,03 bis 0 Mol wenigstens eines Metallsalzes aus der Reihe der Salze der genannten $Me^2$-Metallsalze eingesetzt.

Für die Synthese von Metallazoverbindungen (I) werden im Rahmen der vorliegenden Erfindung insbesondere bevorzugt pro Mol der Verbindung der Formel (III) 0,2 bis 0,6 Mol wenigstens eines Nickelsalzes und 0,4 bis 0,4 Mol wenigstens eines Zinksalzes eingesetzt. Vorzugsweise beträgt das Verhältnis der Komponenten im Metallazopigment A) 1 Mol Verbindung der Formel (I) : 0,05 bis 4 Mol Verbindung der Formel (II), besonders bevorzugt 1 Mol Verbindung der Formel (I) : 0,5 bis 2,5 Mol Verbindung der Formel (II), und ganz besonders bevorzugt 1 Mol der Verbindung der Formel (I) : 1,0 bis 2,0 Mol Verbindung der Formel (II).

Das Verfahren zur Herstellung der Metallazopigmente A) wird vorzugsweise bei einer Temperatur von 60 bis 95°C in wässriger Lösung bei einem pH-Wert unterhalb von 7 durchgeführt. Die einzusetzenden Nickel- und Zinksalze und die gegebenenfalls einzusetzenden weiteren $Me^2$- Metallsalze können einzeln oder als Gemisch untereinander, bevorzugt in Form einer wässrigen Lösung eingesetzt werden. Die Verbindungen der Formel (II) können ebenfalls einzeln oder als Mischung untereinander zugegeben werden, bevorzugt in Form der Feststoffe.

Vorzugsweise wird das Verfahren zur Herstellung der Metallazopigmente A) so durchgeführt, dass die Azoverbindung der Formel (III), vorzugsweise als Na- oder K-Salz, vorgelegt wird, dass eine oder mehrere der ein- bzw. anzulagernden Verbindung oder Verbindungen der Formel (II), insbesondere Melamin, zugegeben wird und danach, gleichzeitig oder nacheinander, mit mindestens einem Nickelsalz und mindestens einem Zinksalz und gegebenenfalls einem oder mehreren $Me^2$- Metallsalzen, vorzugsweise in Form der wässrigen Lösungen dieser Salze, umgesetzt wird,

vorzugsweise bei pH-Werten kleiner 7. Zur Einstellung des pH-Wertes eignen sich Natronlauge, Kalilauge, Natriumcarbonat, Natriumhydrogencarbonat, Kaliumcarbonat und Kaliumhydrogencarbonat.

Als Nickel- und Zinksalze kommen vorzugsweise deren wasserlösliche Salze in Frage, insbesondere Chloride, Bromide, Acetate, Formiate, Nitrate, Sulfate usw. Bevorzugt einzusetzende Nickel- und Zinksalze weisen eine Wasserlöslichkeit von mehr als 20 g/l auf, insbesondere mehr als 50 g/l bei 20°C.

Als $Me^2$-Metallsalze kommen vorzugsweise wasserlösliche $Me^2$-Salze in Frage, besonders bevorzugt $Me^2$-Chloride, $Me^2$-Bromide, $Me^2$-Acetate, $Me^2$-Nitrate und $Me^2$-Sulfate, insbesondere $Me^2$- Chloride.

Die auf diese Weise erhaltenen Metallazopigmente A) können dann durch Filtration ihrer wässrigen Suspension als wässriger Nutschkuchen isoliert werden. Dieser Nutschkuchen kann wiederum vorzugsweise nach Waschen mit heißem Wasser, nach üblichen Trocknungsverfahren getrocknet werden. Als Trocknungsverfahren kommen insbesondere die Schaufeltrocknung oder die Sprühtrocknung entsprechender wässriger Slurries in Frage. Abschließend kann das Pigment noch gemahlen werden.

Die in den erfindungsgemäßen Pigmentpräparationen enthaltenen Metallazopigmente A) können auch durch Mischen der Addukte aus Metallazoverbindungen der Formel (I), worin Me für $Ni^{2+}$ steht, mit Addukten aus Metallazoverbindungen der Formel (I), worin Me für $Zn^{2+}$ steht, und gegebenenfalls mit einem oder mehreren Addukten aus Metallazoverbindungen der Formel (I), worin Me für ein Metallion $Me^2$ steht, hergestellt werden.

Die in den erfindungsgemäßen Pigmentpräparationen enthaltenen aliphatischen $C_{10-22}$-Monocarbonsäuren B) können gesättigt, oder ein- oder mehrfach ungesättigt sein. Bevorzugt handelt es sich bei den aliphatischen $C_{10-22}$-Monoarbonsäuren B) um gesättigte oder ein- bis dreifach ungesättigte Carbonsäuren. Besonders bevorzugt handelt es sich bei den in den erfindungsgemäßen Pigmentpräparationen enthaltenen aliphatischen $C_{10-22}$-Monoarbonsäuren B) um gesättigte oder ein- oder zweifach ungesättigte Carbonsäuren.

Ganz besonders bevorzugt wird wenigstens eine aliphatische $C_{10-22}$-Monoarbonsäure B) aus der Reihe n-Decansäure (CAS No. 334-48-5, Caprinsäure, $C_{10}H_{20}O_2$), Undec-10-ensäure (CAS No. 112-38-9, Undecylensäure, $C_{11}H_{20}O_2$), Dodecansäure (CAS No. 143-07-7, Laurinsäure, $C_{12}H_{24}O_2$), Tetradecansäure (CAS No. 544-63-8, Myristinsäure, $C_{14}H_{28}O_2$), Hexadecansäure (CAS No. 57-10-3, Palmitinsäure, $C_{16}H_{32}O_2$), Octadecansäure (CAS No. 57-11-4, Stearinsäure, $C_{18}H_{36}O_2$), (9Z)-Octadec-9-ensäure (CAS No. 112-80-1, Ölsäure, $C_{18}H_{34}O_2$) und n-Docosansäure (CAS No. 112-85-6, Behensäure, $C_{22}H_{44}O_2$) eingesetzt.

Insbesondere bevorzugt handelt es sich bei den in den erfindungsgemäßen Pigmentpräparationen enthaltenen aliphatischen Monocarbonsäuren B) um solche, die 14 bis 18 C-Atome enthalten und die gesättigt oder einfach ungesättigt sind.

Insbesondere ganz besonders bevorzugt handelt es sich bei den in den erfindungsgemäßen Pigmentpräparationen enthaltenen aliphatischen Monocarbonsäuren B) um Tetradecansäure (Myristinsäure), Hexadecansäure (Palmitinsäure), Octadecansäure (Stearinsäure) und (9Z)-Octadec-9-ensäure (Ölsäure).

Die in den erfindungsgemäßen Pigmentpräparationen enthaltenen aliphatischen $C_{10-22}$-Monocarbonsäuren B) können in reiner Form oder als Gemische vorliegen.

Vorzugsweise handelt es sich bei den in den erfindungsgemäßen Pigmentpräparationen enthaltenen Gemischen aliphatischer Monocarbonsäuren B) um Gemische enthaltend mindestens eine gesättigte oder einfach ungesättigte aliphatische Monocarbonsäure mit 14 C-Atomen, mindestens eine gesättigte oder einfach ungesättigte aliphatische Monocarbonsäure mit 16 C-Atomen und mindestens eine gesättigte oder einfach ungesättigte aliphatische Monocarbonsäure mit 18 C-Atomen.

Vorzugsweise enthalten die erfindungsgemäß einzusetzenden Gemische aliphatischer Monocarbonsäuren B) 0,5 bis 5 Gew.-%, besonders bevorzugt 1 bis 3 Gew.-% wenigstens einer gesättigten oder einfach ungesättigten aliphatischen Monocarbonsäure mit 14 C-Atomen, 25 bis 60 Gew.-%, vorzugsweise 30 bis 50 Gew.-% wenigstens einer gesättigten oder einfach ungesättigten aliphatischen Monocarbonsäure mit 16 C-Atomen und 40 bis 75 Gew.- %, vorzugsweise 45 bis 65 Gew.-% wenigstens einer gesättigten oder einfach ungesättigten aliphatischen Monocarbonsäure mit 18 C-Atomen.

Besonders bevorzugt handelt es sich bei den in den erfindungsgemäßen Pigmentpräparationen enthaltenen Gemischen aliphatischer Monocarbonsäuren B) um Gemische enthaltend Myristinsäure, Palmitinsäure und Stearinsäure und insbesondere bevorzugt in den oben angegebenen bevorzugten Mengenbereichen.

Solche Gemische sind als Handelsprodukte der Firma Unichema bekannt unter dem Handelsnamen "Pristerene®" wobei die unterschiedlichen chemischen und quantitativen Zusammensetzungen dieser Gemische mittels eines vierstelligen Zahlencodes charakterisiert sind. Erfindungsgemäß bevorzugt ist Pristerene® 4910, enthaltend eine Mischung aus 2 Gew.- % Myristinsäure, 30 Gew.-% Palmitinsäure und 64 Gew.-% Stearinsäure, Pristerene® 4911, enthaltend eine Mischung aus 2 Gew.-% Myristinsäure, 45 Gew.-% Palmitinsäure und 52 Gew.-% Stearinsäure, Pristerene® 4922, enthaltend eine Mischung aus 0,7 Gew.-% Myristinsäure, 30 Gew.-% Palmitinsäure und 66 Gew.-% Stearinsäure und Pristerene® 9429.

Die erfindungsgemäßen Pigmentpräparationen enthalten vorzugsweise 100 bis 250 g wenigstens einer aliphatischen Monocarbonsäure B) bezogen auf 1 Mol aller im Metallazopigment A) enthaltenen Metallazoverbindungen

(I).

Besonders bevorzugt enthalten die erfindungsgemäßen Pigmentpräparationen 100 bis 180 g, ganz besonders bevorzugt 120 bis 160 g wenigstens einer aliphatischen Monocarbonsäure B), jeweils bezogen auf 1 Mol aller im Metallazopigment A) enthaltenen Metallazoverbindungen (I).

Die erfindungsgemäßen Pigmentpräparationen können hergestellt werden indem man mindestens ein Metallazopigment A) mit mindestens einer aliphatischen Monocarbonsäure B) vermischt. Das Vermischen kann mechanisch erfolgen, beispielsweise und vorzugsweise durch Rühren mittels geeigneter Rührvorrichtungen wie langsam laufende Rührer, insbesondere Blatt-, Balken-, Planetenrührer oder Kreiselmischer, oder schnell laufende Rührer, insbesondere Propeller-, Turbinen-, Scheiben- oder Impellerrührer. Es ist auch möglich das Durchmischen hydraulisch durchzuführen, indem der Reaktorinhalt permanent, insbesondere mittels einer Kreiselpumpe, umgepumpt wird.

Das Metallazopigment A) wird dabei vorzugsweise in Form einer wässrigen Suspension mit der wenigstens einen aliphatischen Monocarbonsäure B) vermischt. Zur Herstellung einer solchen wässrigen Suspension wird wenigstens ein getrocknetes und gegebenenfalls gemahlenes Metallazopigment A) mit einer ausreichenden Menge Wasser vermischt, um eine vollständige Suspension des Metallazopigments zu erzeugen.

Das Metallazopigment A) kann aber auch vorzugsweise direkt in Form der wässrigen Reaktionsmischung, so wie sie bei der Synthese des Metallazopigments A) anfällt, eingesetzt werden.

Zur Herstellung erfindungsgemäßer Pigmentpräparation wird eine wässerige Pigmentsuspension enthaltend wenigstens ein Metallazopigment A) unter Rühren mit wenigstens einer aliphatischen Monocarbonsäure B), vorzugsweise bei einer Temperatur im Bereich von 60 bis 95°C, vorzugsweise innerhalb eines Zeitraums von 10 bis 60 Minuten, versetzt und die so hergestellte Mischung vorzugsweise für 60 bis 240 Minuten gerührt. Anschließend wird der pH-Wert der Mischung auf einen Wert im Bereich von 3 bis 7 eingestellt und die Pigmentpräparation über eine Nutsche oder Filterpresse isoliert. Eine auf diese Weise erhältliche Pigmentpräparation kann mittels üblicher Trocknungsverfahren getrocknet werden. Als Trocknungsverfahren kommen vorzugsweise die Schaufeltrocknung oder die Sprühtrocknung entsprechender wässriger Slurries in Frage. Anschließend kann die Pigmentpräparation noch gemahlen werden.

Die erfindungsgemäßen Pigmentpräparationen können zudem einen oder mehrere Hilfs- und/oder Zusatzstoffe enthalten. Als Hilfs- oder Zusatzstoffe kommen vorzugsweise alle für Pigmentpräparationen üblichen Hilfs- und Zusatzstoffe in Frage. Besonders bevorzugt wird wenigstens ein Hilfs- oder Zusatzstoff aus der Reihe der oberflächenaktiven Mittel, insbesondere Dispergiermittel, Tenside, Netzmittel, Emulgatoren, Basen und Säuren eingesetzt.

In einer bevorzugten Ausführungsform ist deshalb ebenfalls Gegenstand der vorliegenden Erfindung ein Verfahren zur Herstellung erfindungsgemäßer Pigmentpräparationen wobei wenigstens ein Metallazopigment A) mit wenigstens einer aliphatischen $C_{10-22}$-Monocarbonsäure B) und gegebenenfalls einem oder mehreren Hilfs- und/oder Zusatzstoffen vermischt wird.

Aufgrund der überraschend guten, mittels Druckfiltertest nach **DIN EN ISO 23900-5:2019-01** anhand des Druckfilterwerts FPV zu ermittelnden Filtrierbarkeit, bei gleichzeitig hoher, nach **DIN 55986** zu bestimmender Farbstärke, eignen sich die erfindungsgemäßen Pigmentpräparationen hervorragend für alle Pigmentanwendungszwecke. Insbesondere eignen sich die erfindungsgemäßen Pigmentpräparationen für die Massefärbung von synthetischen, halbsynthetischen oder natürlichen makromolekularen Stoffen, insbesondere Polyvinylchlorid, Polystyrol, Polyamid, Polyethylen oder Polypropylen, sowie für die Spinnfärbung von natürlichen, regenerierten oder künstlichen Fasern, wie z. B. Cellulose-, Polyester-, Polycarbonat-, Polyacrylnitril- oder Polyamidfasern, sowie zum Bedrucken von Textilien und Papier.

Die Erfindung betrifft deshalb auch die Verwendung der mittels aliphatischer $C_{10-22}$-Monocarbonsäuren B) in Filtrierbarkeit und Farbstärke verbesserten Pigmentpräparationen zur Massefärbung von synthetischen, halbsynthetischen oder natürlichen makromolekularen Stoffen, insbesondere Polyvinylchlorid, Polystyrol, Polyamid, Polyethylen oder Polypropylen, sowie für die Spinnfärbung von natürlichen, regenerierten oder künstlichen Fasern, insbesondere Cellulose , Polyester, Polycarbonat, Polyacrylnitril- oder Polyamidfasern, sowie zum Bedrucken von Textilien und Papier.

**Bevorzugte Verwendungen**

Die Erfindung betrifft bevorzugt die Verwendung wenigstens einer aliphatischen $C_{10-22}$-Monocarbonsäure B) zur Verbesserung gleichzeitig des mit dem Druckfiltertest nach **DIN EN ISO 23900-5:2019-01** zu bestimmenden Druckfilterwerts FPV und der nach **DIN 55986** zu bestimmenden Farbstärke von Pigmentpräparationen enthaltend ein Metallazopigment A) aus

a) wenigstens zwei Metallazoverbindungen der Formel (I)

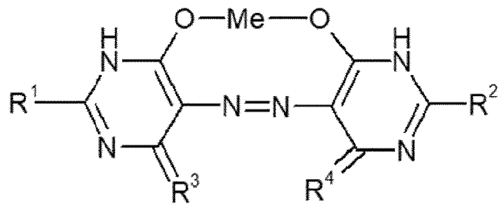

(I)

worin $R^1$ und $R^2$ für OH stehen,

$R^3$ und $R^4$ für O stehen,

$Me^1$ in der ersten Metallazoverbindung (I) für $Zn^{2+}$ und $Ni^{2+}$ steht und das Molverhältnis von Zn- zu Ni- Metallionen 97 : 3 bis 3 : 97 beträgt, und

$Me^2$ in der zweiten Metallazoverbindung (I) für der $Al^{3+}{}_{2/3}$, $Fe^{2+}$, $Fe^{3+}{}_{2/3}$, $Co^{2+}$, $Co^{3+}{}_{2/3}$, $La^{3+}{}_{2/3}$, $Ce^{3+}{}_{2/3}$, $Pr^{3+}{}_{2/3}$-, $Nd^{2+}$, $Nd^{3+}{}_{2/3}$, $Sm^{2+}$, $Sm^{3+}{}_{2/3}$, $Eu^{2+}$, $Eu^{3+}{}_{2/3}$, $Gd^{3+}{}_{2/3}$, $Tb3^{+}{}_{2/3}$, $Dy^{3+}{}_{2/3}$, $Ho^{3+}{}_{2/3}$, $Yb^{2+}$, $Yb^{3+}{}_{2/3}$, $Er^{3+}{}_{2/3}$, $Tm^{3+}{}_{2/3}$, $Mg^{2+}$, $Ca^{2+}$, $Sr^{2+}$, $Mn^{2+}$ oder $Y^{3+}{}_{2/3}$, $Ti^{2+}$, $Ti^{3+}{}_{2/3}$, $Nb^{3+}{}_{2/3}$, $Mo^{2+}$, $Mo^{3+}{}_{2/3}$, $V^{2+}$, $V^{3+}{}_{2/3}$, $Zr^{2+}$, $Zr^{3+}{}_{2/3}$, $Cd^{2+}$, $Cr^{3+}{}_{2/3}$, $Pb^{2+}$ oder $Ba^{2+}$-Salze, steht,

mit der Maßgabe, dass die Menge an Metallionen $Me^1$ insgesamt 97 bis 100 Mol-% beträgt und die Menge an Metallionen $Me^2$ insgesamt 0 bis 3 Mol-% beträgt, jeweils bezogen auf ein Mol aller Verbindungen der Formel (I), und

b) Melamin (2,4,6-Triamino-1,3,5-triazin CAS No. 108-78-1), oder die durch Umsetzung der Komponenten a) und b) erhältlich sind.

Die Erfindung betrifft besonders bevorzugt die Verwendung wenigstens aliphatischen $C_{10-22}$-Monocarbonsäure B) zur Verbesserung gleichzeitig des mit dem Druckfiltertest nach **DIN EN ISO 23900-5:2019-01** zu bestimmenden Druckfilterwerts FPV und der nach **DIN 55986** zu bestimmenden Farbstärke von Pigmentpräparationen enthaltend ein Metallazopigment A) aus

a) wenigstens zwei Metallazoverbindungen der Formel (I)

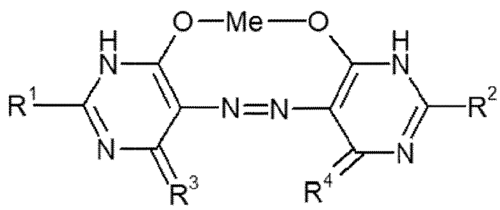

(I)

worin $R^1$ und $R^2$ für OH stehen,

$R^3$ und $R^4$ für O stehen,

$Me^1$ in der ersten Metallazoverbindung für $Zn^{2+}$ und $Ni^{2+}$ steht, wobei das Molverhältnis von Zn- zu Ni-Metallionen 90 : 30 bis 10 : 70 beträgt, und

$Me^2$ in der zweiten Metallazoverbindung (I) für der $Al^{3+}{}_{2/3}$, $Fe^{2+}$, $Fe^{3+}{}_{2/3}$, $Co^{2+}$, $Co^{3+}{}_{2/3}$, $La^{3+}{}_{2/3}$, $Ce^{3+}{}_{2/3}$, $Pr^{3+}{}_{2/3}$-, $Nd^{2+}$, $Nd^{3+}{}_{2/3}$, $Sm^{2+}$, $Sm^{3+}{}_{2/3}$, $Eu^{2+}$, $Eu^{3+}{}_{2/3}$, $Gd^{3+}{}_{2/3}$, $Tb3^{+}{}_{2/3}$, $Dy^{3+}{}_{2/3}$, $Ho^{3+}{}_{2/3}$, $Yb^{2+}$, $Yb^{3+}{}_{2/3}$, $Er^{3+}{}_{2/3}$, $Tm^{3+}{}_{2/3}$, $Mg^{2+}$, $Ca^{2+}$, $Sr^{2+}$, $Mn^{2+}$ oder $Y^{3+}{}_{2/3}$, $Ti^{2+}$, $Ti^{3+}{}_{2/3}$, $Nb^{3+}{}_{2/3}$, $Mo^{2+}$, $Mo^{3+}{}_{2/3}$, $V^{2+}$, $V^{3+}{}_{2/3}$, $Zr^{2+}$, $Zr^{3+}{}_{2/3}$, $Cd^{2+}$, $Cr^{3+}{}_{2/3}$, $Pb^{2+}$ oder $Ba^{2+}$-Salze, steht,

mit der Maßgabe, dass die Menge an Metallionen $Me^1$ insgesamt 97 bis 100 Mol-% beträgt und die Menge an Metallionen $Me^2$ insgesamt 0 bis 3 Mol-% beträgt, jeweils bezogen auf ein Mol aller Verbindungen der Formel (I), und

b) Melamin (2,4,6-Triamino-1,3,5-triazin CAS No. 108-78-1), oder die alternativ durch Umsetzung der Komponenten a) und b) erhältlich sind.

Die Erfindung betrifft ganz besonders bevorzugt auch die Verwendung wenigstens einer aliphatischen $C_{10-22}$-Monocarbonsäure B) zur Verbesserung gleichzeitig des mit dem Druckfiltertest nach **DIN EN ISO 23900-5:2019-01** zu bestimmenden Druckfilterwerts FPV und der nach **DIN 55986** zu bestimmenden Farbstärke von Pigmentpräparationen enthaltend ein Metallazopigment A) aus

a) wenigstens zwei Metallazoverbindungen der Formel (I)

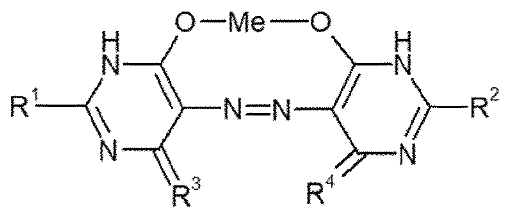

(I)

worin $R^1$ und $R^2$ für OH stehen,

$R^3$ und $R^4$ für O stehen,

$Me^1$ in der ersten Metallazoverbindung für $Zn^{2+}$ und $Ni^{2+}$ steht und das Molverhältnis von Zn- zu Ni- Metallionen 40 : 80 bis 20 : 60 beträgt, und

$Me^2$ in der zweiten Metallazoverbindung (I) für der $Al^{3+}{}_{2/3}$, $Fe^{2+}$, $Fe^{3+}{}_{2/3}$, $Co^{2+}$, $Co^{3+}{}_{2/3}$, $La^{3+}{}_{2/3}$, $Ce^{3+}{}_{2/3}$, $Pr^{3+}{}_{2/3}$-, $Nd^{2+}$, $Nd^{3+}{}_{2/3}$, $Sm^{2+}$, $Sm^{3+}{}_{2/3}$, $Eu^{2+}$, $Eu^{3+}{}_{2/3}$, $Gd^{3+}{}_{2/3}$, $Tb3^{+}{}_{2/3}$, $Dy^{3+}{}_{2/3}$, $Ho^{3+}{}_{2/3}$, $Yb^{2+}$, $Yb^{3+}{}_{2/3}$, $Er^{3+}{}_{2/3}$, $Tm^{3+}{}_{2/3}$, $Mg^{2+}$, $Ca^{2+}$, $Sr^{2+}$, $Mn^{2+}$ oder $Y^{3+}{}_{2/3}$, $Ti^{2+}$, $Ti^{3+}{}_{2/3}$, $Nb^{3+}{}_{2/3}$, $Mo^{2+}$, $Mo^{3+}{}_{2/3}$, $V^{2+}$, $V^{3+}{}_{2/3}$, $Zr^{2+}$, $Zr^{3+}{}_{2/3}$, $Cd^{2+}$, $Cr^{3+}{}_{2/3}$, $Pb^{2+}$ oder $Ba^{2+}$-Salze, steht,

mit der Maßgabe, dass die Menge an Metallionen $Me^1$ insgesamt 97 bis 100 Mol-% beträgt und die Menge an Metallionen $Me^2$ insgesamt 0 bis 3 Mol-% beträgt, jeweils bezogen auf ein Mol aller Verbindungen der Formel (I), und

b) Melamin (2,4,6-Triamino-1,3,5-triazin CAS No. 108-78-1), oder die alternativ durch Umsetzung der Komponenten a) und b) erhältlich sind.

Ganz besonders bevorzugt wird im Rahmen der Verwendungen wenigstens eine aliphatische $C_{10-22}$-Monoarbonsäure B) aus der Reihe n-Decansäure (CAS No. 334-48-5, Caprinsäure, $C_{10}H_{20}O_2$), Undec-10-ensäure (CAS No. 112-38-9, Undecylensäure, $C_{11}H_{20}O_2$), Dodecansäure (CAS No. 143-07-7, Laurinsäure, $C_{12}H_{24}O_2$), Tetradecansäure (CAS No. 544-63-8, Myristinsäure, $C_{14}H_{28}O_2$), Hexadecansäure (CAS No. 57-10-3, Palmitinsäure, $C_{16}H_{32}O_2$), Octadecansäure (CAS No. 57-11-4, Stearinsäure, $C_{18}H_{36}O_2$), (9Z)-Octadec-9-ensäure (CAS No. 112-80-1, Ölsäure, $C_{18}H_{34}O_2$) und n-Docosansäure (CAS No. 112-85-6, Behensäure, $C_{22}H_{44}O_2$) eingesetzt.

Insbesondere bevorzugt handelt es sich bei den in den erfindungsgemäßen Pigmentpräparationen enthaltenen aliphatischen Monocarbonsäuren B) um solche, die 14 bis 18 C-Atome enthalten und die gesättigt oder einfach ungesättigt sind.

Insbesondere ganz besonders bevorzugt handelt es sich bei den in den erfindungsgemäßen Pigmentpräparationen enthaltenen aliphatischen Monocarbonsäuren B) um Tetradecansäure (Myristinsäure), Hexadecansäure (Palmitinsäure), Octadecansäure (Stearinsäure) und (9Z)-Octadec-9-ensäure (Ölsäure).

Im Rahmen der erfindungsgemäßen Verwendungen können die aliphatischen $C_{10-22}$-Monocarbonsäuren B) in reiner Form oder als Gemische vorliegen. Solche Gemische sind als Handelsprodukte der Firma Unichema bekannt unter dem Handelsnamen "Pristerene®" wobei die unterschiedlichen chemischen und quantitativen Zusammensetzungen dieser Gemische mittels eines vierstelligen Zahlencodes charakterisiert sind. Erfindungsgemäß bevorzugt ist Pristerene® 4910, enthaltend eine Mischung aus 2 Gew.-% Myristinsäure, 30 Gew.-% Palmitinsäure und 64 Gew.-% Stearinsäure, Pristerene® 4911, enthaltend eine Mischung aus 2 Gew.-% Myristinsäure, 45 Gew.-% Palmitinsäure und 52 Gew.-% Stearinsäure , Pristerene® 4922, enthaltend eine Mischung aus 0,7 Gew.-% Myristinsäure, 30 Gew.-% Palmitinsäure und 66 Gew.-% Stearinsäure und Pristerene® 9429.

**Bevorzugte Verfahren**

Die Erfindung betrifft bevorzugt ein **Verfahren** zur gleichzeitigen Verbesserung des mit dem Druckfiltertest nach **DIN EN ISO 23900-5:2019-01** zu bestimmenden Druckfilterwerts FPV und der nach **DIN 55986** zu bestimmenden Farbstärke von Pigmentpräparationen enthaltend ein Metallazopigment A) von

a) wenigstens zwei Metallazoverbindungen der Formel (I)

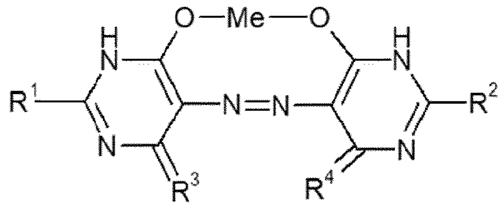

(I)

worin $R^1$ und $R^2$ für OH stehen,

$R^3$ und $R^4$ für O stehen,

$Me^1$ in der ersten Metallazoverbindung (I) für $Zn^{2+}$ und $Ni^{2+}$ steht und das Molverhältnis von Zn- zu Ni- Metallionen 97 : 3 bis 3 : 97 beträgt,
und

$Me^2$ in der zweiten Metallazoverbindung (I) für der $Al^{3+}{}_{2/3}$, $Fe^{2+}$, $Fe^{3+}{}_{2/3}$, $Co^{2+}$, $Co^{3+}{}_{2/3}$, $La^{3+}{}_{2/3}$, $Ce^{3+}{}_{2/3}$, $Pr^{3+}{}_{2/3}$-, $Nd^{2+}$, $Nd^{3+}{}_{2/3}$, $Sm^{2+}$, $Sm^{3+}{}_{2/3}$, $Eu^{2+}$, $Eu^{3+}{}_{2/3}$, $Gd^{3+}{}_{2/3}$, $Tb3^{+}{}_{2/3}$, $Dy^{3+}{}_{2/3}$, $Ho^{3+}{}_{2/3}$, $Yb^{2+}$, $Yb^{3+}{}_{2/3}$, $Er^{3+}{}_{2/3}$, $Tm^{3+}{}_{2/3}$, $Mg^{2+}$, $Ca^{2+}$, $Sr^{2+}$, $Mn^{2+}$ oder $Y^{3+}{}_{2/3}$, $Ti^{2+}$, $Ti^{3+}{}_{2/3}$, $Nb^{3+}{}_{2/3}$, $Mo^{2+}$, $Mo^{3+}{}_{2/3}$, $V^{2+}$, $V^{3+}{}_{2/3}$, $Zr^{2+}$, $Zr^{3+}{}_{2/3}$, $Cd^{2+}$, $Cr^{3+}{}_{2/3}$, $Pb^{2+}$ oder $Ba^{2+}$-Salze, steht,

mit der Maßgabe, dass die Menge an Metallionen $Me^1$ insgesamt 97 bis 100 Mol-% beträgt und die Menge an Metallionen $Me^2$ insgesamt 0 bis 3 Mol-% beträgt, jeweils bezogen auf ein Mol aller Verbindungen der Formel (I), und

b) Melamin (2,4,6-Triamino-1,3,5-triazin CAS No. 108-78-1), oder die alternativ durch Umsetzung der Komponenten a) und b) erhältlich sind,

indem auf 1 Mol aller im Metallazopigment A) enthaltenen Metallazoverbindungen (I) 100 bis 250 g wenigstens einer aliphatischen $C_{10-22}$-Monocarbonsäure B) eingesetzt werden.

Die Erfindung betrifft besonders bevorzugt ein **Verfahren** zur gleichzeitigen Verbesserung des mit dem Druckfiltertest nach **DIN EN ISO 23900-5:2019-01** zu bestimmenden Druckfilterwerts FPV und der nach **DIN 55986** zu bestimmenden Farbstärke von Pigmentpräparationen enthaltend ein Metallazopigment A) von

a) wenigstens zwei Metallazoverbindungen der Formel (I)

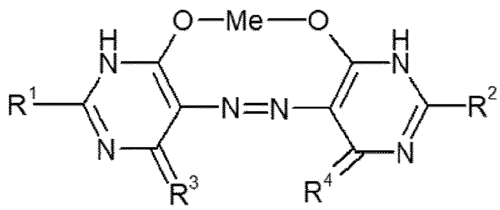

(I)

worin $R^1$ und $R^2$ für OH stehen,

$R^3$ und $R^4$ für O stehen,

$Me^1$ in der ersten Metallazoverbindung für $Zn^{2+}$ und $Ni^{2+}$ steht und das Molverhältnis von Zn- zu Ni- Metallionen

90 : 10 bis 30 : 70 beträgt, und

$Me^2$ in der zweiten Metallazoverbindung (I) für $Al^{3+}_{2/3}$, $Fe^{2+}$, $Fe^{3+}_{2/3}$, $Co^{2+}$, $Co^{3+}_{2/3}$, $La^{3+}_{2/3}$, $Ce^{3+}_{2/3}$, $Pr^{3+}_{2/3}$-, $Nd^{2+}$, $Nd^{3+}_{2/3}$, $Sm^{2+}$, $Sm^{3+}_{2/3}$, $Eu^{2+}$, $Eu^{3+}_{2/3}$, $Gd^{3+}_{2/3}$, $Tb3^{+}_{2/3}$, $Dy^{3+}_{2/3}$, $Ho^{3+}_{2/3}$, $Yb^{2+}$, $Yb^{3+}_{2/3}$, $Er^{3+}_{2/3}$, $Tm^{3+}_{2/3}$, $Mg^{2+}$, $Ca^{2+}$, $Sr^{2+}$, $Mn^{2+}$ oder $Y^{3+}_{2/3}$, $Ti^{2+}$, $Ti^{3+}_{2/3}$, $Nb^{3+}_{2/3}$, $Mo^{2+}$, $Mo^{3+}_{2/3}$, $V^{2+}$, $V^{3+}_{2/3}$, $Zr^{2+}$, $Zr^{3+}_{2/3}$, $Cd^{2+}$, $Cr^{3+}_{2/3}$, $Pb^{2+}$ oder $Ba^{2+}$-Salze, steht,

mit der Maßgabe, dass die Menge an Metallionen $Me^1$ insgesamt 97 bis 100 Mol-% beträgt und die Menge an Metallionen $Me^2$ insgesamt 0 bis 3 Mol-% beträgt, jeweils bezogen auf ein Mol aller Verbindungen der Formel (I), und

b) Melamin (2,4,6-Triamino-1,3,5-triazin CAS No. 108-78-1), oder die alternativ durch Umsetzung der Komponenten a) und b) erhältlich sind.

indem auf 1 Mol aller im Metallazopigment A) enthaltenen Metallazoverbindungen (I) 100 bis 250 g wenigstens einer aliphatischen $C_{10-22}$-Monocarbonsäure B) eingesetzt werden.

Die Erfindung betrifft ganz besonders bevorzugt ein **Verfahren** zur gleichzeitigen Verbesserung des mit dem Druckfiltertest nach **DIN EN ISO 23900-5:2019-01** zu bestimmenden Druckfilterwerts FPV und der nach **DIN 55986** zu bestimmenden Farbstärke von Pigmentpräparationen enthaltend ein Metallazopigment A) von

a) wenigstens zwei Metallazoverbindungen der Formel (I)

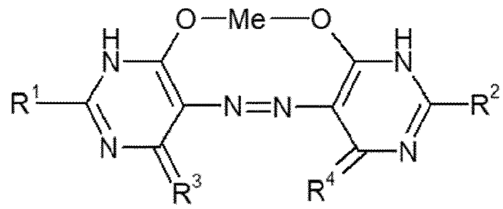

(I)

worin $R^1$ und $R^2$ für OH stehen,

$R^3$ und $R^4$ für O stehen,

$Me^1$ in der ersten Metallazoverbindung für $Zn^{2+}$ und $Ni^{2+}$ steht und das Molverhältnis von Zn- zu Ni- Metallionen 40 : 80 bis 20 : 60 beträgt, und

$Me^2$ in der zweiten Metallazoverbindung (I) für $Al^{3+}_{2/3}$, $Fe^{2+}$, $Fe^{3+}_{2/3}$, $Co^{2+}$, $Co^{3+}_{2/3}$, $La^{3+}_{2/3}$, $Ce^{3+}_{2/3}$, $Pr^{3+}_{2/3}$-, $Nd^{2+}$, $Nd^{3+}_{2/3}$, $Sm^{2+}$, $Sm^{3+}_{2/3}$, $Eu^{2+}$, $Eu^{3+}_{2/3}$, $Gd^{3+}_{2/3}$, $Tb3^{+}_{2/3}$, $Dy^{3+}_{2/3}$, $Ho^{3+}_{2/3}$, $Yb^{2+}$, $Yb^{3+}_{2/3}$, $Er^{3+}_{2/3}$, $Tm^{3+}_{2/3}$, $Mg^{2+}$, $Ca^{2+}$, $Sr^{2+}$, $Mn^{2+}$ oder $Y^{3+}_{2/3}$, $Ti^{2+}$, $Ti^{3+}_{2/3}$, $Nb^{3+}_{2/3}$, $Mo^{2+}$, $Mo^{3'}_{2/3}$, $V^{2+}$, $V^{3+}_{2/3}$, $Zr^{2+}$, $Zr^{3+}_{2/3}$, $Cd^{2+}$, $Cr^{3+}_{2/3}$, $Pb^{2+}$ oder $Ba^{2+}$-Salze, steht,

mit der Maßgabe, dass die Menge an Metallionen $Me^1$ insgesamt 99 bis 100 Mol-% beträgt und die Menge an Metallionen $Me^2$ insgesamt 0 bis 1 Mol-% beträgt, jeweils bezogen auf ein Mol aller Verbindungen der Formel (I), und

b) Melamin (2,4,6-Triamino-1,3,5-triazin CAS No. 108-78-1), oder die alternativ durch Umsetzung der Komponenten a) und b) erhältlich sind,

indem auf 1 Mol aller im Metallazopigment A) enthaltenen Metallazoverbindungen (I) 100 bis 250 g wenigstens einer aliphatischen $C_{10-22}$-Monocarbonsäure B) eingesetzt werden.

Ganz besonders bevorzugt wird im Rahmen der erfindungsgemäßen Verfahren wenigstens eine aliphatische $C_{10-22}$-Monoarbonsäure B) aus der Reihe n-Decansäure (CAS No. 334-48-5, Caprinsäure, $C_{10}H_{20}O_2$), Undec-10-ensäure (CAS No. 112-38-9, Undecylensäure, $C_{11}H_{20}O_2$), Dodecansäure (CAS No. 143-07-7, Laurinsäure, $C_{12}H_{24}O_2$), Tetradecansäure (CAS No. 544-63-8, Myristinsäure, $C_{14}H_{28}O_2$), Hexadecansäure (CAS No. 57-10-3, Palmitinsäure, $C_{16}H_{32}O_2$), Octadecansäure (CAS No. 57-11-4, Stearinsäure, $C_{18}H_{36}O_2$), (9Z)-Octadec-9-ensäure (CAS No. 112-80-1, Ölsäure, $C_{18}H_{34}O_2$) und n-Docosansäure (CAS No. 112-85-6, Behensäure, $C_{22}H_{44}O_2$) eingesetzt.

Insbesondere bevorzugt handelt es sich bei den in den erfindungsgemäßen Pigmentpräparationen enthaltenen aliphatischen Monocarbonsäuren B) um solche, die 14 bis 18 C-Atome enthalten und die gesättigt oder einfach ungesättigt sind.

Insbesondere ganz besonders bevorzugt handelt es sich bei den in den erfindungsgemäßen Pigmentpräparationen enthaltenen aliphatischen Monocarbonsäuren B) um Tetradecansäure (Myristinsäure), Hexadecansäure (Palmitinsäure), Octadecansäure (Stearinsäure) und (9Z)-Octadec-9-ensäure (Ölsäure).

Im Rahmen der erfindungsgemäßen Verfahren können die einzusetzenden aliphatischen $C_{10-22}$-Monocarbonsäuren B) in reiner Form oder als Gemische vorliegen. Solche Gemische sind als Handelsprodukte der Firma Unichema bekannt unter dem Handelsnamen "Pristerene®" wobei die unterschiedlichen chemischen und quantitativen Zusammensetzungen dieser Gemische mittels eines vierstelligen Zahlencodes charakterisiert sind. Erfindungsgemäß bevorzugt ist Pristerene® 4910, enthaltend eine Mischung aus 2 Gew.-% Myristinsäure, 30 Gew.-% Palmitinsäure und 64 Gew.-% Stearinsäure, Pristerene® 4911, enthaltend eine Mischung aus 2 Gew.-% Myristinsäure, 45 Gew.-% Palmitinsäure und 52 Gew.-% Stearinsäure , Pristerene® 4922, enthaltend eine Mischung aus 0,7 Gew.-% Myristinsäure, 30 Gew.-% Palmitinsäure und 66 Gew.-% Stearinsäure und Pristerene® 9429.

Die folgenden Beispiele sollen die vorliegende Erfindung erläutern, ohne sie jedoch darauf zu beschränken.

## Beispiele

### I. Herstellung von Metallazobarbitursäure-Melamin Pigmenten A bis W gemäß dem Stand der Technik

### Beispiel 1: Nickelazobarbitursäure-Melamin Pigmentpräparation gemäß EP-A 26 82 435, Beispiel 2 (Pigment A) (nicht erfindungsgemäß)

a) Herstellung des Rohpigments

In 3670 g destillierten Wasser von 85°C wurden 154,1 g (1,0 Mol) Diazobarbitursäure und 128,1 g (1,0 Mol) Barbitursäure eingetragen. Anschließend wurde mit wässriger Kalilauge ein pH-Wert von 5 eingestellt und die Reaktionsmischung für 90 Minuten gerührt. Die so hergestellte Azobarbitursäure (1,0 Mol) wurde bei 82°C mit 5000 g destilliertem Wasser versetzt. Anschließend wurde durch Zutropfen von 33 g 30 %iger Salzsäure ein pH-Wert von 2 bis 2,5 eingestellt und 264,8 g (2,1 Mol) Melamin zugesetzt. Anschließend wurden 1,0 Mol Nickelchlorid in Form einer ca. 25 %igen Lösung zugetropft. Nach 3 Stunden bei 82°C wurde durch Zusatz von Kaliumhydroxid ein pH-Wert von etwa 5,5 eingestellt.

b) Nachbehandlung

Hierzu wurde bei 90°C mit ca. 330 g destilliertem Wasser verdünnt. Dann wurden 70 g 30 %ige Salzsäure zugetropft und die Reaktionsmischung für 12 Stunden bei 90°C gerührt. Danach wurde der pH-Wert der Reaktionsmischung mit wässriger Kalilauge auf etwa 5 eingestellt.

c) Aufarbeitung

Die aus der Nachbehandlung b) erhältliche Pigmentpräparation wurde auf einer Saugnutsche isoliert, gewaschen, bei 80 °C im Vakuumtrockenschrank getrocknet und in einer üblichen Labormühle ca. 2 Minuten gemahlen. (Pigment A)

### Beispiele 2 bis 23: Metallazobarbitursäure-Melamin Pigmente B bis W

Die in der nachfolgenden Tab.1 aufgeführten Pigmente B bis W der Beispiele 2 bis 23 wurden analog zu Beispiel 1 hergestellt, jedoch wurden die 1,0 Mol Nickelchlorid jeweils durch Mischungen aus Nickelchlorid und Zinkchlorid und gegebenenfalls einem dritten Metallchlorid ($Me^2$), in den molaren Mengen wie in der Tab.1 angegeben, ersetzt.

Für die Pigmente A bis W wurde die Farbstärke und die Druckfilterwerte wie in der unten angegebenen Vorschrift 1 und 2 beschrieben ermittelt. Die Werte finden sich in Tabelle 1

**Tab. 1: Pigmente A bis W**

| Beispiel | Pigment | Ni [Mol %] | Zn [Mol %] | $Me^2$ [Mol %] | Farbstärke [%] | FPV [bar/g] |
|---|---|---|---|---|---|---|
| 1 | A | 100 | 0 | 0 | 100 | 15,3 |
| 2 | B | 99,9 | 0,1 | 0 | 100 | 15,1 |

(fortgesetzt)

| Beispiel | Pigment | Ni [Mol %] | Zn [Mol %] | $Me^2$ [Mol %] | Farbstärke [%] | FPV [bar/g] |
|---|---|---|---|---|---|---|
| 3 | C | 99,0 | 1,0 | 0 | 100 | 16,9 |
| 4 | D | 97 | 3 | 0 | 100 | 15,8 |
| 5 | E | 95 | 5 | 0 | 100 | 15,9 |
| 6 | F | 70 | 30 | 0 | 100 | 16,8 |
| 7 | G | 50 | 50 | 0 | 100 | 16,1 |
| 8 | H | 20 | 80 | 0 | 100 | 16,3 |
| 9 | I | 10 | 90 | 0 | 100 | 15,9 |
| 10 | J | 5 | 95 | 0 | 100 | 16,0 |
| 11 | K | 3 | 97 | 0 | 100 | 15,9 |
| 12 | L | 1 | 99 | 0 | 100 | 15,8 |
| 13 | M | 0,1 | 99,9 | 0 | 100 | 16,3 |
| 14 | N | 0 | 100 | 0 | 100 | 16,5 |
| 15 | O | 97 | 2 | 1 Ca | 100 | 15,9 |
| 16 | P | 17 | 80 | 3 Co | 100 | 15,6 |
| 17 | Q | 37 | 60 | 3 Al | 100 | 16,1 |
| 18 | R | 60 | 37 | 3 La | 100 | 16,3 |
| 19 | S | 45 | 52 | 3 Fe | 100 | 15,6 |
| 20 | T | 49 | 49 | 2 Ce | 100 | 16,1 |
| 21 | U | 20 | 79 | 1 Nd | 100 | 15,9 |
| 22 | V | 60 | 37 | 3 Mg | 100 | 15,1 |
| 23 | W | 50 | 49,5 | 0,5 Mg | 100 | 15,6 |

**Beispiel 24 bis 28: Nickelazobarbitursäure-Melamin Pigmentpräparationen gemäß EP-A 1 612 246 (nicht erfindungsgemäß)**

Vorstufe 1

In 150 g Wasser wurden 63 g 35 %ige Salzsäure eingerührt. In diese Mischung wurden 30 g Aminoguanidinbicarbonat eingetragen. Nach vollständigem Auflösen wurde auf 0°C gekühlt. Danach wurden innerhalb von 30 Min. 19 g Natriumnitrit zugesetzt und bei 0 bis 15°C 30 Min. nachgerührt. Anschließend wurde Amidosulfonsäure so lange zugesetzt bis keine Farbreaktion mit Kaliumjodod-Stärkepapier mehr eintrat. Anschließend wurden 25,6 g Barbitursäure zugegeben und auf 55°C erwärmt und 2 Stunden nachgerührt. Danach wurden 25,6 g Barbitursäure zugesetzt, auf 80°C erwärmt und mit Natriumhydroxid der pH 5 eingestellt. Nach 3 Stunden wurde die Temperatur auf 70°C gesenkt. Anschließend wurde das angefallene Reaktionsprodukt isoliert und mit heißem Wasser gewaschen und der Presskuschen bei 80°C getrocknet. Ausbeute 61,4 g Azobarbitursäure-dinatriumsalz.

Vorstufe 2

In 150 g Wasser wurden mit 63 g 35 %ige Salzsäure eingerührt. In diese Mischung wurden 38,7 g Benzolsulfonylhydrazid eingetragen. Mit Eis wurde die Mischung auf unter 0°C gekühlt. Danach wurden innerhalb von 30 Min. 19 g Natriumnitrit zugesetzt und bei 0 bis 15°C 30 Min. nachgerührt. Anschließend wurde Amidosulfonsäure so lange zugegeben bis keine Farbreaktion mit Kaliumjodod-Stärkepapier mehr eintrat. Danach wurde mit Natriumhydroxid der pH-Wert auf 7,0 bis 9,0 eingestellt, 25,6 g Barbitursäure zugegeben und die Mischung auf 50°C erwärmt und 2 Stunden nachgerührt. Danach wurden weitere 25,6 g Barbitursäure zugesetzt, die Mischung auf 80°C erwärmt und mit Salzsäure der pH-Wert der Mischung auf 5 eingestellt. Nach 3 Stunden wurde die Temperatur auf 70°C gesenkt, das entstandene Reaktionsprodukt isoliert und mit heißem Wasser gewaschen. Der erhaltene Presskuschen wurde in 1200 g Wasser

angeschlämmt und 2 Stunden bei 80°C gerührt. Danach wurde isoliert und mit 2000 g Wasser von 80°C Benzolsulfonamid-frei gewaschen und bei 80°C getrocknet. Ausbeute 61,0 g Azobarbitursäure-dinatriumsalz

**Beispiel 24**

In 600 g Wasser wurden 25 g Azobarbitursäure-dinatriumsalz aus Vorstufe 1 und 0,5 g Ölsäure eingetragen und homogen verrührt. Anschließend wurde der pH-Wert auf 1,0 eingestellt und die Mischung auf 95°C erwärmt. Danach wurden zur Mischung 19,2 g Melamin zugegeben und im Laufe von 5 Min. 18,6 g Nickelchlorid-hexahydrat, die zuvor in 115 g Wasser gelöst wurden, zugetropft. Nach 1,5 Stunden bei 90°C wurde der pH-Wert der Mischung auf 5,5 eingestellt und weitere 4 Stunden gerührt. Anschließend wurde das Reaktionsprodukt isoliert und mit heißen Wasser salz- und melaminfrei gewaschen. Der Presskuschen wurde bei 80°C bis zu einem Restwassergehalt von kleiner 1,5 % getrocknet. Ausbeute: 42 g Pigment.

**Beispiel 25**

In 600 g Wasser wurden 25 g Azobarbitursäure-dinatriumsalz aus Vorstufe 1 und 0,5 g Ölsäure eingetragen und homogen verrührt. Anschließend wurde auf pH-Wert auf 8,5 eingestellt und die Mischung auf 95°C erwärmt. Danach wurden zur Mischung 19,2 g Melamin zugegeben. Nach 5-minütigem Nachrühren wurde mit Salzsäure der pH-Wert der Mischung auf 5,0 eingestellt. Danach wurden 5 Minuten nachgerührt und anschließend im Laufe von 10 Minuten 18,6 g Nickelchlorid-hexahydrat, die zuvor in 115 g Wasser gelöst wurden, zugetropft. Nach 1,5 Stunden bei 90°C wurde der pH-Wert der Mischung auf 5,5 eingestellt und weitere 4 Stunden gerührt. Anschließend wurde das Reaktionsprodukt isoliert und mit heißen Wasser salz- und melaminfrei gewaschen. Der Presskuschen wurde bei 80°C bis zu einem Restwassergehalt von kleiner 1,5 % getrocknet. Ausbeute: 42 g Pigment.

**Beispiel 26**

In 600 g Wasser wurden 25 g Azobarbitursäure-dinatriumsalz aus Vorstufe 1 und 0,5 g Linolsäure eingetragen und homogen verrührt. Anschließend wurde der pH-Wert auf 8,5 eingestellt und die Mischung auf 95°C erwärmt. Danach wurden 19,2 g Melamin zur Mischung hinzugegeben. Nach 5-minütigem Nachrühren wurde mit Salzsäure der pH-Wert auf 5,0 eingestellt. Diese Mischung wurde für weitere 5 Minuten gerührt und anschließend im Laufe von 10 Minuten 18,6 g Nickelchlorid-hexahydrat, die zuvor in 115 g Wasser gelöst wurden, zugetropft. Nach 1,5 Stunden bei 90°C wurde der pH-Wert auf 5,5 eingestellt und weitere 4 Stunden gerührt. Anschließend wurde das Reaktionsprodukt isoliert und mit heißen Wasser salz- und melaminfrei gewaschen. Der Presskuschen wurde bei 80°C bis zu einem Restwassergehalt von kleiner 1,5 % getrocknet. Ausbeute: 41,8 g Pigment.

**Beispiel 27**

In 600 g Wasser wurden 25 g Azobarbitursäure-dinatriumsalz aus Vorstufe 1 und 0,5 g $\alpha$- Linolensäure (alpha-Linolensäure; CAS No. 463-40-1) eingetragen und homogen verrührt. Anschließend wurde der pH-Wert auf 8,5 eingestellt und die Mischung auf 95°C erwärmt. Danach wurden zur Mischung 19,2 g Melamin zugegeben. Nach 5-minütigem Nachrühren wurde mit Salzsäure der pH-Wert auf 5,0 eingestellt, 5 Minuten nachgerührt und anschließend im Laufe von 10 Minuten 18,6 g Nickelchlorid-hexahydrat, die zuvor in 115 g Wasser gelöst wurden, zugetropft. Nach 1,5 Stunden bei 90°C wurde der pH-Wert auf 5,5 eingestellt und weitere 4 Stunden gerührt. Anschließend wurde das Reaktionsprodukt isoliert und mit heißem Wasser salz -und melaminfrei gewaschen. Der Presskuschen wurde bei 80°C bis zu einem Restwassergehalt von kleiner 1,5 % getrocknet. Ausbeute: 42 g Pigment.

**Beispiel 28**

In 600 g Wasser wurden 25 g Azobarbitursäure-dinatriumsalz aus Vorstufe 2 und 0,5 g Ölsäure (CAS No. 112-80-1) eingetragen und homogen verrührt. Anschließend wurde der pH-Wert auf 1,0 eingestellt und die Mischung auf 95°C erwärmt. Danach wurden 19,2 g Melamin zur Mischung hinzugegeben und im Laufe von 5 Minuten 18,6 g Nickelchlorid-hexahydrat, die zuvor in 115 g Wasser gelöst wurden, zugetropft. Nach 1,5 Stunden bei 90°C wurde der pH-Wert der Mischung auf 5,5 eingestellt und diese Mischung weitere 4 Stunden gerührt. Anschließend wurde das Reaktionsprodukt isoliert und mit heißem Wasser salz- und melaminfrei gewaschen. Der Presskuschen wurde bei 80°C bis zu einem Restwassergehalt von kleiner 1,5 % getrocknet. Ausbeute: 41,4 g Pigment.

**Tab. 2:**

| Beispiel | Farbstärke [%] | FPV [bar/g] |
|---|---|---|
| 24 | 98 | 169 |
| 25 | 95 | 16,2 |
| 26 | 95 | 15,9 |
| 27 | 98 | 16,3 |
| 28 | 93 | 16,5 |

**Farbstärke in Vergleich zu Beispiel 1**

## II. Herstellung der Pigmentpräparationen

**Beispiel 29: Herstellung der Pigmentpräparation A-1 (nicht erfindungsgemäß)**

Eine wässrige Suspension des Pigments A wie sie nach Schritt c) des Beispiels 1 anfiel wurde mit 100 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80 °C im Vakuumtrockenschrank getrocknet und in einer üblichen Labormühle ca. 2 Minuten gemahlen. (= Pigmentpräparation A-1)

**Beispiele 30 bis 45: Herstellung der Pigmentpräparationen A-2 bis A-17 (nicht erfindungsgemäß)**

Analog zu Beispiel 29 wurden in den Beispielen 30 bis 45 die nicht erfindungsgemäßen Pigmentpräparationen A-2 bis A-17 hergestellt. Dabei wurde jeweils eine wässrige Suspensionen des Pigments A, wie sie nach Schritt c) des Beispiels 1 anfiel, mit unterschiedlichen aliphatischen Carbonsäuren B) oder deren Gemischen in unterschiedlichen Mengen, wie in Tab.2 angegeben, versetzt.

**Bestimmung der Farbstärke und des Druckfilterwerts**

Für die Pigmentpräparationen A-1 bis A-17 wurde jeweils die Farbstärke im Vergleich zu Pigment A und der Druckfilterwert nach den unten angegebenen Vorschriften 1 und 2 ermittelt. Die Werte finden sich ebenfalls in Tab.3 .

**Tab. 3: Pigmentpräparationen mit Pigment A**

| Beispiel | Pigmentpräparation | Erfindungs-gemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| | | | | | | |
| 29 | A-1 | nein | 100 | Pristerene® 4910 | 94 | 15,9 |
| 30 | A-2 | nein | 50 | Pristerene® 4910 | 98 | 16,2 |
| 31 | A-3 | nein | 270 | Pristerene® 4910 | 90 | 15,9 |
| 32 | A-4 | nein | 150 | Pristerene® 4911 | 97 | 16,3 |
| 33 | A-5 | nein | 150 | Pristerene® 9429 | 95 | 16,5 |
| 34 | A-6 | nein | 100 | Pristerene® 4922 | 97 | 15,9 |
| 35 | A-7 | nein | 150 | Caprylsäure | 96 | 15,8 |
| 36 | A-8 | nein | 100 | Caprinsäure | 92 | 16,3 |
| 37 | A-9 | nein | 150 | Laurinsäure | 95 | 16,2 |
| 38 | A-10 | nein | 210 | Myristinsäure | 90 | 16,4 |
| 39 | A-11 | nein | 270 | Palmitinsäure | 85 | 15,8 |

(fortgesetzt)

| Beispiel | Pigmentpräparation | Erfindungs -gemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 40 | A-12 | nein | 250 | Stearinsäure | 89 | 15,7 |
| 41 | A-13 | nein | 150 | Behensäure | 93 | 16,1 |
| 42 | A-14 | nein | 150 | Lignocerinsäure | 92 | 16,5 |
| 43 | A-15 | nein | 70 | Ölsäure | 96 | 15,9 |
| 44 | A-16 | nein | 150 | Undecylensäure | 91 | 15,9 |
| 45 | A-17 | nein | 150 | Nervonsäure | 90 | 16,3 |

**Beispiel 46: Herstellung der Pigmentpräparation B-1 (nicht erfindungsgemäß)**

Eine wässrige Suspension des Pigments B, wie sie nach Schritt c) des Beispiels 2 anfiel, wurde mit 50 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80 °C im Vakuumtrockenschrank getrocknet und in einer üblichen Labormühle ca. 2 Minuten gemahlen. (= Pigmentpräparation B-1)

**Beispiele 47 bis 93: Herstellung der Pigmentpräparationen B-2 bis B-48 (nicht erfindungsgemäß)**

Analog zu Beispiel 46 wurden in den Beispielen 47 bis 93 die nicht erfindungsgemäßen Pigmentpräparationen B-2 bis B-48 hergestellt. Dabei wurde jeweils eine wässrige Suspension des Pigments B, wie sie nach Schritt c) des Beispiels 2 anfiel, mit unterschiedlichen aliphatischen Carbonsäuren B) oder deren Gemischen in unterschiedlichen Mengen, wie in Tab.4 angegeben, versetzt.

**Bestimmung der Farbstärke und des Druckfilterwerts**

Für die Pigmentpräparationen B-1 bis B-48 wurde jeweils die Farbstärke im Vergleich zu Pigment B und der Druckfilterwert nach den unten angegebenen Vorschriften 1 und 2 ermittelt. Die Werte finden sich ebenfalls in Tab.4.

**Tab.4: Pigmentpräparationen mit Pigment B**

| Beispie l | Pigmentpräparation | Erfindun gsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| | | | | | | |
| 46 | B-1 | nein | 50 | Pristerene® 4910 | 98 | 15,3 |
| 47 | B-2 | nein | 180 | Pristerene® 4910 | 95 | 15,6 |
| 48 | B-3 | nein | 280 | Pristerene® 4910 | 90 | 16,1 |
| 49 | B-4 | nein | 50 | Pristerene® 4911 | 97 | 16,3 |
| 50 | B-5 | nein | 120 | Pristerene® 4911 | 95 | 16,5 |
| 51 | B-6 | nein | 280 | Pristerene® 4911 | 89 | 16,1 |
| 52 | B-7 | nein | 50 | Pristerene® 9429 | 97 | 15,8 |
| 53 | B-8 | nein | 70 | Pristerene® 9429 | 96 | 15,8 |
| 54 | B-9 | nein | 160 | Pristerene® 9429 | 94 | 15,9 |
| 55 | B-10 | nein | 210 | Pristerene® 9429 | 91 | 16,1 |

(fortgesetzt)

| Beispie l | Pigmentpräparation | Erfindun gsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 56 | B-11 | nein | 50 | Pristerene® 4922 | 98 | 15,8 |
| 57 | B-12 | nein | 100 | Pristerene® 4922 | 95 | 15,9 |
| 58 | B-13 | nein | 280 | Pristerene® 4922 | 89 | 16,1 |
| 59 | B-14 | nein | 50 | Caprylsäure | 98 | 15,9 |
| 60 | B-15 | nein | 280 | Caprylsäure | 88 | 15,5 |
| 61 | B-16 | nein | 70 | Lignocerinsäure | 97 | 16,2 |
| 62 | B-17 | nein | 180 | Lignocerinsäure | 95 | 15,1 |
| 63 | B-18 | nein | 70 | Nervonsäure | 96 | 15,3 |
| 64 | B-19 | nein | 210 | Nervonsäure | 92 | 15,5 |
| 65 | B-20 | nein | 50 | Caprinsäure | 99 | 15,6 |
| 66 | B-21 | nein | 210 | Caprinsäure | 91 | 15,8 |
| 67 | B-22 | nein | 280 | Caprinsäure | 88 | 16,1 |
| 68 | B-23 | nein | 50 | Laurinsäure | 98 | 16,1 |
| 69 | B-24 | nein | 210 | Laurinsäure | 91 | 15,8 |
| 70 | B-25 | nein | 280 | Laurinsäure | 88 | 15,6 |
| 71 | B-26 | nein | 70 | Myristinsäure | 98 | 15,3 |
| 72 | B-27 | nein | 160 | Myristinsäure | 95 | 15,6 |
| 73 | B-28 | nein | 235 | Myristinsäure | 91 | 16,3 |
| 74 | B-29 | nein | 70 | Palmitinsäure | 96 | 15,8 |
| 75 | B-30 | nein | 180 | Palmitinsäure | 95 | 15,6 |
| 76 | B-31 | nein | 250 | Palmitinsäure | 91 | 15,8 |
| 77 | B-32 | nein | 280 | Palmitinsäure | 89 | 16,2 |
| 78 | B-33 | nein | 50 | Stearinsäure | 99 | 15,8 |
| 79 | B-34 | nein | 100 | Stearinsäure | 97 | 15,8 |
| 80 | B-35 | nein | 210 | Stearinsäure | 95 | 16,2 |
| 81 | B-36 | nein | 280 | Stearinsäure | 91 | 16,0 |
| 82 | B-37 | nein | 50 | Behensäure | 98 | 15,8 |
| 83 | B-38 | nein | 70 | Behensäure | 97 | 15,6 |
| 84 | B-39 | nein | 210 | Behensäure | 95 | 16,3 |
| 85 | B-40 | nein | 280 | Behensäure | 91 | 16,2 |
| 86 | B-41 | nein | 70 | Ölsäure | 98 | 15,8 |
| 87 | B-42 | nein | 120 | Ölsäure | 95 | 15,6 |
| 88 | B-43 | nein | 250 | Ölsäure | 92 | 15,8 |
| 89 | B-44 | nein | 280 | Ölsäure | 88 | 15,8 |
| 90 | B-45 | nein | 70 | Undecylensäure | 98 | 16,5 |
| 91 | B-46 | nein | 100 | Undecylensäure | 96 | 16,2 |

(fortgesetzt)

| Beispie l | Pigmentpräparation | Erfindun gsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 92 | B-47 | nein | 210 | Undecylensäure | 91 | 16,5 |
| 93 | B-48 | nein | 280 | Undecylensäure | 87 | 16,1 |

**Beispiel 94: Herstellung der Pigmentpräparation C-1 (nicht erfindungsgemäß)**

Eine wässrige Suspension des Pigments C, wie sie nach Schritt c) des Beispiels 3 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80 °C im Vakuumtrockenschrank getrocknet und in einer üblichen Labormühle ca. 2 Minuten gemahlen. (= Pigmentpräparation C-1)

**Beispiele 95 bis 136: Herstellung der Pigmentpräparationen C-2 bis C-44 (nicht erfindungsgemäß)**

Analog zu Beispiel 94 wurden in den Beispielen 95 bis 137 nicht erfindungsgemäße Pigmentpräparationen C-2 bis C-44 hergestellt. Dabei wurde jeweils eine wässrige Suspension des Pigments C, wie sie nach Schritt c) des Beispiels 3 anfiel, mit unterschiedlichen aliphatischen Carbonsäuren B) oder deren Gemischen in unterschiedlichen Mengen, wie in Tab.5 angegeben, versetzt.

**Bestimmung der Farbstärke und des Druckfilterwerts**

Für die Pigmentpräparationen C-1 bis C-44 wurde jeweils die Farbstärke im Vergleich zu Pigment C und der Druckfilterwert nach den unten angegebenen Vorschriften 1 und 2 ermittelt. Die Werte finden sich ebenfalls in Tab.5.

**Tab.5: Pigmentpräparationen mit Pigment C**

| Beispiel | Pigmentpräparation | Erfindun gsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| | | | | | | |
| 94 | C-1 | nein | 70 | Pristerene® 4910 | 99 | 15,6 |
| 95 | C-2 | nein | 150 | Pristerene® 4910 | 97 | 15,8 |
| 96 | C-3 | nein | 250 | Pristerene® 4910 | 95 | 15,6 |
| 97 | C-4 | nein | 50 | Pristerene® 4911 | 99 | 15,9 |
| 98 | C-5 | nein | 210 | Pristerene® 4911 | 97 | 16,0 |
| 99 | C-6 | nein | 235 | Pristerene® 4911 | 94 | 16,2 |
| 100 | C-7 | nein | 50 | Pristerene® 9429 | 98 | 16,2 |
| 101 | C-8 | nein | 150 | Pristerene® 9429 | 95 | 16,0 |
| 102 | C-9 | nein | 235 | Pristerene® 9429 | 93 | 15,8 |
| 103 | C-10 | nein | 70 | Pristerene® 4922 | 99 | 15,8 |
| 104 | C-11 | nein | 180 | Pristerene® 4922 | 95 | 16,0 |
| 105 | C-12 | nein | 280 | Pristerene® 4922 | 91 | 16,2 |
| 106 | C-13 | nein | 150 | Caprylsäure | 97 | 15,9 |
| 107 | C-14 | nein | 235 | Caprylsäure | 92 | 16,3 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 108 | C-15 | nein | 150 | Lignocerinsäure | 95 | 15,6 |
| 109 | C-16 | nein | 70 | Lignocerinsäure | 98 | 15,6 |
| 110 | C-17 | nein | 250 | Lignocerinsäure | 93 | 15,9 |
| 111 | C-18 | nein | 70 | Nervonsäure | 99 | 16,0 |
| 112 | C-19 | nein | 150 | Nervonsäure | 97 | 16,2 |
| 113 | C-20 | nein | 210 | Nervonsäure | 95 | 15,8 |
| 114 | C-21 | nein | 100 | Caprinsäure | 97 | 16,3 |
| 115 | C-22 | nein | 150 | Caprinsäure | 95 | 15,9 |
| 116 | C-23 | nein | 250 | Caprinsäure | 92 | 15,8 |
| 117 | C-24 | nein | 70 | Laurinsäure | 98 | 15,8 |
| 118 | C-25 | nein | 120 | Laurinsäure | 96 | 15,8 |
| 119 | C-26 | nein | 235 | Laurinsäure | 94 | 16,2 |
| 120 | C-27 | nein | 50 | Myristinsäure | 99 | 15,6 |
| 121 | C-28 | nein | 180 | Myristinsäure | 96 | 15,8 |
| 122 | C-29 | nein | 250 | Myristinsäure | 94 | 16,2 |
| 123 | C-30 | nein | 70 | Palmitinsäure | 99 | 15,8 |
| 124 | C-31 | nein | 210 | Palmitinsäure | 95 | 16,4 |
| 125 | C-32 | nein | 250 | Palmitinsäure | 92 | 16,5 |
| 126 | C-33 | nein | 70 | Stearinsäure | 98 | 15,9 |
| 127 | C-34 | nein | 150 | Stearinsäure | 95 | 16,0 |
| 128 | C-35 | nein | 235 | Stearinsäure | 93 | 16,2 |
| 129 | C-36 | nein | 70 | Behensäure | 97 | 16,0 |
| 130 | C-37 | nein | 150 | Behensäure | 95 | 16,3 |
| 131 | C-38 | nein | 235 | Behensäure | 92 | 16,1 |
| 132 | C-39 | nein | 70 | Ölsäure | 99 | 15,8 |
| 133 | C-40 | nein | 210 | Ölsäure | 97 | 15,9 |
| 134 | C-41 | nein | 250 | Ölsäure | 95 | 16,0 |
| 135 | C-42 | nein | 70 | Undecylensäure | 98 | 15,8 |
| 136 | C-43 | nein | 210 | Undecylensäure | 95 | 15,8 |
| 137 | C-44 | nein | 280 | Undecylensäure | 92 | 16,2 |

**Beispiel 138: Herstellung der Pigmentpräparation D-1 (nicht erfindungsgemäß)**

Eine wässrige Suspension des Pigments D, wie sie nach Schritt c) des Beispiels 4 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen und bei 80 °C im Vakuumtrockenschrank getrocknet und in einer üblichen Labormühle ca. 2 Minuten gemahlen. (= Pigmentpräparation D-1)

**Beispiele 139 bis 171: Herstellung der Pigmentpräparationen D-2 bis D-34 (nicht erfindungsgemäß und erfindungsgemäß)**

Analog zu Beispiel 138 wurden in den Beispielen 139 bis 171 erfindungsgemäße und nicht erfindungsgemäße Pigmentpräparationen hergestellt. Dabei wurde jeweils eine wässrige Suspension des Pigments D, wie sie nach Schritt c) des Beispiels 4 anfiel, mit unterschiedlichen aliphatischen Carbonsäuren B) oder deren Gemischen in unterschiedlichen Mengen, wie in Tab.5 angegeben, versetzt.

**Bestimmung der Farbstärke und des Druckfilterwerts**

Für die Pigmentpräparationen D-1 bis D-34 wurde jeweils die Farbstärke im Vergleich zu Pigment D und der Druckfilterwert nach den unten angegebenen Vorschriften 1 und 2 ermittelt. Die Werte finden sich ebenfalls in Tab.6.

**Tab.6: Pigmentpräparationen mit Pigment D**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| | | | | | | |
| 138 | D-1 | nein | 70 | Pristerene® 4910 | 101 | 15,3 |
| 139 | D-2 | ja | 150 | Pristerene® 4910 | 106 | 3,5 |
| 140 | D-3 | ja | 250 | Pristerene® 4910 | 106 | 3,4 |
| 141 | D-4 | nein | 280 | Pristerene® 4910 | 98 | 3,5 |
| 142 | D-5 | nein | 50 | Caprylsäure | 98 | 15,6 |
| 143 | D-6 | nein | 150 | Caprylsäure | 98 | 15,6 |
| 144 | D-7 | nein | 280 | Caprylsäure | 90 | 16,2 |
| 145 | D-8 | nein | 70 | Nervonsäure | 100 | 16,2 |
| 146 | D-9 | nein | 150 | Nervonsäure | 95 | 15,6 |
| 147 | D-10 | nein | 235 | Nervonsäure | 92 | 15,1 |
| 148 | D-11 | nein | 70 | Caprinsäure | 98 | 15,6 |
| 149 | D-12 | ja | 100 | Caprinsäure | 107 | 3,6 |
| 150 | D-13 | ja | 210 | Caprinsäure | 106 | 3,5 |
| 151 | D-14 | nein | 280 | Caprinsäure | 95 | 3,6 |
| 152 | D-15 | nein | 70 | Palmitinsäure | 98 | 15,2 |
| 153 | D-16 | ja | 100 | Palmitinsäure | 107 | 3,0 |
| 154 | D-17 | ja | 250 | Palmitinsäure | 106 | 3,2 |
| 155 | D-18 | nein | 280 | Palmitinsäure | 95 | 3,5 |
| 156 | D-19 | nein | 70 | Stearinsäure | 99 | 15,4 |
| 157 | D-20 | ja | 150 | Stearinsäure | 108 | 3,4 |
| 158 | D-21 | ja | 250 | Stearinsäure | 106 | 3,5 |
| 159 | D-22 | nein | 280 | Stearinsäure | 97 | 3,8 |
| 160 | D-23 | nein | 70 | Behensäure | 98 | 15,6 |
| 161 | D-24 | ja | 100 | Behensäure | 106 | 3,1 |
| 162 | D-25 | ja | 180 | Behensäure | 106 | 3,0 |
| 163 | D-26 | nein | 280 | Behensäure | 95 | 3,2 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 164 | D-27 | nein | 70 | Ölsäure | 98 | 15,6 |
| 165 | D-28 | ja | 100 | Ölsäure | 107 | 3,1 |
| 166 | D-29 | ja | 250 | Ölsäure | 106 | 3,2 |
| 167 | D-30 | nein | 280 | Ölsäure | 95 | 3,5 |
| 168 | D-31 | nein | 70 | Undecylensäure | 98 | 14,9 |
| 169 | D-32 | ja | 150 | Undecylensäure | 105 | 2,9 |
| 170 | D-33 | ja | 210 | Undecylensäure | 105 | 2,8 |
| 171 | D-34 | nein | 280 | Undecylensäure | 92 | 3,2 |

**Beispiel 172: Herstellung der Pigmentpräparation E-1 (nicht erfindungsgemäß)**

Eine wässrige Suspension des Pigments E, wie sie nach Schritt c) des Beispiels 5 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80 °C im Vakuumtrockenschrank getrocknet und in einer üblichen Labormühle ca. 2 Minuten gemahlen. (= Pigmentpräparation E-1)

**Beispiele 173 bis 240: Herstellung der Pigmentpräparationen E-2 bis E-70 (nicht erfindungsgemäß und erfindungsgemäß)**

Analog zu Beispiel 172 wurden in den Beispielen 173 bis 240 erfindungsgemäße und nicht erfindungsgemäße Pigmentpräparationen E-2 bis E-81 hergestellt. Dabei wurde jeweils eine wässrige Suspension des Pigments E, wie sie nach Schritt c) des Beispiels 5 anfiel, mit unterschiedlichen aliphatischen Carbonsäuren B) oder deren Gemischen in unterschiedlichen Mengen, wie in Tab.7 angegeben, versetzt.

**Bestimmung der Farbstärke und des Druckfilterwerts**

Für die Pigmentpräparationen E-1 bis E-70 wurde jeweils die Farbstärke im Vergleich zu Pigment E und der Druckfilterwert nach den unten angegebenen Vorschriften 1 und 2 ermittelt. Die Werte finden sich ebenfalls in Tab.7.

**Tab.7: Pigmentpräparationen mit Pigment E**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| | | | | | | |
| 172 | E-1 | nein | 70 | Pristerene® 4910 | 98 | 15,9 |
| 173 | E-2 | ja | 100 | Pristerene® 4910 | 109 | 3,5 |
| 174 | E-3 | ja | 150 | Pristerene® 4910 | 112 | 3,5 |
| 175 | E-4 | ja | 250 | Pristerene® 4910 | 108 | 3,4 |
| 176 | E-5 | nein | 280 | Pristerene® 4910 | 99 | 3,6 |
| 177 | E-6 | nein | 70 | Pristerene® 4911 | 98 | 15,6 |
| 178 | E-7 | ja | 100 | Pristerene® 4911 | 108 | 3,2 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 179 | E-8 | ja | 150 | Pristerene® 4911 | 111 | 3,1 |
| 180 | E-10 | ja | 250 | Pristerene® 4911 | 106 | 3,3 |
| 181 | E-11 | nein | 280 | Pristerene® 4911 | 96 | 3,3 |
| 182 | E-12 | nein | 70 | Pristerene® 9429 | 98 | 15,6 |
| 183 | E-13 | ja | 100 | Pristerene® 9429 | 108 | 2,9 |
| 184 | E-14 | ja | 150 | Pristerene® 9429 | 110 | 2,9 |
| 185 | E-15 | ja | 250 | Pristerene® 9429 | 108 | 3,1 |
| 186 | E-16 | nein | 280 | Pristerene® 9429 | 96 | 3,6 |
| 187 | E-17 | nein | 70 | Pristerene® 4922 | 98 | 15,1 |
| 188 | E-18 | ja | 100 | Pristerene® 4922 | 105 | 3,6 |
| 189 | E-19 | ja | 150 | Pristerene® 4922 | 108 | 3,5 |
| 190 | E-20 | ja | 250 | Pristerene® 4922 | 106 | 3,5 |
| 191 | E-21 | nein | 280 | Pristerene® 4922 | 98 | 3,6 |
| 192 | E-22 | nein | 70 | Caprylsäure | 98 | 15,6 |
| 193 | E-23 | nein | 150 | Caprylsäure | 95 | 15,1 |
| 194 | E-24 | nein | 250 | Caprylsäure | 90 | 15,3 |
| 195 | E-25 | nein | 100 | Lignocerinsäure | 98 | 16,2 |
| 196 | E-26 | nein | 150 | Lignocerinsäure | 96 | 15,9 |
| 197 | E-27 | nein | 210 | Lignocerinsäure | 94 | 15,6 |
| 198 | E-28 | nein | 100 | Nervonsäure | 96 | 15,4 |
| 199 | E-29 | nein | 150 | Nervonsäure | 95 | 15,2 |
| 200 | E-30 | nein | 250 | Nervonsäure | 93 | 15,6 |
| 201 | E-31 | nein | 70 | Caprinsäure | 98 | 15,3 |
| 202 | E-32 | ja | 100 | Caprinsäure | 106 | 2,9 |
| 203 | E-33 | ja | 150 | Caprinsäure | 107 | 2,8 |
| 204 | E-34 | ja | 250 | Caprinsäure | 105 | 2,9 |
| 205 | E-35 | nein | 280 | Caprinsäure | 98 | 3,1 |
| 206 | E-36 | nein | 70 | Laurinsäure | 98 | 15,9 |
| 207 | E-37 | ja | 100 | Laurinsäure | 105 | 3,6 |
| 208 | E-38 | ja | 150 | Laurinsäure | 106 | 3,4 |
| 209 | E-39 | ja | 250 | Laurinsäure | 105 | 3,5 |
| 210 | E-40 | nein | 280 | Laurinsäure | 98 | 3,6 |
| 211 | E-41 | nein | 70 | Myristinsäure | 97 | 15,6 |
| 212 | E-42 | ja | 100 | Myristinsäure | 106 | 3,2 |
| 213 | E-43 | ja | 150 | Myristinsäure | 106 | 3,3 |
| 214 | E-44 | ja | 250 | Myristinsäure | 105 | 3,3 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 215 | E-45 | nein | 280 | Myristinsäure | 98 | 3,4 |
| 216 | E-46 | nein | 70 | Palmitinsäure | 96 | 15,6 |
| 217 | E-47 | ja | 100 | Palmitinsäure | 106 | 3,1 |
| 218 | E-48 | ja | 150 | Palmitinsäure | 107 | 3,0 |
| 219 | E-49 | ja | 250 | Palmitinsäure | 105 | 3,1 |
| 220 | E-50 | nein | 280 | Palmitinsäure | 98 | 3,3 |
| 221 | E-51 | nein | 70 | Stearinsäure | 98 | 15,1 |
| 222 | E-52 | ja | 100 | Stearinsäure | 106 | 3,2 |
| 223 | E-53 | ja | 150 | Stearinsäure | 107 | 3,1 |
| 224 | E-54 | ja | 250 | Stearinsäure | 105 | 3,2 |
| 225 | E-55 | nein | 280 | Stearinsäure | 98 | 3,3 |
| 226 | E-56 | nein | 70 | Behensäure | 97 | 15,6 |
| 227 | E-57 | ja | 100 | Behensäure | 104 | 3,5 |
| 228 | E-58 | ja | 150 | Behensäure | 105 | 3,5 |
| 229 | E-59 | ja | 250 | Behensäure | 104 | 3,6 |
| 230 | E-60 | nein | 280 | Behensäure | 96 | 3,6 |
| 231 | E-61 | nein | 70 | Ölsäure | 97 | 15,9 |
| 232 | E-62 | ja | 100 | Ölsäure | 104 | 3,1 |
| 233 | E-63 | ja | 150 | Ölsäure | 106 | 3,2 |
| 234 | E-64 | ja | 250 | Ölsäure | 104 | 3,4 |
| 235 | E-65 | nein | 280 | Ölsäure | 98 | 3,5 |
| 236 | E-66 | nein | 70 | Undecylensäure | 96 | 16,1 |
| 237 | E-67 | ja | 100 | Undecylensäure | 103 | 3,8 |
| 238 | E-68 | ja | 150 | Undecylensäure | 105 | 3,5 |
| 239 | E-69 | ja | 250 | Undecylensäure | 104 | 3,8 |
| 240 | E-70 | nein | 280 | Undecylensäure | 95 | 3,8 |

**Beispiel 241: Herstellung der Pigmentpräparation F-1 (nicht erfindungsgemäß)**

Eine wässrige Suspension des Pigments F, wie sie nach Schritt c) des Beispiels 6 anfiel, wurde mit 70 g Pristerene 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80 °C im Vakuumtrockenschrank getrocknet und in einer üblichen Labormühle ca. 2 Minuten gemahlen. (= Pigmentpräparation F-1)

**Beispiele 242 bis 274: Herstellung der Pigmentpräparationen F-2 bis F-33 (nicht erfindungsgemäß und erfindungsgemäß)**

Analog zu Beispiel 242 wurden in den Beispielen 242 bis 274 erfindungsgemäße und nicht erfindungsgemäße Pigmentpräparationen F-2 bis F-33 hergestellt. Dabei wurde jeweils eine wässrige Suspension des Pigments F, wie sie nach Schritt c) des Beispiels 6 anfiel, mit unterschiedlichen aliphatischen Carbonsäuren B) oder deren Gemischen in

unterschiedlichen Mengen, wie in Tab.8 angegeben, versetzt.

**Bestimmung der Farbstärke und des Druckfilterwerts**

Für die Pigmentpräparationen F-1 bis F-33 wurde jeweils die Farbstärke im Vergleich zu Pigment F und der Druckfilterwert nach den unten angegebenen Vorschriften 1 und 2 ermittelt. Die Werte finden sich ebenfalls in Tab.8.

**Tab.8: Pigmentpräparationen mit Pigment F**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| | | | | | | |
| 241 | F-1 | nein | 70 | Pristerene® 4910 | 98 | 15,6 |
| 242 | F-2 | ja | 150 | Pristerene® 4910 | 114 | 2,9 |
| 243 | F-3 | ja | 250 | Pristerene® 4910 | 115 | 2,9 |
| 244 | F-4 | nein | 280 | Pristerene® 4910 | 99 | 3,1 |
| 245 | F-5 | nein | 70 | Caprylsäure | 97 | 15,6 |
| 246 | F-6 | nein | 150 | Caprylsäure | 95 | 15,9 |
| 247 | F-7 | nein | 235 | Caprylsäure | 94 | 16,2 |
| 248 | F-8 | nein | 100 | Nervonsäure | 98 | 16,2 |
| 249 | F-9 | nein | 150 | Nervonsäure | 95 | 16,2 |
| 250 | F-10 | nein | 210 | Nervonsäure | 92 | 16,8 |
| 251 | F-11 | nein | 70 | Caprinsäure | 98 | 16,2 |
| 252 | F-12 | ja | 150 | Caprinsäure | 113 | 3,2 |
| 253 | F-13 | ja | 235 | Caprinsäure | 112 | 3,3 |
| 254 | F-14 | nein | 280 | Caprinsäure | 95 | 3,3 |
| 255 | F-15 | nein | 70 | Palmitinsäure | 95 | 15,6 |
| 256 | F-16 | ja | 100 | Palmitinsäure | 114 | 3,2 |
| 257 | F-17 | ja | 210 | Palmitinsäure | 113 | 3,3 |
| 258 | F-18 | nein | 280 | Palmitinsäure | 99 | 3,4 |
| 259 | F-19 | nein | 70 | Stearinsäure | 96 | 15,2 |
| 260 | F-20 | ja | 150 | Stearinsäure | 115 | 3,1 |
| 261 | F-21 | ja | 210 | Stearinsäure | 114 | 3,1 |
| 262 | F-22 | nein | 280 | Stearinsäure | 98 | 3,3 |
| 263 | F-23 | nein | 70 | Behensäure | 95 | 15,2 |
| 264 | F-24 | ja | 150 | Behensäure | 112 | 3,4 |
| 265 | F-25 | ja | 210 | Behensäure | 111 | 3,5 |
| 266 | F-26 | nein | 280 | Behensäure | 95 | 3,6 |
| 267 | F-27 | nein | 70 | Ölsäure | 95 | 15,9 |
| 268 | F-28 | ja | 150 | Ölsäure | 113 | 3,5 |
| 269 | F-29 | ja | 250 | Ölsäure | 112 | 3,6 |
| 270 | F-30 | nein | 280 | Ölsäure | 93 | 3,6 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 271 | F-30 | nein | 70 | Undecylensäure | 94 | 16,1 |
| 272 | F-31 | ja | 120 | Undecylensäure | 113 | 3,5 |
| 273 | F-32 | ja | 210 | Undecylensäure | 112 | 3,6 |
| 274 | F-33 | nein | 280 | Undecylensäure | 95 | 3,6 |

**Beispiel 275: Herstellung der Pigmentpräparation G-1 (nicht erfindungsgemäß)**

Eine wässrige Suspension des Pigments G, wie sie nach Schritt c) des Beispiels 7 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80°C im Vakuumtrockenschrank getrocknet und in einer üblichen Labormühle ca. 2 Minuten gemahlen. (= Pigmentpräparation G-1)

**Beispiele 276 bis: 355 Herstellung der Pigmentpräparationen G-2 bis G-81 (nicht erfindungsgemäß und erfindungsgemäß)**

Analog zu Beispiel 275 wurden in den Beispielen 276 bis 355 erfindungsgemäße und nicht erfindungsgemäße Pigmentpräparationen G-2 bis G-81 hergestellt. Dabei wurde jeweils eine wässrige Suspension des Pigments G, wie sie nach Schritt c) des Beispiels 7 anfiel, mit unterschiedlichen aliphatischen Carbonsäuren B) oder deren Gemischen in unterschiedlichen Mengen, wie in Tab.9 angegeben, versetzt.

**Bestimmung der Farbstärke und des Druckfilterwerts**

Für die Pigmentpräparationen G-1 bis G-81 wurde jeweils die Farbstärke im Vergleich zu Pigment G und der Druckfilterwert nach den unten angegebenen Vorschriften 1 und 2 ermittelt. Die Werte finden sich ebenfalls in Tab.9.

**Tab.9: Pigmentpräparationen mit Pigment G**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| | | | | | | |
| 275 | G-1 | nein | 70 | Pristerene® 4910 | 95 | 15,6 |
| 276 | G-2 | ja | 100 | Pristerene® 4910 | 133 | 3,2 |
| 277 | G-3 | ja | 150 | Pristerene® 4910 | 135 | 3,2 |
| 278 | G-4 | ja | 180 | Pristerene® 4910 | 133 | 3,1 |
| 279 | G-5 | ja | 250 | Pristerene® 4910 | 132 | 3,2 |
| 280 | G-6 | nein | 280 | Pristerene® 4910 | 99 | 3,2 |
| 281 | G-7 | nein | 70 | Pristerene® 4911 | 94 | 15,6 |
| 282 | G-8 | ja | 100 | Pristerene® 4911 | 134 | 3,2 |
| 283 | G-9 | ja | 120 | Pristerene® 4911 | 134 | 3,1 |
| 284 | G-10 | ja | 180 | Pristerene® 4911 | 133 | 3,2 |
| 285 | G-11 | ja | 250 | Pristerene® 4911 | 132 | 3,2 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 286 | G-12 | nein | 280 | Pristerene® 4911 | 98 | 3,3 |
| 287 | G-13 | nein | 70 | Pristerene® 9429 | 98 | 15,6 |
| 288 | G-14 | ja | 100 | Pristerene® 9429 | 133 | 3,2 |
| 289 | G-15 | ja | 150 | Pristerene® 9429 | 135 | 3,2 |
| 290 | G-16 | ja | 180 | Pristerene® 9429 | 133 | 3,2 |
| 291 | G-17 | ja | 250 | Pristerene® 9429 | 132 | 3,1 |
| 292 | G-18 | nein | 280 | Pristerene® 9429 | 98 | 3,2 |
| 293 | G-19 | nein | 70 | Pristerene® 4922 | 96 | 15,6 |
| 294 | G-20 | ja | 100 | Pristerene® 4922 | 125 | 3,2 |
| 295 | G-21 | ja | 120 | Pristerene® 4922 | 135 | 3,2 |
| 296 | G-22 | ja | 180 | Pristerene® 4922 | 134 | 3,3 |
| 297 | G-23 | ja | 250 | Pristerene® 4922 | 130 | 3,2 |
| 298 | G-24 | nein | 280 | Pristerene® 4922 | 96 | 3,3 |
| 299 | G-25 | nein | 100 | Caprylsäure | 93 | 15,6 |
| 300 | G-26 | nein | 150 | Caprylsäure | 90 | 15,2 |
| 301 | G-27 | nein | 250 | Caprylsäure | 89 | 15,3 |
| 302 | G-28 | nein | 100 | Lignocerinsäure | 92 | 15,2 |
| 303 | G-29 | nein | 150 | Lignocerinsäure | 90 | 15,3 |
| 304 | G-30 | nein | 210 | Lignocerinsäure | 87 | 15,3 |
| 305 | G-31 | nein | 70 | Nervonsäure | 94 | 15,3 |
| 306 | G-32 | nein | 150 | Nervonsäure | 90 | 15,4 |
| 307 | G-33 | nein | 210 | Nervonsäure | 86 | 15,6 |
| 308 | G-34 | nein | 70 | Caprinsäure | 95 | 15,6 |
| 309 | G-35 | ja | 100 | Caprinsäure | 122 | 3,6 |
| 310 | G-36 | ja | 150 | Caprinsäure | 124 | 3,6 |
| 311 | G-37 | ja | 180 | Caprinsäure | 124 | 3,5 |
| 312 | G-38 | ja | 250 | Caprinsäure | 119 | 3,5 |
| 313 | G-39 | nein | 280 | Caprinsäure | 96 | 3,5 |
| 314 | G-40 | nein | 70 | Laurinsäure | 95 | 15,4 |
| 315 | G-41 | ja | 100 | Laurinsäure | 122 | 3,4 |
| 316 | G-42 | ja | 120 | Laurinsäure | 124 | 3,4 |
| 317 | G-43 | ja | 180 | Laurinsäure | 120 | 3,4 |
| 318 | G-44 | ja | 250 | Laurinsäure | 118 | 3,4 |
| 319 | G-45 | nein | 280 | Laurinsäure | 96 | 3,4 |
| 320 | G-46 | nein | 70 | Myristinsäure | 96 | 15,6 |
| 321 | G-47 | ja | 100 | Myristinsäure | 122 | 3,6 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 322 | G-48 | ja | 120 | Myristinsäure | 124 | 3,5 |
| 323 | G-49 | ja | 180 | Myristinsäure | 124 | 3,5 |
| 324 | G-50 | ja | 250 | Myristinsäure | 118 | 3,4 |
| 325 | G-51 | nein | 280 | Myristinsäure | 95 | 3,4 |
| 326 | G-52 | nein | 70 | Palmitinsäure | 94 | 15,2 |
| 327 | G-53 | ja | 100 | Palmitinsäure | 123 | 3,2 |
| 328 | G-54 | ja | 150 | Palmitinsäure | 125 | 3,2 |
| 329 | G-55 | ja | 180 | Palmitinsäure | 125 | 3,3 |
| 330 | G-56 | ja | 250 | Palmitinsäure | 120 | 3,3 |
| 331 | G-57 | nein | 280 | Palmitinsäure | 96 | 3,3 |
| 332 | G-58 | nein | 70 | Stearinsäure | 95 | 15,2 |
| 333 | G-59 | ja | 100 | Stearinsäure | 122 | 3,2 |
| 334 | G-60 | ja | 120 | Stearinsäure | 124 | 3,2 |
| 335 | G-61 | ja | 180 | Stearinsäure | 124 | 3,1 |
| 336 | G-62 | ja | 250 | Stearinsäure | 120 | 3,1 |
| 337 | G-63 | nein | 280 | Stearinsäure | 96 | 3,2 |
| 338 | G-64 | nein | 70 | Behensäure | 96 | 15,3 |
| 339 | G-65 | ja | 100 | Behensäure | 118 | 3,5 |
| 340 | G-66 | ja | 150 | Behensäure | 119 | 3,5 |
| 341 | G-67 | ja | 180 | Behensäure | 120 | 3,4 |
| 342 | G-68 | ja | 250 | Behensäure | 118 | 3,4 |
| 343 | G-69 | nein | 280 | Behensäure | 96 | 3,4 |
| 344 | G-70 | nein | 70 | Ölsäure | 95 | 16,5 |
| 345 | G-71 | ja | 100 | Ölsäure | 115 | 3,6 |
| 346 | G-72 | ja | 150 | Ölsäure | 116 | 3,6 |
| 347 | G-73 | ja | 180 | Ölsäure | 117 | 3,5 |
| 348 | G-74 | ja | 250 | Ölsäure | 114 | 3,5 |
| 349 | G-75 | nein | 280 | Ölsäure | 95 | 3,6 |
| 350 | G-76 | nein | 70 | Undecylensäure | 95 | 16,2 |
| 351 | G-77 | ja | 100 | Undecylensäure | 112 | 3,4 |
| 352 | G-78 | ja | 120 | Undecylensäure | 113 | 3,5 |
| 353 | G-79 | ja | 180 | Undecylensäure | 115 | 3,4 |
| 354 | G-80 | ja | 250 | Undecylensäure | 113 | 3,4 |
| 355 | G-81 | nein | 280 | Undecylensäure | 93 | 3,5 |

**Beispiel 356: Herstellung der Pigmentpräparation H-1 (nicht erfindungsgemäß)**

Eine wässrige Suspension des Pigments H, wie sie nach Schritt c) des Beispiels 8 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80°C im Vakuumtrockenschrank getrocknet und in einer üblichen Labormühle ca. 2 Minuten gemahlen. (= Pigmentpräparation H-1)

**Beispiele 357 bis 436: Herstellung der Pigmentpräparationen H-2 bis H-81 (nicht erfindungsgemäß und erfindungsgemäß)**

Analog zu Beispiel 356 wurden in den Beispielen 357 bis 436 erfindungsgemäße und nicht erfindungsgemäße Pigmentpräparationen H-2 bis H-81 hergestellt. Dabei wurde jeweils eine wässrige Suspension des Pigments H wie sie nach Schritt c) des Beispiels 8 anfiel mit unterschiedlichen aliphatischen Carbonsäuren B) oder deren Gemischen in unterschiedlichen Mengen, wie in Tab.10 angegeben, versetzt.

**Bestimmung der Farbstärke und des Druckfilterwerts**

Für die Pigmentpräparationen H-1 bis H-81 wurde jeweils die Farbstärke im Vergleich zu Pigment H und der Druckfilterwert nach den unten angegebenen Vorschriften 1 und 2 ermittelt. Die Werte finden sich ebenfalls in Tab. 10.

**Tab.10: Pigmentpräparationen mit Pigment H**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| | | | | | | |
| 356 | H-1 | nein | 70 | Pristerene® 4910 | 94 | 15,6 |
| 357 | H-2 | ja | 100 | Pristerene® 4910 | 110 | 2,9 |
| 358 | H-3 | ja | 120 | Pristerene® 4910 | 115 | 3,0 |
| 359 | H-4 | ja | 180 | Pristerene® 4910 | 115 | 3,0 |
| 360 | H-5 | ja | 250 | Pristerene® 4910 | 110 | 3,1 |
| 361 | H-6 | nein | 280 | Pristerene® 4910 | 96 | 3,1 |
| 362 | H-7 | nein | 70 | Pristerene® 4911 | 94 | 15,2 |
| 363 | H-8 | ja | 100 | Pristerene® 4911 | 111 | 2,9 |
| 364 | H-9 | ja | 120 | Pristerene® 4911 | 116 | 3,0 |
| 365 | H-10 | ja | 180 | Pristerene® 4911 | 115 | 3,1 |
| 366 | H-11 | ja | 250 | Pristerene® 4911 | 110 | 3,1 |
| 367 | H-12 | nein | 280 | Pristerene® 4911 | 96 | 3,1 |
| 368 | H-13 | nein | 70 | Pristerene® 9429 | 95 | 16,1 |
| 369 | H-14 | ja | 100 | Pristerene® 9429 | 110 | 3,2 |
| 370 | H-15 | ja | 150 | Pristerene® 9429 | 115 | 3,2 |
| 371 | H-16 | ja | 180 | Pristerene® 9429 | 115 | 3,2 |
| 372 | H-17 | ja | 250 | Pristerene® 9429 | 110 | 3,3 |
| 373 | H-18 | nein | 280 | Pristerene® 9429 | 96 | 3,3 |
| 374 | H-19 | nein | 70 | Pristerene® 4922 | 95 | 15,8 |
| 375 | H-20 | ja | 100 | Pristerene® 4922 | 111 | 2,9 |
| 376 | H-21 | ja | 120 | Pristerene® 4922 | 114 | 2,9 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 377 | H-22 | ja | 180 | Pristerene® 4922 | 114 | 2,9 |
| 378 | H-23 | ja | 250 | Pristerene® 4922 | 111 | 3,0 |
| 379 | H-24 | nein | 280 | Pristerene® 4922 | 95 | 3,0 |
| 380 | H-25 | nein | 100 | Caprylsäure | 95 | 15,6 |
| 381 | H-26 | nein | 150 | Caprylsäure | 90 | 15,8 |
| 382 | H-27 | nein | 250 | Caprylsäure | 87 | 15,6 |
| 383 | H-28 | nein | 100 | Lignocerinsäure | 94 | 15,3 |
| 384 | H-29 | nein | 150 | Lignocerinsäure | 91 | 15,4 |
| 385 | H-30 | nein | 210 | Lignocerinsäure | 88 | 15,3 |
| 386 | H-31 | nein | 70 | Nervonsäure | 94 | 15,6 |
| 387 | H-32 | nein | 150 | Nervonsäure | 90 | 15,4 |
| 388 | H-33 | nein | 210 | Nervonsäure | 89 | 15,5 |
| 389 | H-34 | nein | 70 | Caprinsäure | 95 | 15,4 |
| 390 | H-35 | ja | 100 | Caprinsäure | 109 | 3,3 |
| 391 | H-36 | ja | 150 | Caprinsäure | 112 | 3,3 |
| 392 | H-37 | ja | 180 | Caprinsäure | 112 | 3,4 |
| 393 | H-38 | ja | 250 | Caprinsäure | 111 | 3,4 |
| 394 | H-39 | nein | 280 | Caprinsäure | 96 | 3,4 |
| 395 | H-40 | nein | 70 | Laurinsäure | 95 | 15,2 |
| 396 | H-41 | ja | 100 | Laurinsäure | 109 | 3,2 |
| 397 | H-42 | ja | 120 | Laurinsäure | 109 | 3,2 |
| 398 | H-43 | ja | 180 | Laurinsäure | 108 | 3,3 |
| 399 | H-44 | ja | 250 | Laurinsäure | 107 | 3,1 |
| 400 | H-45 | nein | 280 | Laurinsäure | 94 | 3,2 |
| 401 | H-46 | nein | 70 | Myristinsäure | 94 | 15,9 |
| 402 | H-47 | ja | 100 | Myristinsäure | 104 | 3,1 |
| 403 | H-48 | ja | 120 | Myristinsäure | 105 | 3,1 |
| 404 | H-49 | ja | 180 | Myristinsäure | 105 | 3,2 |
| 405 | H-50 | ja | 250 | Myristinsäure | 104 | 3,2 |
| 406 | H-51 | nein | 280 | Myristinsäure | 96 | 3,2 |
| 407 | H-52 | nein | 70 | Palmitinsäure | 95 | 15,9 |
| 408 | H-53 | ja | 100 | Palmitinsäure | 111 | 2,9 |
| 409 | H-54 | ja | 150 | Palmitinsäure | 112 | 2,9 |
| 410 | H-55 | ja | 180 | Palmitinsäure | 112 | 2,9 |
| 411 | H-56 | ja | 250 | Palmitinsäure | 110 | 2,9 |
| 412 | H-57 | nein | 280 | Palmitinsäure | 96 | 3,0 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 413 | H-58 | nein | 70 | Stearinsäure | 96 | 15,3 |
| 414 | H-59 | ja | 100 | Stearinsäure | 112 | 3,1 |
| 415 | H-60 | ja | 120 | Stearinsäure | 113 | 3,1 |
| 416 | H-61 | ja | 180 | Stearinsäure | 113 | 3,0 |
| 417 | H-62 | ja | 250 | Stearinsäure | 112 | 3,1 |
| 418 | H-63 | nein | 280 | Stearinsäure | 96 | 3,1 |
| 419 | H-64 | nein | 70 | Behensäure | 95 | 15,2 |
| 420 | H-65 | ja | 100 | Behensäure | 109 | 3,3 |
| 421 | H-66 | ja | 150 | Behensäure | 110 | 3,4 |
| 422 | H-67 | ja | 180 | Behensäure | 110 | 3,3 |
| 423 | H-68 | ja | 250 | Behensäure | 109 | 3,3 |
| 424 | H-69 | nein | 280 | Behensäure | 95 | 3,3 |
| 425 | H-70 | nein | 70 | Ölsäure | 95 | 15,6 |
| 426 | H-71 | ja | 100 | Ölsäure | 109 | 3,4 |
| 427 | H-72 | ja | 150 | Ölsäure | 109 | 3,3 |
| 428 | H-73 | ja | 180 | Ölsäure | 108 | 3,3 |
| 429 | H-74 | ja | 250 | Ölsäure | 108 | 3,3 |
| 430 | H-75 | nein | 280 | Ölsäure | 96 | 3,4 |
| 431 | H-76 | nein | 70 | Undecylensäure | 95 | 15,8 |
| 432 | H-77 | ja | 100 | Undecylensäure | 109 | 3,4 |
| 433 | H-78 | ja | 120 | Undecylensäure | 109 | 3,3 |
| 434 | H-79 | ja | 180 | Undecylensäure | 108 | 3,3 |
| 435 | H-80 | ja | 250 | Undecylensäure | 107 | 3,4 |
| 436 | H-81 | nein | 280 | Undecylensäure | 95 | 3,4 |

**Beispiel 437: Herstellung der Pigmentpräparation I-1 (nicht erfindungsgemäß)**

Eine wässrige Suspension des Pigments I, wie sie nach Schritt c) des Beispiels 9 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80 °C im Vakuumtrockenschrank getrocknet und in einer üblichen Labormühle ca. 2 Minuten gemahlen. (= Pigmentpräparation I-1)

**Beispiele 438 bis 468: Herstellung der Pigmentpräparationen I-2 bis I 32 (nicht erfindungsgemäß und erfindungsgemäß)**

Analog zu Beispiel 437 wurden in den Beispielen 438 bis 468 erfindungsgemäße und nicht erfindungsgemäße Pigmentpräparationen I-2 bis I-32 hergestellt. Dabei wurde jeweils eine wässrige Suspension des Pigments I, wie sie nach Schritt c) des Beispiels 9 anfiel, mit unterschiedlichen aliphatischen Carbonsäuren B) oder deren Gemischen in unterschiedlichen Mengen, wie in Tab.11 angegeben, versetzt.

**Bestimmung der Farbstärke und des Druckfilterwerts**

Für die Pigmentpräparationen I-1 bis I-32 wurde jeweils die Farbstärke im Vergleich zu Pigment I und der Druckfilterwert nach den unten angegebenen Vorschriften 1 und 2 ermittelt. Die Werte finden sich ebenfalls in Tab.11.

**Tab.11: Pigmentpräparationen mit Pigment I**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 437 | I-1 | nein | 70 | Pristerene® 4910 | 94 | 15,2 |
| 438 | I-2 | ja | 100 | Pristerene® 4910 | 108 | 3,0 |
| 439 | I-3 | ja | 210 | Pristerene® 4910 | 108 | 3,0 |
| 440 | I-4 | nein | 280 | Pristerene® 4910 | 96 | 3,1 |
| 441 | I-5 | nein | 150 | Caprylsäure | 96 | 15,6 |
| 442 | I-6 | nein | 210 | Caprylsäure | 95 | 15,3 |
| 443 | I-7 | nein | 150 | Nervonsäure | 94 | 15,3 |
| 444 | I-8 | nein | 210 | Nervonsäure | 93 | 15,9 |
| 445 | I-9 | nein | 70 | Caprinsäure | 95 | 15,8 |
| 446 | I-10 | ja | 150 | Caprinsäure | 107 | 3,3 |
| 447 | I-11 | ja | 250 | Caprinsäure | 106 | 3,2 |
| 448 | I-12 | nein | 280 | Caprinsäure | 94 | 3,2 |
| 449 | I-13 | nein | 70 | Palmitinsäure | 96 | 15,2 |
| 450 | I-14 | ja | 100 | Palmitinsäure | 109 | 3,0 |
| 451 | I-15 | ja | 210 | Palmitinsäure | 109 | 3,0 |
| 452 | I-16 | nein | 280 | Palmitinsäure | 96 | 3,1 |
| 453 | I-17 | nein | 70 | Stearinsäure | 95 | 15,6 |
| 454 | I-18 | ja | 150 | Stearinsäure | 108 | 3,0 |
| 455 | I-19 | ja | 250 | Stearinsäure | 108 | 3,0 |
| 456 | I-20 | nein | 280 | Stearinsäure | 94 | 3,1 |
| 457 | I-21 | nein | 70 | Behensäure | 95 | 15,7 |
| 458 | I-22 | ja | 100 | Behensäure | 107 | 3,2 |
| 459 | I-23 | ja | 210 | Behensäure | 107 | 3,2 |
| 460 | I-24 | nein | 280 | Behensäure | 94 | 3,2 |
| 461 | I-25 | nein | 70 | Ölsäure | 94 | 15,1 |
| 462 | I-26 | ja | 120 | Ölsäure | 106 | 3,3 |
| 463 | I-27 | ja | 210 | Ölsäure | 106 | 3,3 |
| 464 | I-28 | nein | 280 | Ölsäure | 93 | 3,3 |
| 465 | I-29 | nein | 70 | Undecylensäure | 96 | 15,3 |
| 466 | I-30 | ja | 150 | Undecylensäure | 105 | 3,2 |
| 467 | I-31 | ja | 210 | Undecylensäure | 104 | 3,2 |
| 468 | I-32 | nein | 280 | Undecylensäure | 93 | 3,3 |

**Beispiel 469: Herstellung der Pigmentpräparation J-1 (nicht erfindungsgemäß)**

Eine wässrige Suspension des Pigments J, wie sie nach Schritt c) des Beispiels 10 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80°C im Vakuumtrockenschrank getrocknet und in einer üblichen Labormühle ca. 2 Minuten gemahlen. (= Pigmentpräparation J-1)

**Beispiele 470 bis 500: Herstellung der Pigmentpräparationen J-2 bis J-32 (nicht erfindungsgemäß und erfindungsgemäß)**

Analog zu Beispiel 469 wurden in den Beispielen 469 bis 500 erfindungsgemäße und nicht erfindungsgemäße Pigmentpräparationen J-2 bis J-32 hergestellt. Dabei wurde jeweils eine wässrige Suspension des Pigments J, wie sie nach Schritt c) des Beispiels 10 anfiel, mit unterschiedlichen aliphatischen Carbonsäuren B) oder deren Gemischen in unterschiedlichen Mengen, wie in Tab.2 angegeben, versetzt.

**Bestimmung der Farbstärke und des Druckfilterwerts**

Für die Pigmentpräparationen J-1 bis J-32 wurde jeweils die Farbstärke im Vergleich zu Pigment I und der Druckfilterwert nach den unten angegebenen Vorschriften 1 und 2 ermittelt. Die Werte finden sich ebenfalls in Tab.12.

**Tab.12: Pigmentpräparationen mit Pigment J**

| Beispiel | Pigmentpräparation | Erfindungs gemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 469 | J-1 | nein | 70 | Pristerene® 4910 | 95 | 15,6 |
| 470 | J-2 | ja | 120 | Pristerene® 4910 | 106 | 3,0 |
| 471 | J-3 | ja | 210 | Pristerene® 4910 | 106 | 3,0 |
| 472 | J-4 | nein | 280 | Pristerene® 4910 | 92 | 3,1 |
| 473 | J-5 | nein | 150 | Caprylsäure | 92 | 15,2 |
| 474 | J-6 | nein | 210 | Caprylsäure | 91 | 15,2 |
| 475 | J-7 | nein | 150 | Nervonsäure | 92 | 15,6 |
| 476 | J-8 | nein | 210 | Nervonsäure | 91 | 15,7 |
| 477 | J-9 | nein | 70 | Caprinsäure | 93 | 15,6 |
| 478 | J-10 | ja | 120 | Caprinsäure | 105 | 3,3 |
| 479 | J-11 | ja | 250 | Caprinsäure | 105 | 3,3 |
| 480 | J-12 | nein | 280 | Caprinsäure | 93 | 3,3 |
| 481 | J-13 | nein | 70 | Palmitinsäure | 94 | 15,6 |
| 482 | J-14 | ja | 120 | Palmitinsäure | 106 | 3,0 |
| 483 | J-15 | ja | 210 | Palmitinsäure | 106 | 3,0 |
| 484 | J-16 | nein | 280 | Palmitinsäure | 95 | 3,1 |
| 485 | J-17 | nein | 70 | Stearinsäure | 95 | 15,7 |
| 486 | J-18 | ja | 150 | Stearinsäure | 106 | 3,1 |
| 487 | J-19 | ja | 210 | Stearinsäure | 105 | 3,1 |
| 488 | J-20 | nein | 280 | Stearinsäure | 96 | 3,0 |
| 489 | J-21 | nein | 70 | Behensäure | 96 | 15,9 |
| 490 | J-22 | ja | 100 | Behensäure | 105 | 3,3 |

(fortgesetzt)

| Beispiel | Pigmentpräparation | Erfindungs gemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 491 | J-23 | ja | 210 | Behensäure | 105 | 3,3 |
| 492 | J-24 | nein | 280 | Behensäure | 94 | 3,4 |
| 493 | J-25 | nein | 70 | Ölsäure | 93 | 15,8 |
| 494 | J-26 | ja | 120 | Ölsäure | 104 | 3,3 |
| 495 | J-27 | ja | 210 | Ölsäure | 104 | 3,4 |
| 496 | J-28 | nein | 280 | Ölsäure | 93 | 3,4 |
| 497 | J-29 | nein | 70 | Undecylensäure | 94 | 16,1 |
| 498 | J-30 | ja | 120 | Undecylensäure | 105 | 3,4 |
| 499 | J-31 | ja | 210 | Undecylensäure | 105 | 3,3 |
| 500 | J-32 | nein | 280 | Undecylensäure | 94 | 3,3 |

**Beispiel 501: Herstellung der Pigmentpräparation K-1 (nicht erfindungsgemäß)**

Eine wässrige Suspension des Pigments K, wie sie nach Schritt c) des Beispiels 11 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80°C im Vakuumtrockenschrank getrocknet und in einer üblichen Labormühle ca. 2 Minuten gemahlen. (= Pigmentpräparation K-1)

**Beispiele 502 bis 532: Herstellung der Pigmentpräparationen K-2 bis K-32 (nicht erfindungsgemäß und erfindungsgemäß)**

Analog zu Beispiel 501 wurden in den Beispielen 502 bis 532 erfindungsgemäße und nicht erfindungsgemäße Pigmentpräparationen K-2 bis K-32 hergestellt. Dabei wurde jeweils eine wässrige Suspension des Pigments K, wie sie nach Schritt c) des Beispiels 11 anfiel, mit unterschiedlichen aliphatischen Carbonsäuren B) oder deren Gemischen in unterschiedlichen Mengen, wie in Tab.13 angegeben, versetzt.

**Bestimmung der Farbstärke und des Druckfilterwerts**

Für die Pigmentpräparationen K-1 bis K-32 wurde jeweils die Farbstärke im Vergleich zu Pigment K und der Druckfilterwert nach den unten angegebenen Vorschriften 1 und 2 ermittelt. Die Werte finden sich ebenfalls in Tab.13.

**Tab.13: Pigmentpräparationen mit Pigment K**

| Beispiel | Pigment-präparation | Erfindungsgemäß | Gramm aliphatische Carbonsäure B) bzw. Gemisch pro Mol Pigment | Aliphatische Carbonsäure B) bzw. Gemisch | Farb-Stärke [%] | FPV [bar/g] |
|---|---|---|---|---|---|---|
| 501 | K-1 | nein | 70 | Pristerene® 4910 | 95 | 15,6 |
| 502 | K-2 | ja | 120 | Pristerene® 4910 | 106 | 3,0 |
| 503 | K-3 | ja | 210 | Pristerene® 4910 | 106 | 3,0 |
| 504 | K-4 | nein | 280 | Pristerene® 4910 | 92 | 3,1 |
| 505 | K-5 | nein | 150 | Caprylsäure | 92 | 15,2 |
| 506 | K-6 | nein | 210 | Caprylsäure | 91 | 15,2 |

(fortgesetzt)

| Beispiel | Pigment-präparation | Erfindungsgemäß | Gramm aliphatische Carbonsäure B) bzw. Gemisch pro Mol Pigment | Aliphatische Carbonsäure B) bzw. Gemisch | Farb-Stärke [%] | FPV [bar/g] |
|---|---|---|---|---|---|---|
| 507 | K-7 | nein | 150 | Nervonsäure | 92 | 15,6 |
| 508 | K-8 | nein | 210 | Nervonsäure | 91 | 15,7 |
| 509 | K-9 | nein | 70 | Myristinsäure | 93 | 15,6 |
| 510 | K-10 | ja | 120 | Myristinsäure | 105 | 3,3 |
| 511 | K-11 | ja | 250 | Myristinsäure | 105 | 3,3 |
| 512 | K-12 | nein | 280 | Myristinsäure | 93 | 3,3 |
| 513 | K-13 | nein | 70 | Palmitinsäure | 94 | 15,6 |
| 514 | K-14 | ja | 120 | Palmitinsäure | 106 | 3,0 |
| 515 | K-15 | ja | 210 | Palmitinsäure | 106 | 3,0 |
| 516 | K-16 | nein | 280 | Palmitinsäure | 95 | 3,1 |
| 517 | K-17 | nein | 70 | Stearinsäure | 95 | 15,7 |
| 518 | K-18 | ja | 150 | Stearinsäure | 106 | 3,1 |
| 519 | K-19 | ja | 210 | Stearinsäure | 105 | 3,1 |
| 520 | K-20 | nein | 280 | Stearinsäure | 96 | 3,0 |
| 521 | K-21 | nein | 70 | Behensäure | 96 | 15,9 |
| 522 | K-22 | ja | 100 | Behensäure | 105 | 3,3 |
| 523 | K-23 | ja | 210 | Behensäure | 105 | 3,3 |
| 524 | K-24 | nein | 280 | Behensäure | 94 | 3,4 |
| 525 | K-25 | nein | 70 | Ölsäure | 93 | 15,8 |
| 526 | K-26 | ja | 120 | Ölsäure | 104 | 3,3 |
| 527 | K-27 | ja | 210 | Ölsäure | 104 | 3,4 |
| 528 | K-28 | nein | 280 | Ölsäure | 93 | 3,3 |
| 529 | K-29 | nein | 70 | Undecylensäure | 94 | 16,0 |
| 530 | K-30 | ja | 120 | Undecylensäure | 105 | 3,4 |
| 531 | K-31 | ja | 210 | Undecylensäure | 105 | 3,4 |
| 532 | K-32 | nein | 280 | Undecylensäure | 94 | 3,3 |

**Beispiel 533: Herstellung der Pigmentpräparation L-1 (nicht erfindungsgemäß)**

Eine wässrige Suspension des Pigments L, wie sie nach Schritt c) des Beispiels 12 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80°C im Vakuumtrockenschrank getrocknet und in einer üblichen Labormühle ca. 2 Minuten gemahlen. (= Pigmentpräparation L-1)

**Beispiele 534 bis 563: Herstellung der Pigmentpräparationen L-2 bis L-32 (nicht erfindungsgemäß)**

Analog zu Beispiel 530 wurden in den Beispielen 531 bis 561 nicht erfindungsgemäße Pigmentpräparationen L-2 bis L-32 hergestellt. Dabei wurde jeweils eine wässrige Suspension des Pigments L, wie sie nach Schritt c) des Beispiels 12 anfiel, mit unterschiedlichen aliphatischen Carbonsäuren B) oder deren Gemischen in unterschiedlichen Mengen, wie in Tab.14 angegeben, versetzt.

**Bestimmung der Farbstärke und des Druckfilterwerts**

Für die Pigmentpräparationen L-1 bis L-32 wurde jeweils die Farbstärke im Vergleich zu Pigment L und der Druckfilterwert nach den unten angegebenen Vorschriften 1 und 2 ermittelt. Die Werte finden sich ebenfalls in Tab.14.

**Tab.14: Pigmentpräparationen mit Pigment L**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 533 | L-1 | nein | 70 | Pristerene® 4910 | 94 | 15,6 |
| 534 | L-2 | nein | 100 | Pristerene® 4910 | 92 | 15,4 |
| 535 | L-3 | nein | 210 | Pristerene® 4910 | 91 | 15,6 |
| 536 | L-4 | nein | 280 | Pristerene® 4910 | 90 | 15,6 |
| 537 | L-5 | nein | 70 | Caprylsäure | 94 | 16,1 |
| 538 | L-6 | nein | 250 | Caprylsäure | 92 | 15,8 |
| 539 | L-7 | nein | 70 | Nervonsäure | 94 | 15,4 |
| 540 | L-8 | nein | 250 | Nervonsäure | 93 | 15,6 |
| 541 | L-9 | nein | 70 | Myristinsäure | 94 | 15,6 |
| 542 | L-10 | nein | 100 | Myristinsäure | 92 | 15,3 |
| 543 | L-11 | nein | 150 | Myristinsäure | 90 | 15,1 |
| 544 | L-12 | nein | 280 | Myristinsäure | 90 | 15,3 |
| 545 | L-13 | nein | 100 | Palmitinsäure | 94 | 15,5 |
| 546 | L-14 | nein | 150 | Palmitinsäure | 92 | 15,6 |
| 547 | L-15 | nein | 210 | Palmitinsäure | 91 | 15,1 |
| 548 | L-16 | nein | 280 | Palmitinsäure | 90 | 15,9 |
| 549 | L-17 | nein | 70 | Stearinsäure | 94 | 15,8 |
| 550 | L-18 | nein | 100 | Stearinsäure | 91 | 15,6 |
| 551 | L-19 | nein | 210 | Stearinsäure | 90 | 15,6 |
| 552 | L-20 | nein | 280 | Stearinsäure | 89 | 15,8 |
| 553 | L-21 | nein | 100 | Behensäure | 93 | 15,4 |
| 554 | L-22 | nein | 150 | Behensäure | 90 | 15,3 |
| 555 | L-23 | nein | 210 | Behensäure | 90 | 15,2 |
| 556 | L-24 | nein | 250 | Behensäure | 89 | 15,2 |
| 557 | L-25 | nein | 100 | Ölsäure | 94 | 16,1 |
| 558 | L-26 | nein | 150 | Ölsäure | 92 | 15,2 |
| 559 | L-27 | nein | 210 | Ölsäure | 90 | 15,4 |
| 560 | L-28 | nein | 280 | Ölsäure | 90 | 15,6 |
| 561 | L-29 | nein | 50 | Undecylensäure | 93 | 15,6 |
| 562 | L-30 | nein | 100 | Undecylensäure | 92 | 15,8 |
| 563 | L-31 | nein | 210 | Undecylensäure | 92 | 15,2 |
| 564 | L-32 | nein | 235 | Undecylensäure | 90 | 15,4 |

**Beispiel 565: Herstellung der Pigmentpräparation M-1 (nicht erfindungsgemäß)**

Eine wässrige Suspension des Pigments M, wie sie nach Schritt b) des Beispiels 13 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80°C im Vakuumtrockenschrank getrocknet und in einer üblichen Labormühle ca. 2 Minuten gemahlen. (= Pigmentpräparation M-1)

**Beispiele 566 bis 593: Herstellung der Pigmentpräparationen M-2 bis M-32 (nicht erfindungsgemäß)**

Analog zu Beispiel 565 wurden in den Beispielen 563 bis 593 erfindungsgemäße und nicht erfindungsgemäße Pigmentpräparationen M-2 bis M-32 hergestellt. Dabei wurde jeweils eine wässrige Suspension des Pigments M, wie sie nach Schritt b) des Beispiels 13 anfiel, mit unterschiedlichen aliphatischen Carbonsäuren B) oder deren Gemischen in unterschiedlichen Mengen, wie in Tab.15 angegeben, versetzt.

**Bestimmung der Farbstärke und des Druckfilterwerts**

Für die Pigmentpräparationen M-1 bis M-32 wurde jeweils die Farbstärke im Vergleich zu Pigment M und der Druckfilterwert nach den unten angegebenen Vorschriften 1 und 2 ermittelt. Die Werte finden sich ebenfalls in Tab.15

**Tab.15: Pigmentpräparationen mit Pigment M**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 565 | M-1 | nein | 70 | Pristerene® 4910 | 94 | 15,6 |
| 566 | M-2 | nein | 100 | Pristerene® 4910 | 92 | 15,4 |
| 567 | M-3 | nein | 210 | Pristerene® 4910 | 91 | 15,6 |
| 568 | M-4 | nein | 280 | Pristerene® 4910 | 90 | 15,8 |
| 569 | M-5 | nein | 70 | Caprylsäure | 94 | 16,1 |
| 570 | M-6 | nein | 210 | Caprylsäure | 92 | 15,8 |
| 571 | M-7 | nein | 70 | Nervonsäure | 94 | 15,4 |
| 572 | M-8 | nein | 210 | Nervonsäure | 93 | 15,6 |
| 573 | M-9 | nein | 70 | Myristinsäure | 94 | 15,6 |
| 574 | M-10 | nein | 100 | Myristinsäure | 92 | 15,3 |
| 575 | M-11 | nein | 150 | Myristinsäure | 90 | 15,3 |
| 576 | M-12 | nein | 280 | Myristinsäure | 90 | 15,3 |
| 577 | M-13 | nein | 70 | Palmitinsäure | 95 | 15,5 |
| 578 | M-14 | nein | 150 | Palmitinsäure | 92 | 15,6 |
| 579 | M-15 | nein | 210 | Palmitinsäure | 91 | 15,1 |
| 580 | M-16 | nein | 235 | Palmitinsäure | 90 | 15,9 |
| 581 | M-17 | nein | 70 | Stearinsäure | 94 | 15,8 |
| 582 | M-18 | nein | 100 | Stearinsäure | 91 | 15,6 |
| 583 | M-19 | nein | 210 | Stearinsäure | 90 | 15,6 |
| 584 | M-20 | nein | 235 | Stearinsäure | 89 | 15,8 |
| 585 | M-21 | nein | 70 | Behensäure | 93 | 15,4 |
| 586 | M-22 | nein | 150 | Behensäure | 91 | 15,3 |
| 587 | M-23 | nein | 210 | Behensäure | 90 | 15,2 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 588 | M-24 | nein | 280 | Behensäure | 90 | 15,2 |
| 589 | M-25 | nein | 70 | Ölsäure | 94 | 16,1 |
| 590 | M-26 | nein | 150 | Ölsäure | 92 | 15,2 |
| 591 | M-27 | nein | 210 | Ölsäure | 90 | 15,4 |
| 592 | M-28 | nein | 280 | Ölsäure | 90 | 15,6 |
| 593 | M-29 | nein | 70 | Undecylensäure | 93 | 15,6 |
| 591 | M-30 | nein | 100 | Undecylensäure | 92 | 15,8 |
| 592 | M-31 | nein | 210 | Undecylensäure | 92 | 15,4 |
| 593 | M-32 | nein | 280 | Undecylensäure | 90 | 15,8 |

**Beispiel 594: Herstellung der Pigmentpräparation N-1 (nicht erfindungsgemäß)**

Eine wässrige Suspension des Pigments N, wie sie nach Schritt b) des Beispiels 14 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80°C im Vakuumtrockenschrank getrocknet und in einer üblichen Labormühle ca. 2 Minuten gemahlen. (= Pigmentpräparation N-1)

**Beispiele 595 bis 597: Herstellung der Pigmentpräparationen N-2 bis N-32 (nicht erfindungsgemäß)**

Analog zu Beispiel 594 wurden in den Beispielen 595 bis 625 erfindungsgemäße und nicht erfindungsgemäße Pigmentpräparationen N-2 bis N-32 hergestellt. Dabei wurde jeweils eine wässrige Suspension des Pigments N, wie sie nach Schritt b) des Beispiels 14 anfiel, mit unterschiedlichen aliphatischen Carbonsäuren B) oder deren Gemischen in unterschiedlichen Mengen, wie in Tab.16 angegeben, versetzt.

**Bestimmung der Farbstärke und des Druckfilterwerts**

Für die Pigmentpräparationen N-1 bis N-32 wurde jeweils die Farbstärke im Vergleich zu Pigment N und der Druckfilterwert nach den unten angegebenen Vorschriften 1 und 2 ermittelt. Die Werte finden sich ebenfalls in Tab.16.

**Tab.16: Pigmentpräparationen mit Pigment N**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 594 | N-1 | nein | 70 | Pristerene® 4910 | 94 | 15,6 |
| 595 | N-2 | nein | 100 | Pristerene® 4910 | 92 | 15,4 |
| 596 | N-3 | nein | 210 | Pristerene® 4910 | 91 | 15,6 |
| 597 | N-4 | nein | 280 | Pristerene® 4910 | 90 | 15,8 |
| 598 | N-5 | nein | 70 | Caprylsäure | 94 | 16,1 |
| 599 | N-6 | nein | 210 | Caprylsäure | 92 | 15,8 |
| 600 | N-7 | nein | 70 | Nervonsäure | 94 | 15,4 |
| 601 | N-8 | nein | 210 | Nervonsäure | 93 | 15,6 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 602 | N-9 | nein | 70 | Myristinsäure | 94 | 15,6 |
| 603 | N-10 | nein | 120 | Myristinsäure | 92 | 15,3 |
| 604 | N-11 | nein | 150 | Myristinsäure | 90 | 15,3 |
| 605 | N-12 | nein | 280 | Myristinsäure | 90 | 15,3 |
| 606 | N-13 | nein | 70 | Palmitinsäure | 95 | 15,5 |
| 607 | N-14 | nein | 150 | Palmitinsäure | 92 | 15,6 |
| 608 | N-15 | nein | 210 | Palmitinsäure | 91 | 15,8 |
| 609 | N-16 | nein | 250 | Palmitinsäure | 90 | 15,9 |
| 610 | N-17 | nein | 50 | Stearinsäure | 94 | 15,8 |
| 611 | N-18 | nein | 100 | Stearinsäure | 91 | 15,6 |
| 612 | N-19 | nein | 210 | Stearinsäure | 90 | 15,6 |
| 613 | N-20 | nein | 280 | Stearinsäure | 89 | 15,8 |
| 614 | N-21 | nein | 70 | Behensäure | 93 | 15,4 |
| 615 | N-22 | nein | 150 | Behensäure | 91 | 15,3 |
| 616 | N-23 | nein | 210 | Behensäure | 90 | 15,2 |
| 617 | N-24 | nein | 280 | Behensäure | 90 | 15,2 |
| 618 | N-25 | nein | 70 | Ölsäure | 94 | 16,1 |
| 619 | N-26 | nein | 150 | Ölsäure | 92 | 15,2 |
| 620 | N-27 | nein | 210 | Ölsäure | 90 | 15,4 |
| 621 | N-28 | nein | 250 | Ölsäure | 90 | 15,2 |
| 622 | N-29 | nein | 70 | Undecylensäure | 93 | 15,6 |
| 623 | N-30 | nein | 100 | Undecylensäure | 92 | 15,8 |
| 624 | N-31 | nein | 210 | Undecylensäure | 92 | 15,4 |
| 625 | N-32 | nein | 280 | Undecylensäure | 90 | 15,8 |

**Beispiel 626: Herstellung der Pigmentpräparation O-1 (nicht erfindungsgemäß)**

Eine wässrige Suspension des Pigments O, wie sie nach Schritt b) des Beispiels 11 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80°C im Vakuumtrockenschrank getrocknet und in einer üblichen Labormühle ca. 2 Minuten gemahlen. (= Pigmentpräparation O-1)

**Beispiele 627 bis 657: Herstellung der Pigmentpräparationen O-2 bis O-32 (nicht erfindungsgemäß)**

Analog zu Beispiel 626 wurden in den Beispielen **627 bis 657** erfindungsgemäße und nicht erfindungsgemäße Pigmentpräparationen O-2 bis O-32 hergestellt. Dabei wurde jeweils eine wässrige Suspension des Pigments O, wie sie nach Schritt b) des Beispiels 15 anfiel, mit unterschiedlichen aliphatischen Carbonsäuren B) oder deren Gemischen in unterschiedlichen Mengen, wie in Tab.17 angegeben, versetzt.

**Bestimmung der Farbstärke und des Druckfilterwerts**

Für die Pigmentpräparationen O-1 bis O-32 wurde jeweils die Farbstärke im Vergleich zu Pigment O und der Druckfilterwert nach den unten angegebenen Vorschriften 1 und 2 ermittelt. Die Werte finden sich ebenfalls in Tab.17.

**Tab.17: Pigmentpräparationen mit Pigment O**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 626 | O-1 | nein | 70 | Pristerene® 4910 | 94 | 15,6 |
| 627 | O-2 | nein | 100 | Pristerene® 4910 | 92 | 15,4 |
| 628 | O-3 | nein | 210 | Pristerene® 4910 | 90 | 15,6 |
| 629 | O-4 | nein | 250 | Pristerene® 4910 | 90 | 15,6 |
| 630 | O-5 | nein | 70 | Caprylsäure | 94 | 16,1 |
| 631 | O-6 | nein | 210 | Caprylsäure | 92 | 15,8 |
| 632 | O-7 | nein | 70 | Nervonsäure | 94 | 15,4 |
| 633 | O-8 | nein | 210 | Nervonsäure | 92 | 15,6 |
| 634 | O-9 | nein | 70 | Myristinsäure | 94 | 15,6 |
| 635 | O-10 | nein | 120 | Myristinsäure | 92 | 15,3 |
| 636 | O-11 | nein | 180 | Myristinsäure | 91 | 15,1 |
| 637 | O-12 | nein | 250 | Myristinsäure | 90 | 15,3 |
| 638 | O-13 | nein | 120 | Palmitinsäure | 94 | 15,5 |
| 639 | O-14 | nein | 150 | Palmitinsäure | 92 | 15,6 |
| 640 | O-15 | nein | 210 | Palmitinsäure | 91 | 15,1 |
| 641 | O-16 | nein | 250 | Palmitinsäure | 90 | 15,9 |
| 642 | O-17 | nein | 70 | Stearinsäure | 94 | 15,8 |
| 643 | O-18 | nein | 100 | Stearinsäure | 91 | 15,4 |
| 644 | O-19 | nein | 210 | Stearinsäure | 91 | 15,6 |
| 645 | O-20 | nein | 280 | Stearinsäure | 90 | 15,8 |
| 646 | O-21 | nein | 70 | Behensäure | 93 | 15,4 |
| 647 | O-22 | nein | 150 | Behensäure | 90 | 15,3 |
| 648 | O-23 | nein | 210 | Behensäure | 90 | 15,2 |
| 649 | O-24 | nein | 250 | Behensäure | 89 | 15,6 |
| 650 | O-25 | nein | 70 | Ölsäure | 94 | 16,1 |
| 651 | O-26 | nein | 120 | Ölsäure | 92 | 15,2 |
| 652 | O-27 | nein | 210 | Ölsäure | 90 | 15,4 |
| 653 | O-28 | nein | 280 | Ölsäure | 90 | 15,8 |
| 654 | O-29 | nein | 70 | Undecylensäure | 93 | 15,6 |
| 655 | O-30 | nein | 100 | Undecylensäure | 92 | 15,8 |
| 656 | O-31 | nein | 250 | Undecylensäure | 92 | 15,4 |
| 657 | O-32 | nein | 280 | Undecylensäure | 90 | 15,4 |

**Beispiel 658: Herstellung der Pigmentpräparation P-1 (nicht erfindungsgemäß)**

Eine wässrige Suspension des Pigments P, wie sie nach Schritt b) des Beispiels 16 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80°C im Vakuumtrockenschrank getrocknet und in einer üblichen Labormühle ca. 2 Minuten gemahlen. (= Pigmentpräparation P-1)

**Beispiele 659 bis 689: Herstellung der Pigmentpräparationen P-2 bis P-32 (nicht erfindungsgemäß und erfindungsgemäß)**

Analog zu Beispiel 658 wurden in den Beispielen **659 bis 689** erfindungsgemäße und nicht erfindungsgemäße Pigmentpräparationen P-2 bis P-32 hergestellt. Dabei wurde jeweils eine wässrige Suspension des Pigments P, wie sie nach Schritt b) des Beispiels 16 anfiel, mit unterschiedlichen aliphatischen Carbonsäuren B) oder deren Gemischen in unterschiedlichen Mengen, wie in Tab.18 angegeben, versetzt.

**Bestimmung der Farbstärke und des Druckfilterwerts**

Für die Pigmentpräparationen P-1 bis P-32 wurde jeweils die Farbstärke im Vergleich zu Pigment P und der Druckfilterwert nach den unten angegebenen Vorschriften 1 und 2 ermittelt. Die Werte finden sich ebenfalls in Tab.18

**Tab.18: Pigmentpräparationen mit Pigment P**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 658 | P-1 | nein | 70 | Pristerene® 4910 | 96 | 15,8 |
| 659 | P-2 | ja | 100 | Pristerene® 4910 | 114 | 2,9 |
| 660 | P-3 | ja | 210 | Pristerene® 4910 | 114 | 2,9 |
| 661 | P-4 | nein | 280 | Pristerene® 4910 | 111 | 3,0 |
| 662 | P-5 | nein | 70 | Caprylsäure | 95 | 15,5 |
| 663 | P-6 | nein | 210 | Caprylsäure | 95 | 15,6 |
| 664 | P-7 | nein | 70 | Nervonsäure | 90 | 15,8 |
| 665 | P-8 | nein | 280 | Nervonsäure | 87 | 15,6 |
| 666 | P-9 | nein | 70 | Myristinsäure | 95 | 15,2 |
| 667 | P-10 | ja | 100 | Myristinsäure | 112 | 3,4 |
| 668 | P-11 | ja | 150 | Myristinsäure | 112 | 3,3 |
| 669 | P-12 | nein | 280 | Myristinsäure | 95 | 3,3 |
| 670 | P-13 | nein | 70 | Palmitinsäure | 95 | 15,5 |
| 671 | P-14 | ja | 150 | Palmitinsäure | 113 | 3,0 |
| 672 | P-15 | ja | 210 | Palmitinsäure | 113 | 3,1 |
| 673 | P-16 | nein | 280 | Palmitinsäure | 94 | 3,2 |
| 674 | P-17 | nein | 70 | Stearinsäure | 94 | 15,2 |
| 675 | P-18 | ja | 100 | Stearinsäure | 112 | 3,0 |
| 676 | P-19 | ja | 210 | Stearinsäure | 113 | 3,0 |
| 677 | P-20 | nein | 280 | Stearinsäure | 96 | 3,1 |
| 678 | P-21 | nein | 70 | Behensäure | 95 | 15,6 |
| 679 | P-22 | ja | 150 | Behensäure | 111 | 3,2 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 680 | P-23 | ja | 210 | Behensäure | 110 | 3,2 |
| 681 | P-24 | nein | 280 | Behensäure | 91 | 3,3 |
| 682 | P-25 | nein | 70 | Ölsäure | 96 | 15,6 |
| 683 | P-26 | ja | 100 | Ölsäure | 110 | 3,3 |
| 684 | P-27 | ja | 210 | Ölsäure | 112 | 3,3 |
| 685 | P-28 | nein | 280 | Ölsäure | 96 | 3,3 |
| 686 | P-29 | nein | 50 | Undecylensäure | 95 | 15,9 |
| 687 | P-30 | ja | 100 | Undecylensäure | 111 | 3,2 |
| 688 | P-31 | ja | 235 | Undecylensäure | 112 | 3,2 |
| 689 | P-32 | nein | 280 | Undecylensäure | 92 | 3,3 |

**Beispiel 690: Herstellung der Pigmentpräparation Q-1 (nicht erfindungsgemäß)**

Eine wässrige Suspension des Pigments Q, wie sie nach Schritt b) des Beispiels 17 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80°C im Vakuumtrockenschrank getrocknet und in einer üblichen Labormühle ca. 2 Minuten gemahlen. (= Pigmentpräparation Q-1)

**Beispiele 691 bis 721: Herstellung der Pigmentpräparationen Q-2 bis Q-32 (nicht erfindungsgemäß und erfindungsgemäß)**

Analog zu Beispiel 690 wurden in den Beispielen **691 bis 721** erfindungsgemäße und nicht erfindungsgemäße Pigmentpräparationen Q-2 bis Q-32 hergestellt. Dabei wurde jeweils eine wässrige Suspension des Pigments Q, wie sie nach Schritt b) des Beispiels 17 anfiel, mit unterschiedlichen aliphatischen Carbonsäuren B) oder deren Gemischen in unterschiedlichen Mengen, wie in Tab.19 angegeben, versetzt.

<u>**Bestimmung der Farbstärke und des Druckfilterwerts**</u>

Für die Pigmentpräparationen Q-1 bis Q-32 wurde jeweils die Farbstärke im Vergleich zu Pigment Q und der Druckfilterwert nach den unten angegebenen Vorschriften 1 und 2 ermittelt. Die Werte finden sich ebenfalls in Tab.19.

<u>**Tab.19: Pigmentpräparationen mit Pigment Q**</u>

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 690 | Q-1 | nein | 70 | Pristerene® 4910 | 96 | 15,1 |
| 691 | Q-2 | ja | 120 | Pristerene® 4910 | 119 | 3,1 |
| 692 | Q-3 | ja | 250 | Pristerene® 4910 | 118 | 3,2 |
| 693 | Q-4 | nein | 280 | Pristerene® 4910 | 95 | 3,2 |
| 694 | Q-5 | nein | 70 | Caprylsäure | 95 | 15,6 |
| 695 | Q-6 | nein | 210 | Caprylsäure | 92 | 15,5 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 696 | Q-7 | nein | 100 | Nervonsäure | 96 | 15,4 |
| 697 | Q-8 | nein | 210 | Nervonsäure | 91 | 15,1 |
| 698 | Q-9 | nein | 70 | Myristinsäure | 95 | 15,2 |
| 699 | Q-10 | ja | 120 | Myristinsäure | 116 | 3,1 |
| 700 | Q-11 | ja | 210 | Myristinsäure | 116 | 3,2 |
| 701 | Q-12 | nein | 280 | Myristinsäure | 96 | 3,2 |
| 702 | Q-13 | nein | 70 | Palmitinsäure | 95 | 15,6 |
| 703 | Q-14 | ja | 150 | Palmitinsäure | 119 | 3,0 |
| 704 | Q-15 | ja | 250 | Palmitinsäure | 119 | 3,0 |
| 705 | Q-16 | nein | 280 | Palmitinsäure | 96 | 3,0 |
| 706 | Q-17 | nein | 70 | Stearinsäure | 95 | 15,5 |
| 707 | Q-18 | ja | 120 | Stearinsäure | 119 | 3,1 |
| 708 | Q-19 | ja | 180 | Stearinsäure | 118 | 3,1 |
| 709 | Q-20 | nein | 280 | Stearinsäure | 96 | 3,2 |
| 710 | Q-21 | nein | 70 | Behensäure | 94 | 15,9 |
| 711 | Q-22 | ja | 180 | Behensäure | 115 | 3,3 |
| 712 | Q-23 | ja | 250 | Behensäure | 114 | 3,3 |
| 713 | Q-24 | nein | 280 | Behensäure | 95 | 3,3 |
| 714 | Q-25 | nein | 70 | Ölsäure | 95 | 15,7 |
| 715 | Q-26 | ja | 100 | Ölsäure | 115 | 3,2 |
| 716 | Q-27 | ja | 210 | Ölsäure | 114 | 3,3 |
| 717 | Q-28 | nein | 280 | Ölsäure | 96 | 3,3 |
| 718 | Q-29 | nein | 70 | Undecylensäure | 95 | 16,1 |
| 719 | Q-30 | ja | 120 | Undecylensäure | 113 | 3,3 |
| 720 | Q-31 | ja | 250 | Undecylensäure | 112 | 3,4 |
| 721 | Q-32 | nein | 280 | Undecylensäure | 94 | 3,4 |

**Beispiel 722: Herstellung der Pigmentpräparation R-1 (nicht erfindungsgemäß)**

Eine wässrige Suspension des Pigments R, wie sie nach Schritt b) des Beispiels 18 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80°C im Vakuumtrockenschrank getrocknet und in einer üblichen Labormühle ca. 2 Minuten gemahlen. (= Pigmentpräparation R-1)

**Beispiele 723 bis 753: Herstellung der Pigmentpräparationen R-2 bis R-32 (nicht erfindungsgemäß und erfindungsgemäß)**

Analog zu Beispiel 722 wurden in den Beispielen **723 bis 753** erfindungsgemäße und nicht erfindungsgemäße Pigmentpräparationen R-2 bis R-32 hergestellt. Dabei wurde jeweils eine wässrige Suspension des Pigments R, wie sie nach Schritt b) des Beispiels 18 anfiel, mit unterschiedlichen aliphatischen Carbonsäuren B) oder deren Gemischen in

unterschiedlichen Mengen, wie in Tab.20.

**Bestimmung der Farbstärke und des Druckfilterwerts**

Für die Pigmentpräparationen R-1 bis R-32 wurde jeweils die Farbstärke im Vergleich zu Pigment R und der Druckfilterwert nach den unten angegebenen Vorschriften 1 und 2 ermittelt. Die Werte finden sich ebenfalls in Tab.20.

**Tab.20: Pigmentpräparationen mit Pigment R**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 722 | R-1 | nein | 70 | Pristerene® 4910 | 94 | 15,2 |
| 723 | R-2 | ja | 120 | Pristerene® 4910 | 119 | 3,0 |
| 724 | R-3 | ja | 250 | Pristerene® 4910 | 118 | 3,0 |
| 725 | R-4 | nein | 280 | Pristerene® 4910 | 96 | 3,1 |
| 726 | R-5 | nein | 70 | Caprylsäure | 95 | 15,6 |
| 727 | R-6 | nein | 210 | Caprylsäure | 96 | 15,2 |
| 728 | R-7 | nein | 100 | Nervonsäure | 94 | 16,1 |
| 729 | R-8 | nein | 210 | Nervonsäure | 95 | 15,9 |
| 730 | R-9 | nein | 70 | Myristinsäure | 95 | 15,1 |
| 731 | R-10 | ja | 120 | Myristinsäure | 116 | 3,4 |
| 732 | R-11 | ja | 210 | Myristinsäure | 116 | 3,4 |
| 733 | R-12 | nein | 280 | Myristinsäure | 94 | 3,3 |
| 734 | R-13 | nein | 70 | Palmitinsäure | 95 | 16,1 |
| 735 | R-14 | ja | 150 | Palmitinsäure | 116 | 3,2 |
| 736 | R-15 | ja | 250 | Palmitinsäure | 118 | 3,2 |
| 737 | R-16 | nein | 280 | Palmitinsäure | 94 | 3,3 |
| 738 | R-17 | nein | 70 | Stearinsäure | 95 | 15,9 |
| 739 | R-18 | ja | 120 | Stearinsäure | 119 | 3,1 |
| 740 | R-19 | ja | 180 | Stearinsäure | 118 | 3,1 |
| 741 | R-20 | nein | 280 | Stearinsäure | 95 | 3,2 |
| 742 | R-21 | nein | 70 | Behensäure | 95 | 16,3 |
| 743 | R-22 | ja | 180 | Behensäure | 116 | 3,4 |
| 744 | R-23 | ja | 250 | Behensäure | 115 | 3,4 |
| 745 | R-24 | nein | 280 | Behensäure | 95 | 3,5 |
| 746 | R-25 | nein | 70 | Ölsäure | 94 | 16,5 |
| 747 | R-26 | ja | 100 | Ölsäure | 114 | 3,5 |
| 748 | R-27 | ja | 210 | Ölsäure | 114 | 3,5 |
| 749 | R-28 | nein | 280 | Ölsäure | 95 | 3,4 |
| 750 | R-29 | nein | 70 | Undecylensäure | 96 | 15,9 |
| 751 | R-30 | ja | 120 | Undecylensäure | 114 | 3,4 |
| 752 | R-31 | ja | 250 | Undecylensäure | 114 | 3,4 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 753 | R-32 | nein | 280 | Undecylensäure | 95 | 3,4 |

**Beispiel 754: Herstellung der Pigmentpräparation S-1 (nicht erfindungsgemäß)**

Eine wässrige Suspension des Pigments S, wie sie nach Schritt b) des Beispiels 19 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80°C im Vakuumtrockenschrank getrocknet und in einer üblichen Labormühle ca. 2 Minuten gemahlen. (= Pigmentpräparation S-1)

**Beispiele 754 bis 784: Herstellung der Pigmentpräparationen S-2 bis S-32 (nicht erfindungsgemäß und erfindungsgemäß)**

Analog zu Beispiel 727 wurden in den Beispielen **754 bis 784** erfindungsgemäße und nicht erfindungsgemäße Pigmentpräparationen S-2 bis S-32 hergestellt. Dabei wurde jeweils eine wässrige Suspension des Pigments S, wie sie nach Schritt b) des Beispiels 19 anfiel, mit unterschiedlichen aliphatischen Carbonsäuren B) oder deren Gemischen in unterschiedlichen Mengen, wie in Tab.21 angegeben, versetzt.

**Bestimmung der Farbstärke und des Druckfilterwerts**

Für die Pigmentpräparationen S-1 bis S-32 wurde jeweils die Farbstärke im Vergleich zu Pigment S und der Druckfilterwert nach den unten angegebenen Vorschriften 1 und 2 ermittelt. Die Werte finden sich ebenfalls in Tab.21

**Tab.21: Pigmentpräparationen mit Pigment S**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 754 | S-1 | nein | 70 | Pristerene® 4910 | 94 | 15,6 |
| 755 | S-2 | ja | 120 | Pristerene® 4910 | 117 | 3,2 |
| 756 | S-3 | ja | 250 | Pristerene® 4910 | 118 | 3,1 |
| 757 | S-4 | nein | 280 | Pristerene® 4910 | 95 | 3,1 |
| 758 | S-5 | nein | 70 | Caprylsäure | 94 | 16,1 |
| 759 | S-6 | nein | 210 | Caprylsäure | 95 | 16,2 |
| 760 | S-7 | nein | 100 | Nervonsäure | 95 | 15,9 |
| 761 | S-8 | nein | 210 | Nervonsäure | 93 | 15,8 |
| 762 | S-9 | nein | 70 | Myristinsäure | 96 | 15,8 |
| 763 | S-10 | ja | 120 | Myristinsäure | 114 | 3,3 |
| 764 | S-11 | ja | 210 | Myristinsäure | 114 | 3,4 |
| 765 | S-12 | nein | 280 | Myristinsäure | 96 | 3,4 |
| 766 | S-13 | nein | 70 | Palmitinsäure | 95 | 15,7 |
| 767 | S-14 | ja | 150 | Palmitinsäure | 117 | 3,3 |
| 768 | S-15 | ja | 250 | Palmitinsäure | 116 | 3,3 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 769 | S-16 | nein | 280 | Palmitinsäure | 95 | 3,4 |
| 770 | S-17 | nein | 70 | Stearinsäure | 96 | 15,8 |
| 771 | S-18 | ja | 120 | Stearinsäure | 118 | 3,2 |
| 772 | S-19 | ja | 180 | Stearinsäure | 117 | 3,2 |
| 773 | S-20 | nein | 280 | Stearinsäure | 95 | 3,2 |
| 774 | S-21 | nein | 70 | Behensäure | 94 | 3,2 |
| 775 | S-22 | ja | 180 | Behensäure | 115 | 15,8 |
| 776 | S-23 | ja | 250 | Behensäure | 114 | 3,4 |
| 777 | S-24 | nein | 280 | Behensäure | 93 | 3,4 |
| 778 | S-25 | nein | 70 | Ölsäure | 95 | 15,8 |
| 779 | S-26 | ja | 100 | Ölsäure | 113 | 3,3 |
| 780 | S-27 | ja | 210 | Ölsäure | 114 | 3,4 |
| 781 | S-28 | nein | 280 | Ölsäure | 94 | 3,4 |
| 782 | S-29 | nein | 70 | Undecylensäure | 95 | 15,6 |
| 783 | S-30 | ja | 120 | Undecylensäure | 112 | 3,2 |
| 784 | S-31 | ja | 250 | Undecylensäure | 113 | 3,2 |
| 784 | S-32 | nein | 280 | Undecylensäure | 94 | 3,2 |

**Beispiel 785: Herstellung der Pigmentpräparation T-1 (nicht erfindungsgemäß)**

Eine wässrige Suspension des Pigments T, wie sie nach Schritt b) des Beispiels 20 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80°C im Vakuumtrockenschrank getrocknet und in einer üblichen Labormühle ca. 2 Minuten gemahlen. (= Pigmentpräparation T-1)

**Beispiele 786 bis 816: Herstellung der Pigmentpräparationen T-2 bis T-32 (nicht erfindungsgemäß und erfindungsgemäß)**

Analog zu Beispiel 785 wurden in den Beispielen **785 bis 816** erfindungsgemäße und nicht erfindungsgemäße Pigmentpräparationen T-2 bis T-32 hergestellt. Dabei wurde jeweils eine wässrige Suspension des Pigments T, wie sie nach Schritt b) des Beispiels 20 anfiel, mit unterschiedlichen aliphatischen Carbonsäuren B) oder deren Gemischen in unterschiedlichen Mengen, wie in Tab.22 angegeben, versetzt.

<u>**Bestimmung der Farbstärke und des Druckfilterwerts**</u>

Für die Pigmentpräparationen T-1 bis T-32 wurde jeweils die Farbstärke im Vergleich zu Pigment T und der Druckfilterwert nach den unten angegebenen Vorschriften 1 und 2 ermittelt. Die Werte finden sich ebenfalls in Tab.22.

Tab.22: Pigmentpräparationen mit Pigment T

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 785 | T-1 | nein | 70 | Pristerene® 4910 | 94 | 16,1 |
| 786 | T-2 | ja | 100 | Pristerene® 4910 | 118 | 3,0 |
| 787 | T-3 | ja | 210 | Pristerene® 4910 | 118 | 2,9 |
| 788 | T-4 | nein | 280 | Pristerene® 4910 | 93 | 3,0 |
| 789 | T-5 | nein | 70 | Caprylsäure | 94 | 16,3 |
| 790 | T-6 | nein | 210 | Caprylsäure | 113 | 16,2 |
| 791 | T-7 | nein | 70 | Nervonsäure | 113 | 16,4 |
| 792 | T-8 | nein | 280 | Nervonsäure | 94 | 16,3 |
| 793 | T-9 | nein | 70 | Myristinsäure | 95 | 15,8 |
| 794 | T-10 | ja | 120 | Myristinsäure | 113 | 3,4 |
| 795 | T-11 | ja | 150 | Myristinsäure | 114 | 3,4 |
| 796 | T-12 | nein | 280 | Myristinsäure | 95 | 3,5 |
| 797 | T-13 | nein | 70 | Palmitinsäure | 96 | 15,7 |
| 798 | T-14 | ja | 150 | Palmitinsäure | 119 | 3,1 |
| 799 | T-15 | ja | 250 | Palmitinsäure | 118 | 3,1 |
| 800 | T-16 | nein | 280 | Palmitinsäure | 96 | 3,1 |
| 801 | T-17 | nein | 70 | Stearinsäure | 95 | 15,5 |
| 802 | T-18 | ja | 150 | Stearinsäure | 117 | 3,0 |
| 803 | T-19 | ja | 250 | Stearinsäure | 118 | 3,0 |
| 804 | T-20 | nein | 280 | Stearinsäure | 94 | 3,1 |
| 805 | T-21 | nein | 70 | Behensäure | 93 | 16,3 |
| 806 | T-22 | ja | 150 | Behensäure | 115 | 3,4 |
| 807 | T-23 | ja | 210 | Behensäure | 114 | 3,4 |
| 808 | T-24 | nein | 280 | Behensäure | 113 | 3,5 |
| 809 | T-25 | nein | 70 | Ölsäure | 96 | 16,3 |
| 810 | T-26 | ja | 120 | Ölsäure | 113 | 3,3 |
| 811 | T-27 | ja | 180 | Ölsäure | 113 | 3,3 |
| 812 | T-28 | nein | 280 | Ölsäure | 92 | 3,3 |
| 813 | T-29 | nein | 70 | Undecylensäure | 94 | 15,9 |
| 814 | T-30 | ja | 100 | Undecylensäure | 113 | 3,4 |
| 815 | T-31 | ja | 250 | Undecylensäure | 113 | 3,4 |
| 816 | T-32 | nein | 280 | Undecylensäure | 95 | 3,4 |

**Beispiel 817: Herstellung der Pigmentpräparation U-1 (nicht erfindungsgemäß)**

Eine wässrige Suspension des Pigments U, wie sie nach Schritt b) des Beispiels 21 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80°C im Vakuumtrockenschrank getrocknet und in einer üblichen Labormühle ca. 2 Minuten gemahlen. (= Pigmentpräparation U-1)

**Beispiele 817 bis 848: Herstellung der Pigmentpräparationen U-2 bis U-32 (nicht erfindungsgemäß und erfindungsgemäß)**

Analog zu Beispiel 793 wurden in den Beispielen **817 bis 848** erfindungsgemäße und nicht erfindungsgemäße Pigmentpräparationen U-2 bis U-32 hergestellt. Dabei wurde jeweils eine wässrige Suspension des Pigments U, wie sie nach Schritt b) des Beispiels 21 anfiel, mit unterschiedlichen aliphatischen Carbonsäuren B) oder deren Gemischen in unterschiedlichen Mengen, wie in Tab.23 angegeben, versetzt.

**Bestimmung der Farbstärke und des Druckfilterwerts**

Für die Pigmentpräparationen U-1 bis U-32 wurde jeweils die Farbstärke im Vergleich zu Pigment U und der Druckfilterwert nach den unten angegebenen Vorschriften 1 und 2 ermittelt. Die Werte finden sich ebenfalls in Tab.23.

**Tab.23: Pigmentpräparationen mit Pigment U**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 817 | U-1 | nein | 70 | Pristerene® 4910 | 95 | 15,6 |
| 818 | U-2 | ja | 180 | Pristerene® 4910 | 112 | 3,1 |
| 819 | U-3 | ja | 250 | Pristerene® 4910 | 112 | 3,1 |
| 820 | U-4 | nein | 280 | Pristerene® 4910 | 95 | 3,2 |
| 821 | U-5 | nein | 70 | Caprylsäure | 94 | 15,6 |
| 822 | U-6 | nein | 210 | Caprylsäure | 93 | 15,8 |
| 823 | U-7 | nein | 70 | Nervonsäure | 95 | 16,1 |
| 824 | U-8 | nein | 250 | Nervonsäure | 95 | 16,0 |
| 825 | U-9 | nein | 70 | Myristinsäure | 95 | 15,9 |
| 826 | U-10 | ja | 120 | Myristinsäure | 115 | 3,3 |
| 827 | U-11 | ja | 180 | Myristinsäure | 115 | 3,3 |
| 828 | U-12 | nein | 280 | Myristinsäure | 95 | 3,4 |
| 829 | U-13 | nein | 70 | Palmitinsäure | 96 | 15,6 |
| 830 | U-14 | ja | 150 | Palmitinsäure | 118 | 3,2 |
| 831 | U-15 | ja | 210 | Palmitinsäure | 118 | 3,2 |
| 832 | U-16 | nein | 280 | Palmitinsäure | 95 | 3,2 |
| 833 | U-17 | nein | 70 | Stearinsäure | 96 | 15,6 |
| 834 | U-18 | ja | 150 | Stearinsäure | 116 | 3,1 |
| 835 | U-19 | ja | 250 | Stearinsäure | 95 | 3,2 |
| 836 | U-20 | nein | 280 | Stearinsäure | 90 | 3,2 |
| 837 | U-21 | nein | 70 | Behensäure | 96 | 15,3 |
| 838 | U-22 | ja | 120 | Behensäure | 113 | 3,4 |
| 839 | U-23 | ja | 210 | Behensäure | 114 | 3,4 |
| 840 | U-24 | nein | 280 | Behensäure | 95 | 3,4 |
| 841 | U-25 | nein | 70 | Ölsäure | 95 | 15,6 |
| 842 | U-26 | ja | 120 | Ölsäure | 112 | 3,3 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 843 | U-27 | ja | 210 | Ölsäure | 111 | 3,2 |
| 844 | U-28 | nein | 280 | Ölsäure | 96 | 3,2 |
| 845 | U-29 | nein | 70 | Undecylensäure | 96 | 15,9 |
| 846 | U-30 | ja | 150 | Undecylensäure | 113 | 3,4 |
| 847 | U-31 | ja | 250 | Undecylensäure | 113 | 3,4 |
| 848 | U-32 | nein | 280 | Undecylensäure | 95 | 3,3 |

**Beispiel 849: Herstellung der Pigmentpräparation V-1 (nicht erfindungsgemäß)**

Eine wässrige Suspension des Pigments U, wie sie nach Schritt b) des Beispiels 22 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80 °C im Vakuumtrockenschrank getrocknet und in einer üblichen Labormühle ca. 2 Minuten gemahlen. (= Pigmentpräparation V-1)

**Beispiele 850 bis 880: Herstellung der Pigmentpräparationen V-2 bis V-32 (nicht erfindungsgemäß und erfindungsgemäß)**

Analog zu Beispiel 849 wurden in den Beispielen **850 bis 880** erfindungsgemäße und nicht erfindungsgemäße Pigmentpräparationen V-2 bis V-32 hergestellt. Dabei wurde jeweils eine wässrige Suspension des Pigments V, wie sie nach Schritt b) des Beispiels 22 anfiel, mit unterschiedlichen aliphatischen Carbonsäuren B) oder deren Gemischen in unterschiedlichen Mengen, wie in Tab.24 angegeben, versetzt.

**Bestimmung der Farbstärke und des Druckfilterwerts**

Für die Pigmentpräparationen V-1 bis V-32 wurde jeweils die Farbstärke im Vergleich zu Pigment V und der Druckfilterwert nach den unten angegebenen Vorschriften 1 und 2 ermittelt. Die Werte finden sich ebenfalls in Tab.24.

**Tab.24: Pigmentpräparationen mit Pigment V**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 849 | V-1 | nein | 70 | Pristerene® 4910 | 94 | 15,8 |
| 850 | V-2 | ja | 180 | Pristerene® 4910 | 117 | 3,0 |
| 851 | V-3 | ja | 250 | Pristerene® 4910 | 117 | 2,9 |
| 852 | V-4 | nein | 280 | Pristerene® 4910 | 96 | 3,0 |
| 853 | V-5 | nein | 70 | Caprylsäure | 96 | 15,6 |
| 854 | V-6 | nein | 210 | Caprylsäure | 95 | 16,1 |
| 855 | V-7 | nein | 70 | Nervonsäure | 95 | 16,2 |
| 856 | V-8 | nein | 250 | Nervonsäure | 93 | 16,5 |
| 857 | V-9 | nein | 70 | Myristinsäure | 95 | 15,9 |
| 858 | V-10 | ja | 120 | Myristinsäure | 115 | 3,4 |

(fortgesetzt)

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 859 | V-11 | ja | 180 | Myristinsäure | 115 | 3,4 |
| 860 | V-12 | nein | 280 | Myristinsäure | 96 | 3,4 |
| 861 | V-13 | nein | 70 | Palmitinsäure | 95 | 15,6 |
| 862 | V-14 | ja | 150 | Palmitinsäure | 116 | 3,1 |
| 863 | V-15 | ja | 210 | Palmitinsäure | 116 | 3,1 |
| 864 | V-16 | nein | 280 | Palmitinsäure | 95 | 3,1 |
| 865 | V-17 | nein | 70 | Stearinsäure | 96 | 15,9 |
| 866 | V-18 | ja | 150 | Stearinsäure | 116 | 3,0 |
| 867 | V-19 | ja | 250 | Stearinsäure | 116 | 3,0 |
| 868 | V-20 | nein | 280 | Stearinsäure | 95 | 3,0 |
| 869 | V-21 | nein | 70 | Behensäure | 96 | 15,6 |
| 870 | V-22 | ja | 120 | Behensäure | 113 | 3,2 |
| 871 | V-23 | ja | 210 | Behensäure | 113 | 3,2 |
| 872 | V-24 | nein | 280 | Behensäure | 94 | 3,2 |
| 873 | V-25 | nein | 70 | Ölsäure | 94 | 16,1 |
| 874 | V-26 | ja | 120 | Ölsäure | 111 | 3,3 |
| 875 | V-27 | ja | 210 | Ölsäure | 111 | 3,3 |
| 876 | V-28 | nein | 280 | Ölsäure | 95 | 3,4 |
| 877 | V-29 | nein | 70 | Undecylensäure | 96 | 16,2 |
| 878 | V-30 | ja | 150 | Undecylensäure | 110 | 3,4 |
| 879 | V-31 | ja | 250 | Undecylensäure | 110 | 3,3 |
| 880 | V-32 | nein | 280 | Undecylensäure | 96 | 3,3 |

**Beispiel 881: Herstellung der Pigmentpräparation W-1 (nicht erfindungsgemäß)**

Eine wässrige Suspension des Pigments W, wie sie nach Schritt b) des Beispiels 23 anfiel, wurde mit 70 g Pristerene® 4910 versetzt und für 60 Minuten gerührt. Anschließend wurde mit wässriger Kalilauge ein pH-Wert von 5 eingestellt. Danach wurde die Pigmentpräparation auf einer Saugnutsche isoliert, gewaschen, bei 80 °C im Vakuumtrockenschrank getrocknet und in einer üblichen Labormühle ca. 2 Minuten gemahlen. (= Pigmentpräparation W-1)

**Beispiele 882 bis 913: Herstellung der Pigmentpräparationen W-2 bis W-32 (nicht erfindungsgemäß und erfindungsgemäß)**

Analog zu Beispiel 881 wurden in den Beispielen **882 bis 913** erfindungsgemäße und nicht erfindungsgemäße Pigmentpräparationen W-2 bis W-32 hergestellt. Dabei wurde jeweils eine wässrige Suspension des Pigments W, wie sie nach Schritt b) des Beispiels 23 anfiel, mit unterschiedlichen aliphatischen Carbonsäuren B) oder deren Gemischen in unterschiedlichen Mengen, wie in Tab.25 angegeben, versetzt.

**Bestimmung der Farbstärke und des Druckfilterwerts**

Für die Pigmentpräparationen W-1 bis W-32 wurde jeweils die Farbstärke im Vergleich zu Pigment W und der Druckfilterwert nach den unten angegebenen Vorschriften 1 und 2 ermittelt. Die Werte finden sich ebenfalls in Tab.25

**Tab.25: Pigmentpräparationen mit Pigment W**

| Beispiel | Pigmentpräparation | Erfindungsgemäß | Gramm aliphatische Carbonsäure B) bzw. Gemisch pro Mol Pigment | Aliphatische Carbonsäure B) bzw. Gemisch | FarbStärke [%] | FPV [bar/g] |
|---|---|---|---|---|---|---|
| 881 | W-1 | nein | 70 | Pristerene® 4910 | 96 | 15,6 |
| 882 | W-2 | ja | 180 | Pristerene® 4910 | 119 | 2,9 |
| 883 | W-3 | ja | 250 | Pristerene® 4910 | 118 | 2,9 |
| 884 | W-4 | nein | 280 | Pristerene® 4910 | 96 | 3,0 |
| 885 | W-5 | nein | 70 | Caprylsäure | 95 | 16,2 |
| 886 | W-6 | nein | 210 | Caprylsäure | 94 | 16,3 |
| 887 | W-7 | nein | 70 | Nervonsäure | 94 | 15,9 |
| 888 | W-8 | nein | 250 | Nervonsäure | 92 | 15,8 |
| 890 | W-9 | nein | 70 | Myristinsäure | 93 | 15,8 |
| 891 | W-10 | ja | 120 | Myristinsäure | 115 | 3,2 |
| 892 | W-11 | ja | 180 | Myristinsäure | 114 | 3,2 |
| 893 | W-12 | nein | 280 | Myristinsäure | 96 | 3,3 |
| 894 | W-13 | nein | 70 | Palmitinsäure | 96 | 15,4 |
| 895 | W-14 | ja | 150 | Palmitinsäure | 118 | 3,0 |
| 896 | W-15 | ja | 210 | Palmitinsäure | 117 | 3,0 |
| 897 | W-16 | nein | 280 | Palmitinsäure | 95 | 3,1 |
| 898 | W-17 | nein | 70 | Stearinsäure | 95 | 15,6 |
| 899 | W-18 | ja | 150 | Stearinsäure | 118 | 3,1 |
| 900 | W-19 | ja | 250 | Stearinsäure | 118 | 3,1 |
| 901 | W-20 | nein | 280 | Stearinsäure | 96 | 3,1 |
| 902 | W-21 | nein | 70 | Behensäure | 95 | 15,9 |
| 903 | W-22 | ja | 120 | Behensäure | 115 | 3,3 |
| 904 | W-23 | ja | 210 | Behensäure | 114 | 3,4 |
| 905 | W-24 | nein | 280 | Behensäure | 95 | 3,4 |
| 906 | W-25 | nein | 70 | Ölsäure | 94 | 16,3 |
| 907 | W-26 | ja | 120 | Ölsäure | 113 | 3,4 |
| 908 | W-27 | ja | 210 | Ölsäure | 112 | 3,4 |
| 909 | W-28 | nein | 280 | Ölsäure | 94 | 3,4 |
| 910 | W-29 | nein | 70 | Undecylensäure | 94 | 15,8 |
| 911 | W-30 | ja | 150 | Undecylensäure | 112 | 3,3 |
| 912 | W-31 | ja | 250 | Undecylensäure | 112 | 3,4 |
| 913 | W-32 | nein | 280 | Undecylensäure | 96 | 3,4 |

**Tab.26 Edukte**

| $C_{10-22}$ -Carbonsäuregemisch | Typische Zusammensetzung in Gew.-% | | | |
|---|---|---|---|---|
| Handelsprodukt der Firma Unichema | $C_{14}$ | $C_{16}$ | $C_{18}$ | Schmelzbereich °C |
| Pristerene® 4910 | 2 | 30 | 64 | 57,5-60 |
| Pristerene® 4911 | 2 | 45 | 52 | 55-56 |
| Pristerene® 9429 | | | | 52-60 |
| Pristerene® 4922 | 0,7 | 30 | 66 | 51-55 |
| $C_{10-22}$ -Carbonsäure | CAS.No. | Kettenlänge $C_n$ = | Lieferant | |
| Caprylsäure (Octansäure, $C_8H_{16}O_2$) | 124-07-2 | 8 | Sigma-Aldrich | |
| Caprinsäure (n-Decansäure,$C_{10}H_{20}O_2$) | 334-48-5 | 10 | Sigma-Aldrich | |
| Laurinsäure (Dodecansäure, $C_{12}H_{24}O_2$) | 143-07-7 | 12 | Sigma-Aldrich | |
| Myristinsäure (Tetradecansäure, $C_{14}H_{28}O_2$), | 544-63-8 | 14 | Sigma-Aldrich | |
| Palmitinsäure (Hexadecansäure, $C_{16}H_{32}O_2$), | 57-10-3 | 16 | Sigma-Aldrich | |
| Stearinsäure (Octadecansäure, $C_{18}H_{36}O_2$) | 57-11-4 | 18 | Sigma-Aldrich | |
| Behensäure (n-Docosansäure, $C_{22}H_{44}O_2$) | 112-85-6 | 22 | Sigma-Aldrich | |
| Lignocerinsäure (Tetracosansäure, $C_{24}H_{48}O_2$) | 557-59-5 | 24 | Sigma-Aldrich | |
| Ölsäure ((9Z)-Octadec-9-ensäure, $C_{18}H_{34}O_2$) | 112-80-1 | 18 | Alfa | |
| Undecylensäure (Undec-10-ensäure, $C_{11}H_{20}O_2$) | 112-38-9 | 11 | Alfa | |
| Nervonsäure ((Z)-15-Tetracosansäure, $C_{24}H_{46}O_2$) | 506-37-6 | 24 | Sigma-Aldrich | |

Die nach den Beispielen 1 bis 22 hergestellten Pigmente und die nach den Beispielen 23 bis 913 hergestellten Pigmentpräparationen wurden jeweils einer Bestimmung der Farbstärke nach **DIN 55986** (siehe Vorschrift 1) und der Druckfilterwerts nach **DIN EN ISO 23900-5:2019-01** (siehe Vorschrift 2) unterzogen.

**Bestimmung der Farbstärke in PVC: Vorschrift 1**

Als Prüfmedium wurde ein Weich-PVC-Compound, durch Homogenisierung von 67,5 % Vestolit® E7004 (Vestolit GmbH), 29,0 % Hexamoll® Dinch (BASF), 2,25 % Baerostab UBZ 770 (Baerlocher GmbH) und 1,25 % Isocolor Pigmentpaste weiß (ISL-Chemie) mit einem Labordissolver hergestellt.

Auf einem Laborwalzwerk wurden 100 g des PVC-Compounds bei 150°C auf zwei mit 20 $min^{-1}$ und 18 $min^{-1}$ rotierenden Walzen von 150 mm Durchmesser gegeben. Zusammen mit 0,10 g Pigment wurde durch Rotation ein Walzfell erzeugt, das anschließend achtmal durch einen Walzenspalt von 0,10 mm geführt wurde. Danach wurde das gleichmäßig gefärbte Walzfell nach Durchlaufen eines 0,8 mm Walzenspalt abgenommen und glatt auf eine Metallfläche abgelegt. Das abgekühlte Walzfell wurde dann auf zwei unbeheizten mit 26 $min^{-1}$ und 24 $min^{-1}$ rotierenden Walzen von 110 mm Durchmesser achtmal durch einen Walzenspalt von 0,2mm gegeben. Zur Glättung der Oberfläche wurde das resultierende Walzfell nochmals auf die Walzen von 150°C gegeben, bei 0,8 mm abgenommen und auf glatter Fläche zum Abkühlen ausgelegt. Muster dieses Walzfells dienten zur Bestimmung der relativen Farbstärke.

Die Berechnung der relativen Farbstärke erfolgte nach Remissionsmessung der Muster vor einem Weißhintergrund mittels Spektralphotometer mit Messgeometrie d/8 unter Normlichtart D65 und 10° Beobachter nach **DIN 55986** unter Verwendung der Summe der K/S-Werte über das sichtbare Spektrum im Bereich von 400nm-700nm.

**Bestimmung des Druckfilterwerts (filter pressure value) (FPV) mit dem Druckfiltertest nach DIN EN ISO 23900-5:2019-01** (Bestimmung des Druckanstieges): **Vorschrift 2**

1950 g Polyamid 6 (Durethan® B30S der LANXESS Deutschland GmbH, Köln) mit einem Zusatz von 1 % Titandioxid wurden jeweils mit 50 g des zu prüfenden Pigments für eine Stunde auf einem Taumelmischer intensiv gemischt. Diese Mischung wurde auf einem Doppelwellenextruder vom Typ Leistritz ZSE 18HP bei 225°C und einer Drehzahl von 700rpm extrudiert. 200 g des auf diese Weise erzeugten granulierten Materials wurden über ein 25μm-Filter bei einer Temperatur von 238°C filtriert und der dabei auftretende Druckanstieg gemessen. Die Druckdifferenz zwischen dem Anfangsdruck und dem Maximaldruck wurde zum Berechnen des Druckfilterwertes FPV verwendet. Je geringer dieser Druckanstieg, gemessen in bar/g, war, desto besser waren die Filtrationseigenschaften der zu untersuchenden Pigmentpräparation.

Fazit : Aus den Messergebnissen, wie sie in den Tab.1 bis 25 dargelegt sind, ist ersichtlich, dass nur die erfindungsgemäßen Pigmentpräparationen sowohl eine verbesserte Filtrationseigenschaft, als auch eine verbesserte Farbstärke gegenüber den nicht erfindungsgemäßen Pigmentpräparationen aufweisen.

## Patentansprüche

**1.** Pigmentpräparationen aus

i) einem Metallazopigment A) enthaltend

a) wenigstens zwei Metallazoverbindungen der Formel (I) die sich zumindest im Metallion Me unterscheiden, oder deren tautomere Formen,

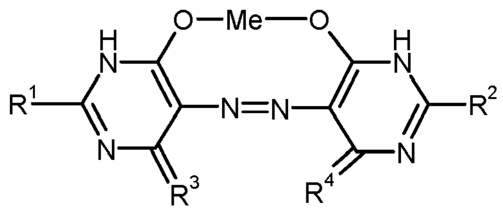

(I)

worin

$R^1$ und $R^2$ unabhängig voneinander für OH, $NH_2$ oder $NHR^5$ stehen,
$R^3$ und $R^4$ unabhängig voneinander für O oder $NR^5$ stehen,
$R^5$ für Wasserstoff oder Alkyl, vorzugsweise für $C_1$-$C_4$-Alkyl, steht, und Me in der ersten Metallazoverbindung für Metallionen $Me^1$ und in der zweiten Metallazoverbindung für ein Metallion $Me^2$ steht, wobei
$Me^1$ für $Zn^{2+}$ und $Ni^{2+}$ steht und das Molverhältnis von Zn- zu Ni- Metallionen 97 : 3 bis 3 : 97 beträgt, und $Me^2$ für $Al^{3+}_{2/3}$, $Fe^{2+}$, $Fe^{3+}_{2/3}$, $Co^{2+}$, $Co^{3+}_{2/3}$, $La^{3+}_{2/3}$, $Ce^{3+}_{2/3}$, $Pr^{3+}_{2/3}$-, $Nd^{2+}$, $Nd^{3+}_{2/3}$, $Sm^{2+}$, $Sm^{3+}_{2/3}$, $Eu^{2+}$, $Eu^{3+}_{2/3}$, $Gd^{3+}_{2/3}$, $Tb^{3+}_{2/3}$, $Dy^{3+}_{2/3}$, $Ho^{3+}_{2/3}$, $Yb^{2+}$, $Yb^{3+}_{2/3}$, $Er^{3+}_{2/3}$, $Tm^{3+}_{2/3}$, $Mg^{2+}$, $Ca^{2+}$, $Sr^{2+}$, $Mn^{2+}$, $Y^{3+}_{2/3}$, $Sc^{3+}_{2/3}$, $Ti^{2+}$, $Ti^{3+}_{2/3}$, $Nb^{3+}_{2/3}$, $Mo^{2+}$, $Mo^{3+}_{2/3}$, $V^{2+}$, $V^{3+}_{2/3}$, $Zr^{2+}$, $Zr^{3+}_{2/3}$, $Cd^{2+}$, $Cr^{3+}_{2/3}$, $Pb^{2+}$ oder $Ba^{2+}$-steht,
mit der Maßgabe, dass die Menge an Metallionen $Me^1$ insgesamt 97 bis 100 Mol-% beträgt und die Menge an Metallionen ausgewählt aus der Reihe $Me^2$ insgesamt 0 bis 3 Mol-% beträgt, jeweils bezogen auf ein Mol aller Verbindungen der Formel (I), und

b) wenigstens eine Verbindung der Formel (II)

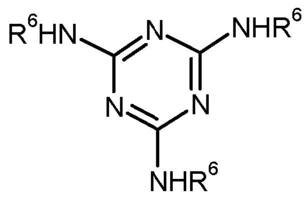

(II)

worin

$R^6$ jeweils unabhängig voneinander für Wasserstoff oder Alkyl, vorzugsweise $C_1$-$C_4$-Alkyl, steht, das gegebenenfalls ein- oder mehrfach durch OH substituiert ist,
oder ein Reaktionsprodukt aus (I) mit (II),
und

ii) 100 bis 250 g wenigstens einer aliphatischen $C_{10-22}$-Monocarbonsäure B) auf 1 Mol aller im Metallazopigment A) enthaltenen Metallazoverbindungen (I).

**2.** Pigmentpräparationen gemäß Anspruch 1, **dadurch gekennzeichnet, dass** in den Metallazopigmenten A) das Verhältnis von Metallazoverbindung (I) zur Verbindung der Formel (II) 1 Mol: 0,05 bis 4 Mol beträgt, bevorzugt 1 Mol : 0,5 bis 2,5 Mol, besonders bevorzugt 1 Mol: 1,0 bis 2,0 Mol.

**3.** Pigmentpräparationen gemäß Anspruch 1 oder 2, **dadurch gekennzeichnet, dass** in Formel (I) $R^1$ und $R^2$ für OH stehen, $R^3$ und $R^4$ für O stehen, Me in der ersten Metallazoverbindung $Me^1$ bedeutet und für $Zn^{2+}$ und $Ni^{2+}$ steht, wobei das Molverhältnis von Zn- zu Ni- Metallionen 90 : 10 bis 30 : 70 beträgt, und Me in der zweiten Metallazoverbindung $Me^2$ bedeutet und $Me^2$ für $Al^{3+}{}_{2/3}$, $Fe^{2+}$, $Fe^{3+}{}_{2/3}$, $Co^{2+}$, $Co^{3+}{}_{2/3}$, $Ce^{3+}{}_{2/3}$, $Mg^{2+}$, $Ca^{2+}$, $Sr^{2+}$, $La^{3+}{}_{2/3}$, $Mg^{2+}$, $Mn^{2+}$, $Nd^{2+}$, $Nd^{3+}{}_{2/3}$, $Ti^{2+}$, $Ti^{3+}{}_{2/3}$, $Nb^{3+}{}_{2/3}$, $Mo^{2+}$, $Mo^{3+}{}_{2/3}$, $V^{2+}$, $V^{3+}{}_{2/3}$, $Zr^{2+}$, $Zr^{3+}{}_{2/3}$, $Cd^{2+}$, $Cr^{3+}{}_{2/3}$, $Pb^{2+}$, $Ca^{2+}$, oder $Ba^{2+}$-steht, und b) für Melamin oder für ein Reaktionsprodukt aus Formel (I) mit Melamin steht.

**4.** Pigmentpräparationen gemäß einem oder mehreren der Ansprüche 1 bis 3, **dadurch gekennzeichnet, dass** es sich bei den aliphatischen $C_{10-22}$-Monoarbonsäuren B) um gesättigte oder ein- bis dreifach ungesättigte Carbonsäuren handelt, bevorzugt um wenigstens eine $C_{10-22}$-Monoarbonsäure aus der Reihe Caprinsäure, Undecylensäure, Laurinsäure, Myristinsäure, Palmitinsäure, Stearinsäure, Ölsäure, Behensäure.

**5.** Pigmentpräparationen gemäß Anspruch 4, **dadurch gekennzeichnet, dass** die aliphatischen $C_{10-22}$-Monocarbonsäuren B) in reiner Form oder als Gemische vorliegen, vorzugsweise Gemische enthaltend Myristinsäure, Palmitinsäure und Stearinsäure.

**6.** Verwendung wenigstens einer aliphatischen $C_{10-22}$-Monocarbonsäure B) zur Verbesserung gleichzeitig des mit dem Druckfiltertest nach DIN EN ISO 23900-5:2019-01 zu bestimmenden Druckfilterwerts FPV und der nach DIN 55986 zu bestimmenden Farbstärke von Pigmentpräparationen enthaltend ein Metallazopigment A) aus

a) wenigstens zwei Metallazoverbindungen der Formel (I) die sich zumindest im Metallion Me unterscheiden, oder deren tautomere Formen,

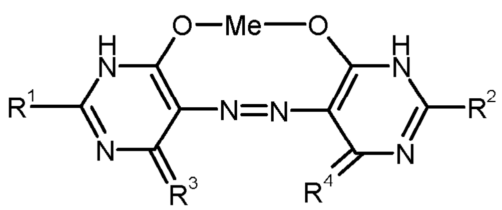

(I)

worin

$R^1$ und $R^2$ unabhängig voneinander für OH, $NH_2$ oder $NHR^5$ stehen,
$R^3$ und $R^4$ unabhängig voneinander für O oder $NR^5$ stehen,
$R^5$ für Wasserstoff oder Alkyl, vorzugsweise für $C_1$-$C_4$-Alkyl, steht, und
Me in der ersten Metallazoverbindung für Metallionen $Me^1$ und in der zweiten Metallazoverbindung für ein Metallion $Me^2$ steht,
wobei
$Me^1$ für $Zn^{2+}$ und $Ni^{2+}$ steht und das Molverhältnis von Zn- zu Ni- Metallionen 97 : 3 bis 3 : 97 beträgt, und $Me^2$ für $Al^{3+}{}_{2/3}$, $Fe^{2+}$, $Fe^{3+}{}_{2/3}$, $Co^{2+}$, $Co^{3+}{}_{2/3}$, $La^{3+}{}_{2/3}$, $Ce^{3+}{}_{2/3}$, $Pr^{3+}{}_{2/3}$-, $Nd^{2+}$, $Nd^{3+}{}_{2/3}$, $Sm^{2+}$, $Sm^{3+}{}_{2/3}$, $Eu^{2+}$, $Eu^{3+}{}_{2/3}$, $Gd^{3+}{}_{2/3}$, $Tb^{3+}{}_{2/3}$, $Dy^{3+}{}_{2/3}$, $Ho^{3+}{}_{2/3}$, $Yb^{2+}$, $Yb^{3+}{}_{2/3}$, $Er^{3+}{}_{2/3}$, $Tm^{3+}{}_{2/3}$, $Mg^{2+}$, $Ca^{2+}$, $Sr^{2+}$, $Mn^{2+}$, $Y^{3+}{}_{2/3}$, $Sc^{3+}{}_{2/3}$, $Ti^{2+}$, $Ti^{3+}{}_{2/3}$, $Nb^{3+}{}_{2/3}$, $Mo^{2+}$, $Mo^{3+}{}_{2/3}$, $V^{2+}$, $V^{3+}{}_{2/3}$, $Zr^{2+}$, $Zr^{3+}{}_{2/3}$, $Cd^{2+}$, $Cr^{3+}{}_{2/3}$, $Pb^{2+}$ oder $Ba^{2+}$-steht, mit der Maßgabe, dass die Menge an Metallionen $Me^1$ insgesamt 97 bis 100 Mol-% beträgt und die Menge an Metallionen ausgewählt aus der Reihe $Me^2$ insgesamt 0 bis 3 Mol-% beträgt, jeweils bezogen auf ein Mol aller Verbindungen der Formel (I), und

b) wenigstens einer Verbindung der Formel (II)

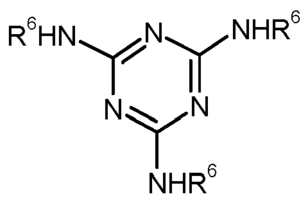

(II)

worin

$R^6$ jeweils unabhängig voneinander für Wasserstoff oder Alkyl, vorzugsweise $C_1$-$C_4$-Alkyl, steht, das gegebenenfalls ein- oder mehrfach durch OH substituiert ist,
oder alternativ ein Reaktionsprodukt aus (I) mit (II),

mit der Maßgabe, dass auf 1 Mol aller im Metallazopigment A) enthaltenen Metallazoverbindungen (I) 100 bis 250 g der aliphatischen $C_{10-22}$-Monocarbonsäure B) eingesetzt werden.

**7.** Verwendung gemäß Anspruch 6, **dadurch gekennzeichnet, dass** in den Metallazopigmenten A) das Verhältnis von Metallazoverbindung (I) zur Verbindung der Formel (II) 1 Mol: 0,05 bis 4 Mol beträgt, bevorzugt 1 Mol : 0,5 bis 2,5 Mol, besonders bevorzugt 1 Mol: 1,0 bis 2,0 Mol.

**8.** Verwendung gemäß Anspruch 6 oder 7, **dadurch gekennzeichnet, dass** in Formel (I) $R^1$ und $R^2$ für OH stehen, $R^3$ und $R^4$ für O stehen, Me in der ersten Metallazoverbindung $Me^1$ bedeutet und für $Zn^{2+}$ und $Ni^{2+}$ steht, wobei das Molverhältnis von Zn- zu Ni-Metallionen 90 : 10 bis 30 : 70 beträgt, und Me in der zweiten Metallazoverbindung $Me^2$ bedeutet und $Me^2$ für $Al^{3+}{}_{2/3}$, $Fe^{2+}$, $Fe^{3+}{}_{2/3}$, $Co^{2+}$, $Co^{3+}{}_{2/3}$, $Ce^{3+}{}_{2/3}$, $Mg^{2+}$, $Ca^{2+}$, $Sr^{2+}$, $La^{3+}{}_{2/3}$, $Mg^{2+}$, $Mn^{2+}$, $Nd^{2+}$, $Nd^{3+}{}_{2/3}$, $Ti^{2+}$, $Ti^{3+}{}_{2/3}$, $Nb^{3+}{}_{2/3}$, $Mo^{2+}$, $Mo^{3+}{}_{2/3}$, $V^{2+}$, $V^{3+}{}_{2/3}$, $Zr^{2+}$, $Zr^{3+}{}_{2/3}$, $Cd^{2+}$, $Cr^{3+}{}_{2/3}$, $Pb^{2+}$, $Ca^{2+}$, oder $Ba^{2+}$-steht, und b) für Melamin oder für ein Reaktionsprodukt aus Formel (I) mit Melamin steht.

**9.** Verwendung gemäß einem oder mehreren der Ansprüche 6 bis 8, **dadurch gekennzeichnet, dass** es sich bei den aliphatischen $C_{10-22}$-Monoarbonsäuren B) um gesättigte oder ein- bis dreifach ungesättigte Carbonsäuren handelt, bevorzugt um wenigstens eine $C_{10-22}$-Monoarbonsäure aus der Reihe Caprinsäure, Undecylensäure, Laurinsäure, Myristinsäure, Palmitinsäure, Stearinsäure, Ölsäure und Behensäure.

**10.** Verwendung gemäß Anspruch 9, **dadurch gekennzeichnet, dass** die aliphatischen $C_{10-22}$-Monocarbonsäuren B) in reiner Form oder als Gemische vorliegen, vorzugsweise Gemische enthaltend Myristinsäure, Palmitinsäure und Stearinsäure.

**11.** Verfahren zur gleichzeitigen Verbesserung des mit dem Druckfiltertest nach DIN EN ISO 23900-5:2019-01 zu bestimmenden Druckfilterwerts FPV und der nach DIN 55986 zu bestimmenden Farbstärke von Pigmentpräparationen enthaltend ein Metallazopigment A) aus

a) wenigstens zwei Metallazoverbindungen der Formel (I) die sich zumindest im Metallion Me unterscheiden, oder deren tautomere Formen,

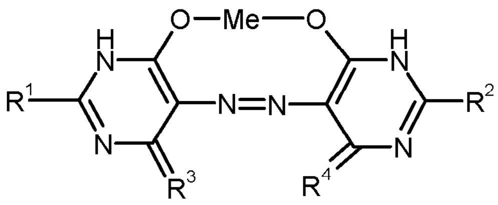

(I)

worin

$R^1$ und $R^2$ unabhängig voneinander für OH, $NH_2$ oder $NHR^5$ stehen,
$R^3$ und $R^4$ unabhängig voneinander für O oder $NR^5$ stehen,
$R^5$ für Wasserstoff oder Alkyl, vorzugsweise für $C_1$-$C_4$-Alkyl, steht, und
Me in der ersten Metallazoverbindung $Me^1$ bedeutet und für $Zn^{2+}$ und $Ni^{2+}$ steht, wobei das Molverhältnis von Zn- zu Ni- Metallionen 97 : 3 bis 3 : 97 beträgt,
und
Me in der zweiten Metallazoverbindung $Me^2$ bedeutet und für $Al^{3+}_{2/3}$, $Fe^{2+}$, $Fe^{3+}_{2/3}$, $Co^{2+}$, $Co^{3+}_{2/3}$, $La^{3+}_{2/3}$, $Ce^{3+}_{2/3}$, $Pr^{3+}_{2/3}$-, $Nd^{2+}$, $Nd^{3+}_{2/3}$, $Sm^{2+}$, $Sm^{3+}_{2/3}$, $Eu^{2+}$, $Eu^{3+}_{2/3}$, $Gd^{3+}_{2/3}$, $Tb^{3+}_{2/3}$, $Dy^{3+}_{2/3}$, $Ho^{3+}_{2/3}$, $Yb^{2+}$, $Yb^{3+}_{2/3}$, $Er^{3+}_{2/3}$, $Tm^{3+}_{2/3}$, $Mg^{2+}$, $Ca^{2+}$, $Sr^{2+}$, $Mn^{2+}$ oder $Y^{3+}_{2/3}$, $Sc^{3+}_{2/3}$, $Ti^{2+}$, $Ti^{3+}_{2/3}$, $Nb^{3+}_{2/3}$, $Mo^{2+}$, $Mo^{3+}_{2/3}$, $V^{2+}$, $V^{3+}_{2/3}$, $Zr^{2+}$, $Zr^{3+}_{2/3}$, $Cd^{2+}$, $Cr^{3+}_{2/3}$, $Pb^{2+}$ oder $Ba^{2+}$-steht,
mit der Maßgabe, dass die Menge an Metallionen $Me^1$ insgesamt 97 bis 100 Mol-% beträgt und die Menge an Metallionen ausgewählt aus der Reihe $Me^2$ insgesamt 0 bis 3 Mol-% beträgt, jeweils bezogen auf ein Mol aller Verbindungen der Formel (I), und

b) wenigstens einer Verbindung der Formel (II)

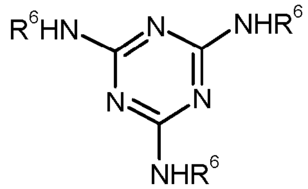

(II)

worin

$R^6$ jeweils unabhängig voneinander für Wasserstoff oder Alkyl, vorzugsweise $C_1$-$C_4$-Alkyl das gegebenenfalls ein- oder mehrfach durch OH substituiert ist, steht,
oder alternativ ein Reaktionsprodukt aus (I) mit (II),

indem auf 1 Mol aller im Metallazopigment A) enthaltenen Metallazoverbindungen (I) 100 bis 250 g wenigstens einer aliphatischen $C_{10-22}$-Monocarbonsäure B) eingesetzt werden.

**12.** Verfahren gemäß Anspruch 11, **dadurch gekennzeichnet, dass** in den Metallazopigmenten A) das Verhältnis von Metallazoverbindung (I) zur Verbindung der Formel (II) 1 Mol: 0,05 bis 4 Mol beträgt, bevorzugt 1 Mol : 0,5 bis 2,5 Mol, besonders bevorzugt 1 Mol : 1,0 bis 2,0 Mol.

**13.** Verfahren gemäß Anspruch 11 oder 12, **dadurch gekennzeichnet, dass** in Formel (I) $R^1$ und $R^2$ für OH stehen, $R^3$ und $R^4$ für O stehen, Me in der ersten Metallazoverbindung $Me^1$ bedeutet und für $Zn^{2+}$ und $Ni^{2+}$ steht, wobei das Molverhältnis von Zn- zu Ni- Metallionen 90 : 10 bis 30 : 70 beträgt, und Me in der zweiten Metallazoverbindung $Me^2$

bedeutet und $Me^2$ für $Al^{3+}_{2/3}$, $Fe^{2+}$, $Fe^{3+}_{2/3}$, $Co^{2+}$, $Co^{3+}_{2/3}$, $Ce^{3+}_{2/3}$, $Mg^{2+}$, $Ca^{2+}$, $Sr^{2+}$, $La^{3+}_{2/3}$, $Mg^{2+}$, $Mn^{2+}$, $Nd^{2+}$, $Nd^{3+}_{2/3}$, $Ti^{2+}$, $Ti^{3+}_{2/3}$, $Nb^{3+}_{2/3}$, $Mo^{2+}$, $Mo^{3+}_{2/3}$, $V^{2+}$, $V^{3+}_{2/3}$, $Zr^{2+}$, $Zr^{3+}_{2/3}$, $Cd^{2+}$, $Cr^{3+}_{2/3}$, $Pb^{2+}$, $Ca^{2+}$, oder $Ba^{2+}$-steht, und b) für Melamin oder für ein Reaktionsprodukt aus Formel (I) mit Melamin steht.

**14.** Verfahren gemäß einem oder mehreren der Ansprüche 11 bis 13, **dadurch gekennzeichnet, dass** es sich bei den aliphatischen $C_{10-22}$-Monoarbonsäuren B) um gesättigte oder ein- bis dreifach ungesättigte Carbonsäuren handelt, bevorzugt um wenigstens eine $C_{10-22}$-Monoarbonsäure aus der Reihe Caprinsäure, Undecylensäure, Laurinsäure, Myristinsäure, Palmitinsäure, Stearinsäure, Ölsäure und Behensäure.

**15.** Verfahren gemäß Anspruch 14, **dadurch gekennzeichnet, dass** die aliphatischen $C_{10-22}$-Monocarbonsäuren B) in reiner Form oder als Gemische vorliegen, vorzugsweise Gemische enthaltend Myristinsäure, Palmitinsäure und Stearinsäure.

Europäisches Patentamt
European Patent Office
Office européen des brevets

# EUROPÄISCHER RECHERCHENBERICHT

Nummer der Anmeldung
EP 24 19 6093

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 3 981 840 A1 (LANXESS DEUTSCHLAND GMBH [DE]) 13. April 2022 (2022-04-13)<br>* Ansprüche 1-15; Tabelle 22 *<br>----- | 1-15 | INV.<br>C09B67/04<br>C09B67/48<br>C09B67/22<br>C09B67/40<br>C09B67/42<br>C09B67/54<br>C09D11/322<br>C09B45/22 |
| | | | RECHERCHIERTE SACHGEBIETE (IPC) |
| | | | C09B<br>C09D |

Der vorliegende Recherchenbericht wurde für alle Patentansprüche erstellt

1

| Recherchenort | Abschlußdatum der Recherche | Prüfer |
|---|---|---|
| München | 20. Januar 2025 | Kleidernigg, Oliver |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 19 6093

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-01-2025

| Im Recherchenbericht angeführtes Patentdokument | Datum der Veröffentlichung | Mitglied(er) der Patentfamilie | Datum der Veröffentlichung |
|---|---|---|---|
| EP 3981840 A1 | 13-04-2022 | CA 3133322 A1 | 06-04-2022 |
| | | CN 114381140 A | 22-04-2022 |
| | | EP 3981840 A1 | 13-04-2022 |
| | | JP 7280326 B2 | 23-05-2023 |
| | | JP 2022061494 A | 18-04-2022 |
| | | KR 20220045918 A | 13-04-2022 |
| | | TW 202229464 A | 01-08-2022 |
| | | US 2022106487 A1 | 07-04-2022 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1591489 A
- EP 3072932 A
- EP 3222680 A
- EP 3981840 A
- EP 1612246 A


### In der Beschreibung aufgeführte Nicht-Patentliteratur


- **W. HERBST** ; **K. HUNGER**. Industrial Organic Pigments. 2004, 390-397
- Sonderheft 312 D, Farbmessung. *Bayer Farben Revue*, 1986
- **W. HERBST** ; **K. HUNGER**. Industrial Organic Pigments (Production, Properties, Applications). Wiley-VCH-Verlag, 2004, 202-203
- *CHEMICAL ABSTRACTS*, 108-78-1
- *CHEMICAL ABSTRACTS*, 334-48-5
- *CHEMICAL ABSTRACTS*, 112-38-9
- *CHEMICAL ABSTRACTS*, 143-07-7
- *CHEMICAL ABSTRACTS*, 544-63-8
- *CHEMICAL ABSTRACTS*, 57-10-3
- *CHEMICAL ABSTRACTS*, 57-11-4
- *CHEMICAL ABSTRACTS*, 112-80-1
- *CHEMICAL ABSTRACTS*, 112-85-6
- *CHEMICAL ABSTRACTS*, 463-40-1